# EUROPEAN PATENT SPECIFICATION

(11) **EP 3 804 405 B1**
(45) Date of publication and mention of the grant of the patent: **27.09.2023**
(21) Application number: 19728393.0
(22) Date of filing: 30.05.2019
(51) Int. Cl.: H04W 36/38, H04W 88/16, H04W 36/00

(54) **HANDOVER METHOD AND SYSTEM FOR 5G NETWORKS**
HANDOVER-VERFAHREN UND -SYSTEM FÜR 5G-NETZWERKE
PROCÉDÉ ET SYSTÈME DE TRANSFERT POUR RÉSEAUX 5G

(30) Priority: 01.06.2018 EP 18382383
(43) Date of publication of application: 14.04.2021
(73) Proprietor: Universitat Politècnica de Catalunya, 08034 Barcelona (ES)
(72) Inventor: JAIN, Akshay, 08034 Barcelona (ES); LÓPEZ AGUILERA, María Elena, 08034 Barcelona (ES); SEYFETTIN DEMIRKOL, Ilker, 08034 Barcelona (ES)
(74) Representative: Segui Quetglas, Margalida
(86) International application number: PCT/EP2019/064152
(87) International publication number: WO 2019/229219

(56) References cited:
- EP-A1- 2 928 115
- WO-A1-2017/146793
- CN-A- 105 517 073
- US-A1- 2017 230 877
- US-A1- 2018 098 251
- "3GPP TS 23.401; Technical Specification Group Services and System Aspects; General Packet Radio Service (GPRS) enhancements for Evolved Universal Terrestrial Radio Access Network (E-UTRAN) access (Release 15)", 3GPP STANDARD; TECHNICAL SPECIFICATION; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.3.0, 27 March 2018 (2018-03-27), pages 1-405, XP051450523,
- COSTA-REQUENA JOSE: "SDN integration in LTE mobile backhaul networks", THE INTERNATIONAL CONFERENCE ON INFORMATION NETWORKING 2014 (ICOIN2014), IEEE, 10 February 2014 (2014-02-10), pages 264-269, XP032586981, DOI: 10.1109/ICOIN.2014.6799479
- PRADOS-GARZON JONATHAN ET AL: "Handover implementation in a 5G SDN-based mobile network architecture", 2016 IEEE 27TH ANNUAL INTERNATIONAL SYMPOSIUM ON PERSONAL, INDOOR, AND MOBILE RADIO COMMUNICATIONS (PIMRC), IEEE, 4 September 2016 (2016-09-04), pages 1-6, XP033035568, DOI: 10.1109/PIMRC.2016.7794936
- JAIN AKSHAY ET AL: "Enhanced Handover Signaling through Integrated MME-SDN Controller Solution", 2018 IEEE 87TH VEHICULAR TECHNOLOGY CONFERENCE (VTC SPRING), IEEE, 3 June 2018 (2018-06-03), pages 1-7, XP033377546, DOI: 10.1109/VTCSPRING.2018.8417719

## Description

### TECHNICAL FIELD

The future wireless networks are expected to be extremely dense and heterogeneous, with the users experiencing multi-connectivity through the multiple available radio access technologies (RATs). These prevalent characteristics, along with the strict QoS requirements, renders the handover (HO) process optimization as a critical objective for future networks. Alongside the evolving network characteristics and methodologies, an evolving network architecture needs to be considered as well. Such evolution should not only facilitate HO process enhancement, i.e., reduction in HO delay and signaling, but it should also allow for a smooth transition from current to future wireless networks. Hence, the present invention provides for an evolutionary system and a method for operating it. Among others, the proposed methods and systems provide a migratory path for the existing 3GPP cellular architectures towards the 5G networks. The inventive solutions provide a manageable CAPEX for the network operators through its transitional nature. Subsequently, utilizing the aforementioned proposed system/architecture, the present invention proposes a specific solution for the current 3GPP defined HO processes.

### PRIOR ART

The future wireless networks are expected to be extremely dense and heterogeneous, wherein the users can experience multi-connectivity. Whilst this envisioned densification and heterogeneity will lend significant benefits to the users (e.g., in terms of improved QoS) and the network (in terms of better area spectral efficiency, etc.) [1,2], the efficiency of the handover (HO) process will become extremely critical. The reason being, increased heterogeneity will result in a rise in the inter-RAT handovers for the users. Additionally, the densification will most likely lead to frequent handovers (FHOs).

Further, it is of interest to the operators to also reduce the CAPEX and OPEX, and hence, current networks will be an integral part of the first 5G networks which are expected to have a fully softwarized core network. And, with the introduction of the concept of Cloud-RAN, the access networks are also expected to be extensively softwarized. However, it should be noted that a complete migration to an architecture that is completely softwarized at the core and access is both time consuming and requires high CAPEX. Hence, it is imperative that methods permitting gradual evolution towards the envisioned 5G networks are provided.

Consequently, the current handover strategy defined by 3GPP will require further scrutiny in terms of its latency and signaling incurred. Architectural considerations concerning the evolution of current networks to the future networks will be equally critical whilst evolving any future architectural and mobility management (MM) solutions. This is so because, given the emphasis on Software Defined Networking (SDN) and Network Function Virtualization (NFV) for 5G [3] it will be important to take these enablers into account.

Research efforts such as [4] present a new SDN based paradigm for MM known as Mobility Management as a Service (MMaaS), wherein SDN based core network can utilize the available network and user context and implement on-demand MM solutions. Such an on-demand MM solution, which utilizes information such as mobility profile, flow type, etc., will enhance the scalability and flexibility of the network in handling the complex 5G MM scenarios.

Next, in reference [5] a Serving Gateway (S-GW) and Packet Gateway (P-GW) relocation method has been presented by utilizing a central SDN controller (SDN-C) and an MME with an SDN agent. The MME consists of an SDN agent to communicate with the SDN-C, and provides it with the information regarding UE's current S-GW and eNB. The MME finds the S-GW nearest to the UE as well as a P-GW nearest to the current UE S-GW during mobility scenarios. Further, SDN-C is responsible for routing data packets from the old P-GW to the new P-GW/S-GW in the event of a P-GW/S-GW relocation. However, this work does not consider an inter-RAT handover scenario. Further, this work requires a complete overhaul of the control and data plane.

Further in [6] an SDN based mobility management process has been defined by utilizing the V-LAN functionality. The SDN-C controls the path switching operations during the handover scenario, while the MME is responsible for updating the user plane, i.e., sending the path switch request message to the S-GW. However, in this study an inter-RAT handover scheme is not considered and additionally, it does not provide an evolutionary mechanism such as our work. Further, there is no emphasis on handover preparation phase and the core network signaling involved in this work.

In reference [7], a modified MME know as e-MME has been proposed. An integration of the SDN controller and the MME has also been proposed. The nature of integration may be software or through hardware, according to the claims. However, the e-MME is intended to be completely virtualized and hence, it is intended to be implemented on the cloud. But such an integrated form of MME can also be implemented on a specific hardware. Next, the e-MME is connected to other entities via Ethernet that is based on 802.1ad structure. While the e-MME is intended to communicate with SDN enabled network entities, it is also capable of communicating with legacy core network entities. And so, mobility management in GTP based networks can also be performed, if needed. However, in this work mobility management through MPLS, VLAN or GRE based mechanisms has been discussed. It must be noted that, as shown below, according to the present invention, the control plane between the SeMMu and other core network entities is transformed for reducing the number of messages needed to execute the handover preparation and rejection phases. This in essence reduces the overall latency incurred during the handover process. To reduce the number of messages, the present invention utilizes an intelligent mapping of information elements (lEs) from legacy to the proposed messaging scheme.

In reference [8] a strategy to reduce the core network signaling has been proposed wherein a small cell scenario has been considered. Next, a small cell controller is defined which looks after the mobility of users moving within the cluster of cells it is assigned to. The controller is on the RAN side and hence, it reduces the signaling with the core network. Further, the scenario considered only analyzes X2 based Intra-RAT Handovers. However, in our work we have proved that X2 based handovers are optimized for handover preparation and rejection steps. Further, we consider Inter-RAT HOs as well and do not modify the network architecture significantly, such as that done in [8].

In addition, in reference [9] handover preparation and completion times were studied for X2 based handovers in a completely SDN network environment. Again, the present invention provides a transitional mechanism wherein a GTP-C based mechanism for the handover preparation phase is still considered, and also scenarios wherein Inter-RAT handovers occur. Further, according to the present invention, the user plane is not modified so as to allow for an evolutionary architecture that reduces the CAPEX for the operators. However, in [9] the GTP-U (GTP based user plane) is replaced with an MPLS based user plane. Additionally, the considered system architecture, as already stated, is completely SDN based in [9]. This will lead to higher CAPEX, whereas the architecture proposed in the present invention does not do so.

Further, reference [10] introduces the scenario wherein, in a 5G network the UAVs will behave like access points. In such scenarios the SDN controller will either be centralized or distributed in nature. The distributed controller setup avoids issues related to centralization, while also provisioning handovers from UAVs to APs as well as from UAVs to UAVs which are handled by the controller at individual macro base stations. However, in the centralized approach the controller is situated at the MME, and hence, it is a common controller for the entire network with other CN elements being SDN switches. Note that, according to the present invention the proposed strategy transforms the central mobility management entity to SeMMu such that the enhanced handover mechanisms are executed.

Further, in references such as [11] and [12] an SDN based mobility management approach has been proposed for 5G networks wherein either the controller or the user (via SDN implementation at the UE) are responsible for initiating a handover. The SDN based mechanisms ensure high reliability of handover and session continuity. However, compared to the present invention, the transformation involved is significant and hence, can also result in high CAPEX. Additionally, they fail to address the concern of core network signaling during the handover process for the various scenarios specified by 3GPP.

Next, in reference [13] a deep programmability based 5G core has been proposed for network slice enhancement. Concretely, the SDN controller capability has been utilized to have the network functions such as the SMF and AMF communicate with the data plane network functions such as UPF. The decoupling of SMF and UPF enables the fact that SMF can reside on the controller side, whilst UPF may be instantiated individually on the DP switches. In the present invention this fact is utilized, and it is proposed that the SeMMu in the 5G core will have the SDN controller communicating with the SMF. Moreover, the SeMMu, as part of the object of the invention, is responsible for executing advanced handover signalling mechanisms.

In addition, research efforts such as [14] propose a modified AMF where in the control plane functionality from the geNB is aggregated at the AMF. This ensures that the CP decisions are executed altogether at a single location, and hence, during a handover there is reduced signaling between the geNB and the core network. This as a consequence helps reduce the latency and signaling cost. However, as compared to the present invention, this work tackles only the intra-NGRAN handover. Further, it does not specify solutions for enhancing the handover preparation and rejection phase signaling specifically, which as discussed will be critical. Additionally, if the RRC and RRM CP operations are transferred to the core then the challenge will be in adapting to the high dynamicity of a 5G network scenario. On the other hand, according to the present invention the RRC and RRM functionality is not modified and instead it transforms the CN signaling to reduce the HO latency and signaling cost.

Note that, major telecommunication entities such as Telefonica, Huawei, KDDI labs, Samsung, SK Telecom, etc., have conducted multiple Proof-of-Concept (PoC) experiments to establish the suitability of 5G for the various use cases proposed, wherein ensuring seamless mobility is critical. While Telefonica and Huawei jointly demonstrated that a user centric and no cell (UCNC) strategy [10] can increase 5G connection admissibility rate by 233%; reduce access latency and signaling overhead by 95% and 78% respectively, KDDI labs and Samsung demonstrated high speed 5G handover trials wherein through beamforming and efficient CN resource allocation devices moving at 192 km/h and at 28GHz frequency were efficiently handed over from one access point to the other. SK Telecom and Samsung together have also provided a PoC into an efficient interworking setup between a 4G CN and a 5G CN. In this PoC virtualized 4G LTE CN and 5G CN were established and a test was conducted in urban environment. However, it is important to highlight the fact that none of the above efforts introduce a transitional architecture as well as address the HO signaling aspect, which has been addressed in with the present invention.

While 3GPP in TS 23.501 and 23.502 has specified the handover signaling required within 5G networks, through the present inventive core network entity referred to as SDN enabled Mobility Management unit (SeMMu) and the corresponding network architecture a transitional approach from current to future networks is thus provided, reducing the time to market and CAPEX as compared to the fully SDN based network (3GPP). Further, the handover methodology implemented via the new core network entity and the corresponding network architecture enhances the performance of the legacy and 5G network handover signaling in terms of latency, transmission cost and processing cost. Lastly, as part of our background study we also consider the possibility of utilization of the features of existing mobility management mechanisms, given their stability and readily implementable nature, as well as edge clouds, given their computational and caching capabilities. However, while the existing mobility management mechanisms are not holistic, edge clouds present the challenge of optimal placement and associated signaling during mobility scenarios.

Besides the above, the 3GPP in TS23.401 discloses a standard handover procedure between E-UTRAN for handing over a UE from a souce eNb to a target eNB relied on the presence of an X2 reference point and of a S1-MME reference point between the MME and the source eNB as well as between the MME and the target eNB. Moreover, this document relies on the handshake between entities to transfer information necessary for the handover between a mobility management entity (SeMMu) to the core network.

Therefore, in the light of the above discussions it is clear that there is need of:
- Reducing frequent handovers, ping-pong effects and devising an optimized vertical HO strategy.
- Designing mobility management strategies that either jointly take into account the requirements of multiple network slices or provide individual solutions for each network slice.
- Ensuring appropriate levels of flexibility, scalability and high degree of reliability in mobility management mechanisms to cope with the diversity in mobility profiles and applications the devices will access.
- Reducing the signaling and packet forwarding costs.
- Ensuring low computational complexity and improved pro-activity of mobility management mechanisms to serve different network verticals efficiently while complying with the latency requirements.
- Devising mobility management solutions that take into account the context, i.e., network load, user preferences, network policy, mobility profiles, etc., whilst guaranteeing the best possible QoS (requested QoS being a major determining factor).
- Ensuring low control plane latency.
- A context based computational resource allocation for efficient utilization of computational resources.

### SUMMARY OF THE INVENTION

All the above issues have been addressed with the present independent method claim 1 and with the independent system claim 14 and the corresponding dependent claims.

### DESCRIPTION OF THE INVENTION

The present invention proposes, in a first aspect, a handover method where the data path between a mobile terminal and the source network is changed from a first path comprising:
- a downlink/ uplink connection between the mobile terminal and a current access point;
- a connection between the current access point and a current gateway; and
- the current access point and the current gateway being connected to a mobility management entity;
to a target network with a second path comprising:
- a downlink/ uplink connection between the mobile terminal and a target access point; and
- a connection between the target access point and a target gateway; and
   where the mobility management entity is connected to the current access point, a target support node, the current gateway and the target gateway;
   the method comprising the following steps:
      a) handover initiation;
      b) sending of a handover requirement from the current access point to the mobility management entity;
      c) sending a resource allocation request and a tunnel setup message from the mobility management entity to a target support node of the target access point;
      d) sending a relocation request from the target support node to the target access point;
      e) sending a relocation request acknowledge from the target access point to the target support node;
      f) forwarding a relocation response from the target support node to the mobility management entity;
      g) sending a tunnel setup message from the mobility management entity to the current gateway;
      h) sending a relocation and tunnel setup message from mobility management entity to the target gateway;
      i) commanding handover from the mobility management entity to the current access point.

This method, and the associated system, provides among others a logical transition from the current to the future 5G networks, while optimizing the handover operations in 5G and legacy networks. The proposed solution enhances the handover preparation signalling by reducing the number of handshakes required to complete the handover preparation.

This new signalling scheme implies a mapping of the current messages to the new messages, and so, due to the reduction in the number of handshakes, the proposed mechanism also reduces the handover preparation latency as well as the transmission and processing costs to perform the same. Note that, the handover preparation mechanism proposed also can help enhance the handover rejection phase signalling as it takes into account the possibility of a handover reject. Concretely, during the handover preparation phase the radio resource management (RRM) steps, i.e., relocation request and relocation request acknowledge phases, are executed before any core network resources are reserved. Hence, in the event of a handover reject, the signalling required to relinquish the allocated core network resources, i.e., session/tunnel delete sequences, would not be required. This essentially makes the handover reject as well as the handover preparation phase efficient. Hence, the SeMMu, is primarily aimed at improving the control plane (CP) signalling involved during the handover preparation and rejection phase; thus, facilitating remapping of existing signalling messages to a new set of signalling messages, whilst causing minimal architectural disturbance.

The primary concept of the optimized handover signalling relating to the aforesaid methodology is the ability to compress the legacy message ensemble to a new reduced message ensemble and then have the ability to parallel execute certain CP messages via the SeMMu. In this sense, according to an embodiment, the mobility management entity may send the tunnel setup message and the relocation and tunnel setup message to the current gateway and the target gateway -corresponding to steps g) and h)-, respectively, in parallel; also, according to an embodiment, the mobility management entity may also send the handover command -corresponding to step i)- in parallel to the sending of the tunnel setup message and the relocation and tunnel setup message - corresponding to steps g) and h).

According to an embodiment, step h) takes place after step f).

According to an embodiment, step d) takes place after step c), and the target support node does not receive a message relating to the handover from the target gateway between steps c) and d).

According to an embodiment, step f) takes place after step e), and the target support node does not receive a message relating to the handover from the target gateway between steps e) and f).

According to an embodiment, handover signalling messages of steps b) and f) are received by a Software Defined Networking, SDN, agent of the mobility management entity, wherein a core network, CN, entity of the mobility management entity is a Mobility Management Entity, MME, in a 4G/3G core network, and wherein the mobility management entity includes a Session Management Function, SMF, in a 5G core; handover signalling messages of steps c) and e) are received by a Software Defined Networking, SDN, agent of the target support node; the handover signalling messages are updated by mapping, by respective mappers of the mobility management entity and the target support node, SDN addresses of source and destination CN entities included in the messages to the physical network source and destination addresses of the CN entities; the handover signalling message is updated by transforming, by respective formatters of the mobility management entity and the target support node, an SDN message format thereof to a message format of a CN entity to receive the message; the CN entity of the mobility management entity and a CN entity of the target support node processes each transformed handover signalling message to generate one or more messages for other CN entities; the processing of the handover signalling messages involving: processing of Information Elements, IEs, included in the messages, determination of parallel information transfer, parallel information transfer being a process for transferring multiple handover signalling messages to other CN entities by sending messages without waiting for a response to a sent message before sending a further message (that is to say, by sending messages back to back), and mapping IEs to message ensembles (e.g. new message ensembles), preferably the mapping of the lEs to the message ensembles is carried out so that repetitive information transfer is eliminated via elimination of repeated IEs, and preferably this processing is done while maintaining the correct functionality of the handover process by ensuring that the necessary information is being transferred; the mobility management entity and the target support node generate requests for parallel transmission of handover signalling messages; handover signalling messages of steps d), f), g), h) and i) and the requests for parallel transmission of handover signalling messages being transferred to the SDN agent via a bidirectional link between the CN entity and the SDN agent; and handover signalling messages of steps d), f), g), h) and i) being updated with the SDN addresses of the destination and source CN entities from the physical network destination and source CN entity addresses, and said messages being transferred by a scheduler block of the SDN agent to scheduler blocks of the SDN agents of other CN entities utilizing, for the message transfer, the parallel transmission request from the CN entity.

According to an embodiment, the source network is a 5G core, and the target network is the EPS, the source network consisting of the Next Generation Radio Access Network (NG-RAN), Access and Mobility Function (AMF), User Plane Function (UPF) and other core network (CN) entities (i.e. Authentication Server Function (AUSF), User Data Management (UDM), Policy Control Function (PCF)), the other CN entities being implemented as Virtual Functions on a cloud, this cloud being connected to the AMF and the Mobility Management unit (SeMMu), the SeMMu in the source network composed of a Software Defined Networking (SDN) agent connected with a Session Management Function (SMF), the SDN agent being a composition of three components, i.e., formatter, mapper and scheduler, the formatter being aimed to pack and unpack incoming and outgoing messages into the correct message format, the mapper block aimed at mapping the CN and CN entity messages to messages recognizable by the corresponding CN entity and CN respectively, the scheduler block aimed at scheduling the incoming and outgoing messages towards the CN entity and CN respectively based on the message characteristics, further, the AMF consisting of an SDN agent as well as an interface to communicate with the SeMMu, the UPF having a data plane connection with the NG-RAN and the IMS core, the SeMMu in the source network being connected to an inter-working entity called the PGW-U along with an UPF, the PGW-U+UPF also being connected via a DP connection to the NG-RAN, the control plane communication with the NG-RAN being handled by the AMF via the SDN agent, the AMF through the SDN agent being connected to the SeMMu in the EPS via the N26 interface, the SeMMu in the target network composed of a Mobility Management Entity (MME) connected with the SDN agent, the SeMMu connecting with the Target Serving Gateway (T-SGW) and the Serving GW, the T-SGW being either present or not present during an Inter/Intra-RAT HO, the SeMMu connected to an inter-working entity namely, PGW-U along with an UPF, the SeMMu being also connected to the Serving GPRS Support Node (SGSN), the SGSN being responsible for managing the communications with the GERAN and the UTRAN via the Radio Network Controller (RNC), the SeMMu managing the E-UTRAN that fall under its domain, and The DP connections existing between E-UTRAN and S-GW, S-GW and T-SGW, T-SGW and PGW-U + UPF, S-GW and PGW-U + UPF, T-SGW and SGSN, S-GW and RNC.

According to an embodiment, the following information elements are being sent in the corresponding step:
a) Measurement Report;
b) Target eNodeB Identifier and Source to Target Transparent Container;
c) Target E-UTRAN Identifier;
d) mapped Mobility Management context;
e) Session Management EPS UE context;
f) Flags and UE usage type;
g) List of EPS bearer identifiers;
h) Target to Source Transparent Container;
i) EPS bearers setup and failed to setup list;
j) Addresses and TEIDs for DL data forwarding for S-GW and Target eNB;
k) CP Addresses and TEIDs of SeMMu and Target eNB;
l) Active Session OFls;
m) QoS flows and CN tunnel info for data forwarding.

According to an embodiment, the source network is the LTE- EPC and the target network is a UMTS/2G network, the Mobility Management unit (SeMMu) composed of the Mobility Management Entity (MME) coupled with the SDN agent, the SeMMu being connected to the E-UTRAN, Serving GW (S-GW), Target S-GW, PGW-U + UPF ,the Serving GPRS Support Node (SGSN), and the AMF in the 5G NGC via an SDN agent over an N26 interface, Subsequently, the SeMMu within the 5G NGC being connected to the NG-RAN, the AMF, the UPF and the other CN entities (i.e. Authentication Server Function (AUSF), User Data Management (UDM), Policy Control Function (PCF)), UPF being a DP entity enabling routing of data packets through the CN based on the forwarding rules imparted on it via the SeMMu, the DP connections existing between: E-UTRAN and S-GW, S-GW and PGW-U + UPF, S-GW and T-SGW, T-SGW and SGSN, S-GW and Radio Network Controller (RNC), NG-RAN and PGW-U + UPF, NG-RAN and UPF, UPF and IMS core, and PGW-U + UPF and IMS core, with the SGSN in the target network connecting to the RNC and managing the signalling with the RNC enabling the Radio Resource Management (RRM) operations to be executed according to the existing standards alongside the core network signalling being optimized.

According to an embodiment, the following information elements are being sent in the corresponding step:
a) Measurement Report;
b) Target RNC Identifier and Source to Target Transparent Container (Specify contents in specification);
c) SeMMu TEID and address for the CP;
d) SGSN TEID(s) and address(es) for the CP and DL forwarding;
e) IMSI;
f) Target Identification;
g) T-SGW address(es) and TEID(s) for DP, CP and DL forwarding;
h) UE Identifier and Encryption information;
i) RABs setup and failed to setup list;
j) Target to Source Transparent Container;
k) Source S-GW address(es) and TEID(s) for CP and data forwarding;
l) Handover Indication.

According to an embodiment, the source network is a UMTS/2G and the target network is the LTE-EPC, the SGSN in the source network being connected to the Radio Network Controller (RNC)and managing the communication with the RNC,hence, the Radio Resource Management (RRM) operations are not transformed, with the SGSN being further connected to a Mobility Management entity (SeMMu) within the LTE EPC, the SeMMu composed of the Mobility Management Entity (MME) and the SDN agent, the SeMMu being connected to the Serving GW, Target Serving GW, PGW-U + UPF and the AMF in the 5G NGC, the connection to the AMF in the 5G NGC being via an N26 interface and through the SDN agent attached to the AMF, the AMF connecting to the SeMMu, where the composition of the SeMMu being an SMF alongside the SDN agent, The SeMMu in the 5G NGC connecting to the other CN entities (i.e. Authentication Server Function (AUSF), User Data Management (UDM), Policy Control Function (PCF)) located on a cloud infrastructure, the CN entities connecting to the AMF, the SeMMu being also connected to the UPF and the PGW-U + UPF entities enabling the determination of the route for the packets within the core network, additionally, the AMF being connected to the NG-RAN, and , the DP connections existing between, UPF and IMS core, PGW-U + UPF and IMS core, UPF and NG-RAN, PGW-U + UPF and NG-RAN, E-UTRAN and Target S-GW, Target S-GW and S-GW, Target S-GW and PGW-U + UPF, S-GW and PGW-U and UPF, S-GW and SGSN, Target S-GW and RNC.

According to an embodiment, the following information elements are being sent in the corresponding step:
a) Measurement Report;
b) Target eNodeB Identifier and Source to Target Transparent Container (Specify contents in specification);
c) Source RNC Identifier;
d) IMSI, UE Identifier, Encryption Information and Target Identification;
e) SGSN TEID and Address for CP;
f) Target to Source Transparent Container;
g) EPS bearers setup and failed to setup list;
h) SeMMu TEID and Address(es) for CP;
i) Target eNodeB, S-SGW and T-SGW TEIDs and addresses for data forwarding;
k) T-SGW address(es) and TEID(s) for DP and CP;
l) Target to Source Transparent Container;
m) Handover Indication.

According to an embodiment, the formatter is configured to transform the format of the incoming and outgoing messages such that they are understood at the SDN agent and the CN entity, respectively, the function of the formatter for any message coming from a CN entity being to remove the formatting applied by the CN entity and extract the payload and destination address, the payload and the destination address being then passed to the mapper, Conversely, for a message arriving at the formatter from the mapper, the formatter functionality being to configure the payload along with the source address into a format that can be deciphered by the CN entity the Mapper being connected to both the formatter and the scheduler, the mapper upon receiving a message frame from the scheduler removes the frame header, identifies the message source, and then maps the address in the CN to the address of the source as would be seen by the CN entities, the functionality of the mapper then being to transfer the message payload along with the source address to the formatter, Conversely, the functionality of the mapper upon receiving the messages from the formatter being to identify the type of message and its destination, mapping the destination address to the address in the external CN and passing it to the scheduler along with the metadata that would allow the scheduler to decide whether a message has to be transferred in parallel with other messages or sequentially as it arrives, the functionality of the scheduler upon the arrival of the messages from CN to the SDN agent being to schedule the messages to be forwarded to the mapper, is the mapper being the entity that lies in between the scheduler and the formatter, conversely, upon receiving messages from the mapper that are to be transmitted out to the CN the functionality of the scheduler being to utilize information about the type of messages to be sent and decide whether the messages will be sent in parallel or sequentially through the communications interface.

According to an embodiment, the method involves a handover rejection phase signalling, the rejection of handover being due to the lack of target network resources, the method involving the transmission of a handover rejection message instead of handover request acknowledge, the method further being to release the resources reserved in the source and target network via the transmission of a message indicating the necessity to delete an established session/tunnel.

According to an embodiment, the method involves handover signalling aware of the possibility of a handover rejection, the method being to execute handover request and handover request acknowledge signalling before reserving resources in the target and source network, the method thus enabling the avoidance of sending messages to relinquish resources from source and target network due to handover rejection.

The present invention proposes, in a second aspect, a handover method where the data path between a mobile terminal and the source network is changed from a first path comprising:
- a connection (which may be a downlink/uplink connection) between the mobile terminal and a current access point;
- a connection between the current access point and a current gateway; and
- the current access point and the current gateway being connected to a mobility management entity;
to a target network with a second path comprising:
- a connection (which may be a downlink/uplink connection) between the mobile terminal and a target access point; and
- a connection between the target access point and a target gateway; and
   where the mobility management entity is connected to the current access point, a target support node, the current gateway and the target gateway;
   the method comprising the following steps:
      a) handover initiation;
      b) sending of a handover requirement from the current access point to the mobility management entity;
      c) sending a forward relocation request message from the mobility management entity to the target support node of the target access point;
      d) sending a relocation or handover request from the target support to the target access point;
      e) sending a relocation or handover request acknowledge from the target access point to the target support node;
      f) forwarding a tunnel setup message from the target support node to the target gateway;
      g) forwarding a relocation response from the target support node to the mobility management entity;
      h) sending a tunnel setup message from the mobility management entity to the current gateway;
      i) commanding handover from the mobility management entity to the current access point;
      j) sending a handover command to the mobile terminal from current access point.

According to an embodiment, step h) takes place after step f).

According to an embodiment, the target support node sends the tunnel setup message and the relocation response message to the target gateway and the mobility management entity -corresponding to steps f) and g)-, respectively, in parallel.

According to an embodiment, the mobility management entity sends the tunnel setup message and the handover command to the current access point -corresponding to steps h) and i)- in parallel.

According to an embodiment, step f) takes place after step e), and the target gateway does not receive a message relating to the handover and tunnel setup from the target support node between steps c) and e).

According to an embodiment, step h) takes place after step g), and the source gateway does not receive a message relating to the handover and tunnel setup from the mobility management entity between steps c) and g).

Also, same or similar embodiments as described with reference to the first aspect of the invention may also fall within the scope of the second aspect of the invention as readily apparent to the person having ordinary skill in the art, thus any such embodiment is also disclosed as being part of this aspect of the invention.

The invention also relates, in a third aspect, to a system for carrying out the method according to any of the first and second aspects of the invention, which comprises:
- a mobile terminal;
- a current access point;
- a current gateway;
- a mobility management entity;
- a target access point;
- a target gateway;
- a target support node;

wherein the mobility management entity is connected to the current access point, the target support node, the current gateway and the target gateway;
the mobility management entity being configured to allocate identifiers and addresses to itself and to the current access point, the target support node, the current gateway and the target gateway.

According to an embodiment of the system, the SDN agent is implemented either by means of a software running in an already installed mobility management entity, the current access point, the target support node, the current gateway and the target gateway or on a separate hardware system.

The system according to the present invention provides a network entity named SeMMu (acronym for SDN enhanced Mobility Management unit) which replaces the erstwhile Mobility Management Entity (MME) in the LTE networks and the SMF in the case of a 5G core. This new entity is an SDN enhanced Mobility Management unit (SeMMu), which combines the SDN and MME/SMF functionalities to execute the optimized handover preparation/rejection signalling; a network architecture furnished with the SeMMu enables network operators to maintain a manageable CAPEX (Capital Expenditures) and OPEX (Operating Expenditures) for transitioning from current networks to the envisioned 5G networks.

Additionally, exploiting the SeMMu functionality framework in the 5G networks permits operators to optimize the signalling process within the 5G core as well as during inter-RAT handovers between 4G/3G/2G and 5G networks.

The core network entity (SeMMu) in the LTE-EPC is preferably connected to all the network entities via the SDN agents, but it is not connected directly to the Radio Network Controller (RNC). Since, in the UMTS network the Serving GPRS Support Node (SGSN) is responsible for coordinating the session and control plane signalling with the RNC, our network architecture avoids modifying that framework. Henceforth, the SeMMu is connected to the SGSN, which then manages the communication with the RNC and the NodeB/BS. Further, either the SeMMu is connected to the AMF in the 5G core via the N26 interface or it is connected to the interworking P-GW/SMF entity, which helps it to communicate with the 5G core. Additionally, the SeMMu in the 5G core is essentially the SMF interacting with the SDN controller to enhance the tunnel setup between the UPF entities.

The new core network entity combines the capabilities of the MME/SMF from the existing LTE- evolved Packet Core (EPC)/5G core and the SDN-C. The SeMMu, like the MME/SMF and SDN-C, is a centrally located entity with full view of its network domain. This will equip the SeMMu with the capability to execute optimal handovers. Additionally, the SeMMu will be employed such that the data plane and control plane connections between other 3GPP network entities are unaltered. Such an approach simplifies the migration of the current networks to the future networks, hence, also reducing the CAPEX for the operators. Note that, in addition to the transitional capabilities offered, the SeMMu signalling framework helps optimize the handovers within the 5G core as well as between the 5G core and LTE-EPC/3G/2G. Lastly, in the LTE-EPC, SeMMu consists of an SDN agent. The SDN agent allows SeMMu to communicate with other network entities, which are also modified by the addition of an SDN agent, to execute optimized handover strategies. On the other hand for the 5G core, the DP entities are considered to be SDN enabled switches due to which the SDN controller of the SeMMu can easily interact with them.

Alongside having the complete network view, SeMMu through its centralized nature and SDN-C capabilities has the capability to acquire the required parameters from the core as well as the access network. By gaining access to these parameters, SeMMu can then formulate optimized solutions through algorithms or frameworks as defined within the mobility management Virtualized Network Functions (VNFs) at the Northbound Interface (NBI) of the SeMMu.

SeMMu also has SDN capabilities allowing the decoupling of the Control Plane (CP) from the Data Plane (DP); thus, SeMMu, through its SDN agent, can push rules and critical Control Plane (CP) information to each of the network entities it is connected to. This results in significant reduction in handover latency and transmission and processing costs.

Preferably, SeMMu has configuration presenting a Core Network (CN) entity that has the combined capabilities of both the MME (in LTE_EPC)/SMF (in 5G core) and SDN-C. One of the benefits of such an evolutionary Core Network (CN) is that it helps to provide continuity of legacy concepts, whilst introducing the next generation network concepts. This consequently also leads to a reduction in the CAPEX for the network operators.

Finally, according to some embodiments of the system, the mobility management entity comprises a Software Defined Networking agent aimed at connecting the mobility management entity to the current access point, the target support node, the current gateway and the target gateway, the Software Defined Networking agent being formed by:
- a scheduler block connected to a bi-directional communication interface that connects to the core network entity and to the mapper, configured to schedule the transfer of incoming and outgoing messages based on the message characteristic;
- a formatter block connected to a bi-directional communication interface that connects to the core network entity and to the mapper, configured to transform the format of the incoming and outgoing messages such that they are understood by both the SDN agent and the entity respectively; and
- a mapper block connected to the scheduler block and to the formatter block and configured to map addresses of messages from source and destination SDN agent addresses to the source and destination CN entity addresses, the SDN agent being configured to be associated with a CN entity (coming from the scheduler block).

These functional blocks are connected in the order as mentioned above with a bidirectional communication interface. Further, the Scheduler is connected to the external network through a communication interface through which the SDN agent transmits/receives the data. Next, the Formatter is connected to the CN entity through a bidirectional communication interface for exchanging the CP information packets.

When a frame arrives from the CN at the SDN agent, it is immediately passed to the scheduler through a communication interface. Depending upon the arrival of the messages they are scheduled to be forwarded to the mapper. On the other hand, when the mapper passes messages that are to be transmitted out to the CN, the scheduler, through information about the type of messages to be sent, decides whether they will be sent in parallel or sequentially through the communications interface. Note that, the transformed MME/SMF can also decide the scheduling of the messages beforehand.

The Mapper is connected to both the formatter and the scheduler. When it receives a message frame from the scheduler, it first removes the frame header, identifies the message source, and then maps the address in the CN to the address of the source as would be seen by the CN entities. It transfers the message payload along with the source address to the formatter. On the other hand, when it receives the messages from the formatter, it identifies the type of message and its destination. It then maps the destination address to the address in the external CN and passes it to the scheduler along with the metadata that would allow the scheduler to decide whether a message has to be transferred in parallel with other messages or sequentially as it arrives.

The formatter is configured to transform the format of the incoming and outgoing messages such that they are understood at the SDN agent and the CN entity, respectively. For a message coming from a CN entity, the formatter removes the formatting applied by the CN entity and extracts the payload and destination address to the mapper. On the other hand, when a message arrives at the formatter from the mapper, it formats the payload along with the source address into a format that can be deciphered by the CN entity.

### BRIEF DESCRIPTION OF THE FIGURES

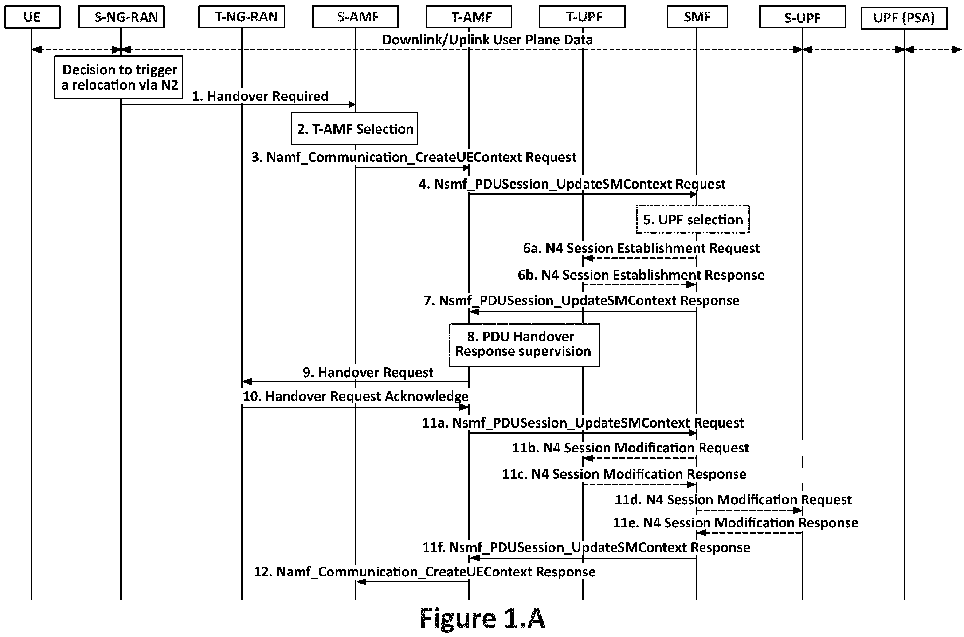

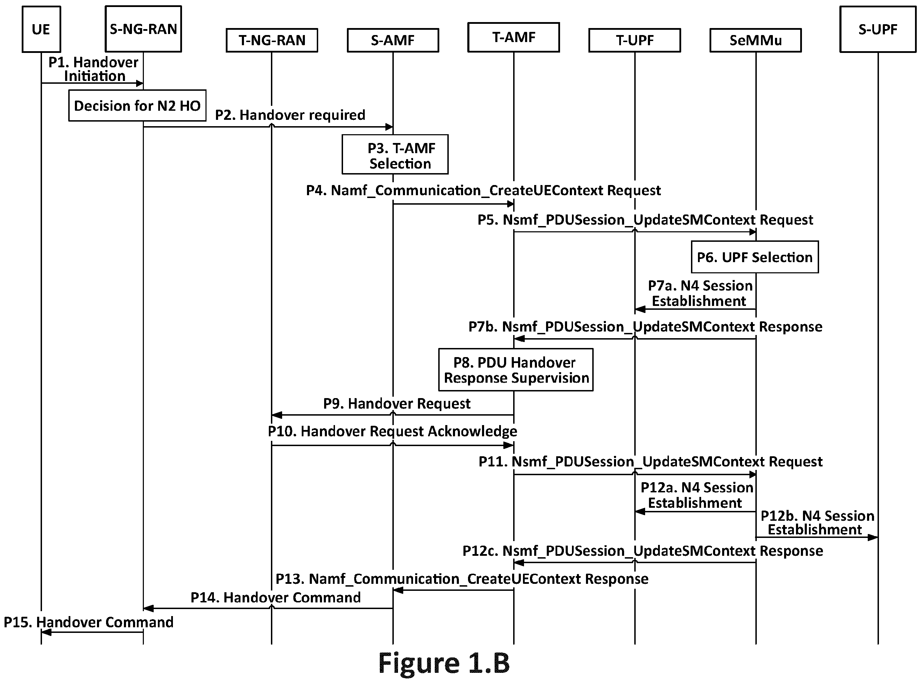

Figure1.A Figure 1.A is a schematic of the legacy mechanism for inter NGRAN signaling (N2 based Handover).
Figure 1.B is a schematic of the method for inter NGRAN signaling (N2 based Handover).
Figure 2.A is a schematic of the legacy method for 5G core to EPS (with N26 interface).

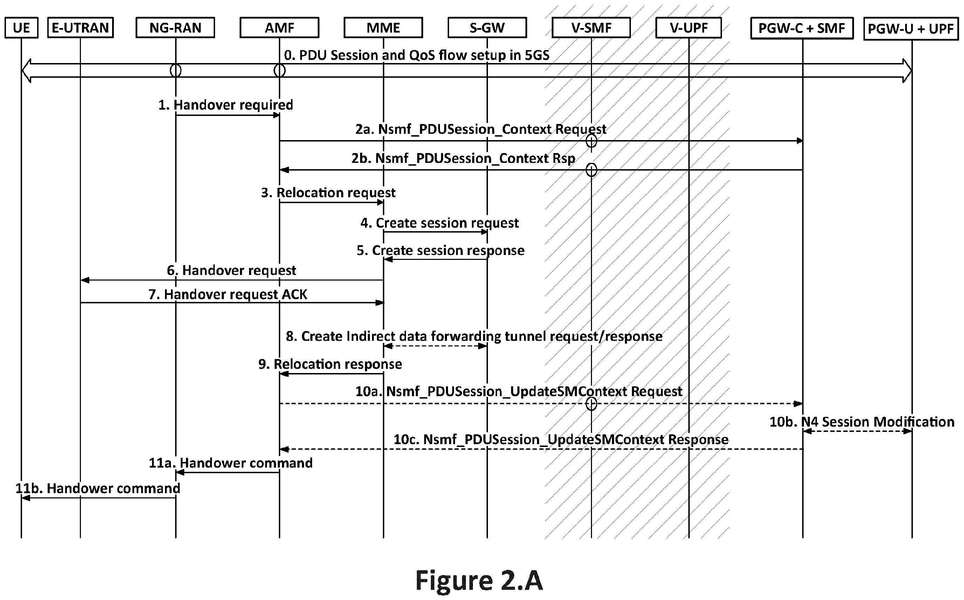

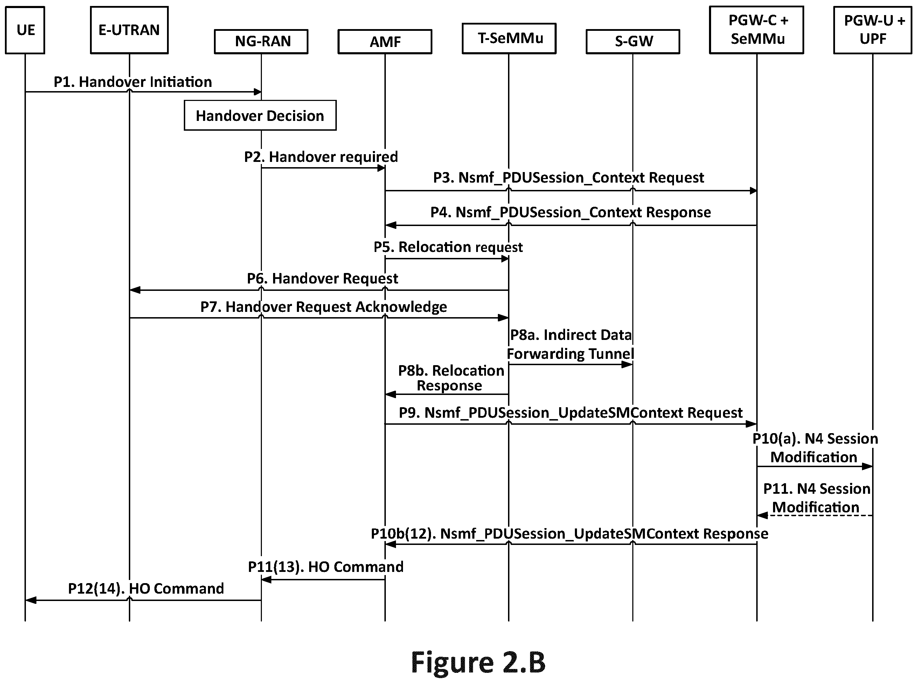

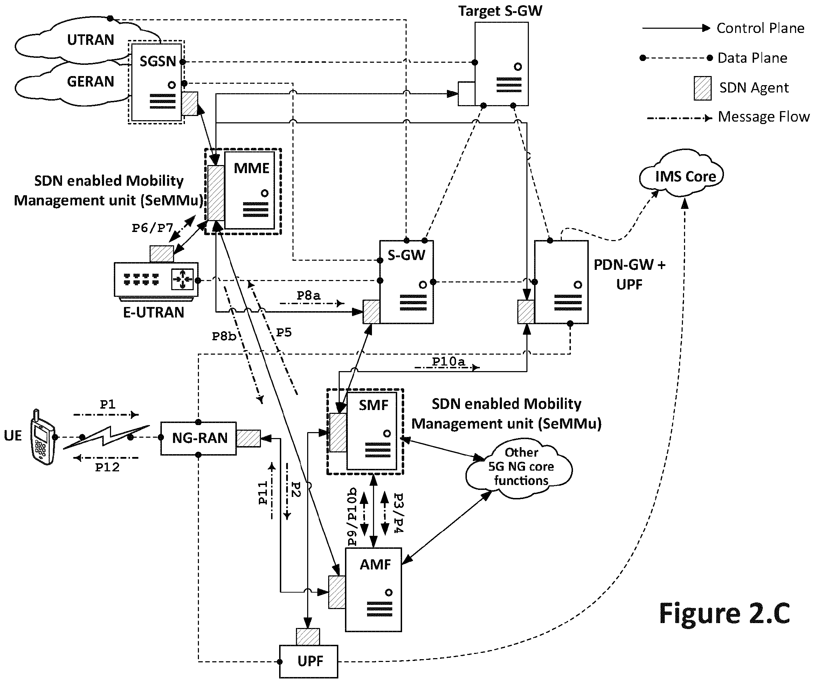

Figure 2.B is a schematic of the proposed method for 5G core to EPS (with N26 interface).
Figure 2.C is a block/component diagram of the system for implementing the method shown in FIG. 2.B.

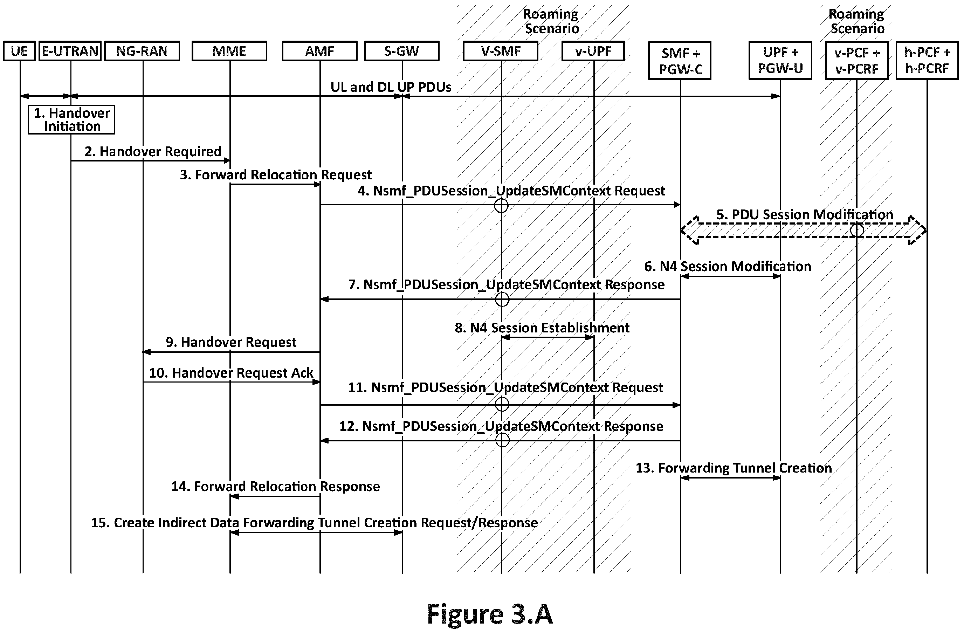

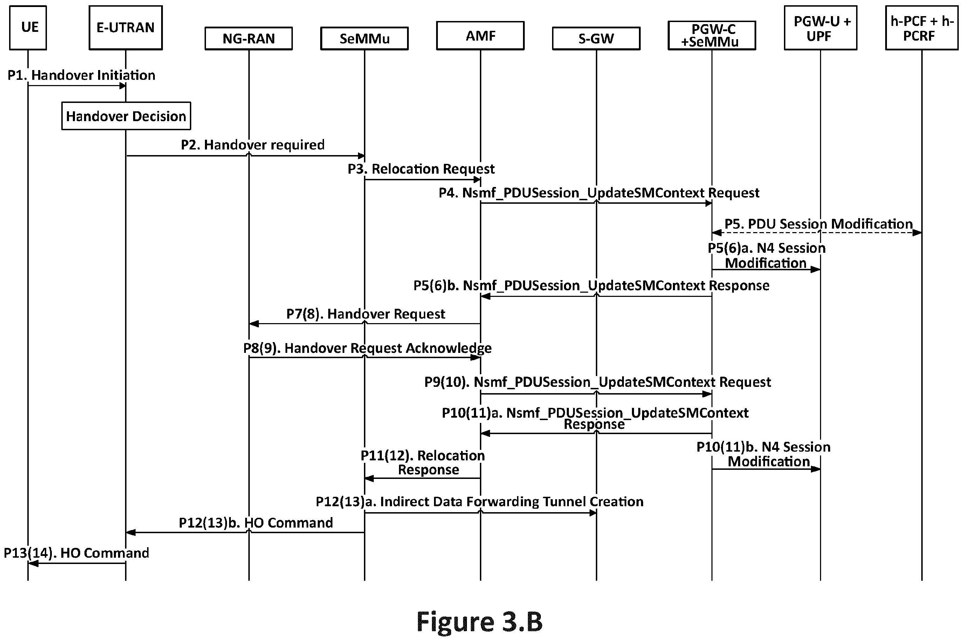

Figure 3.A is a schematic of the legacy method for EPS to 5G core (with N26 interface).
Figure 3.B is a schematic of the proposed method for EPS to 5G core (with N26 interface).

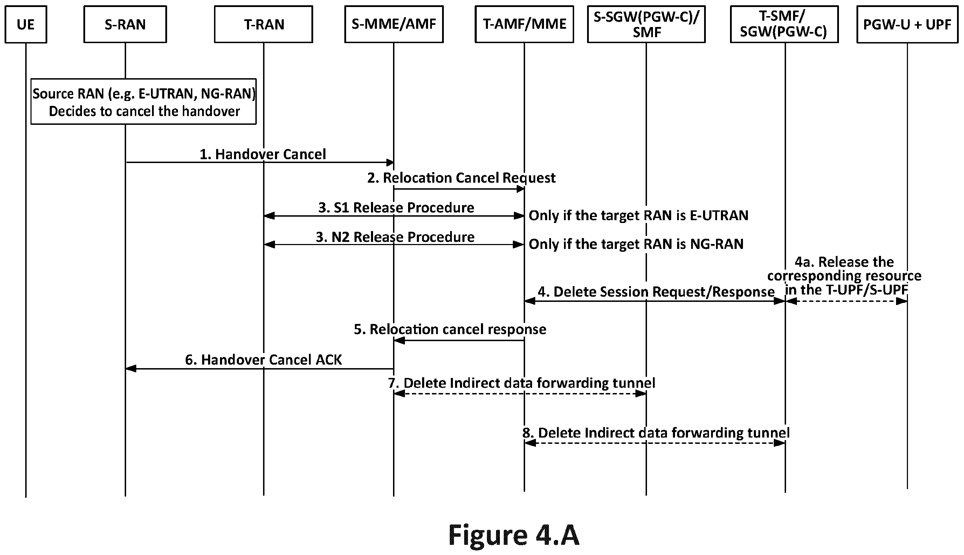

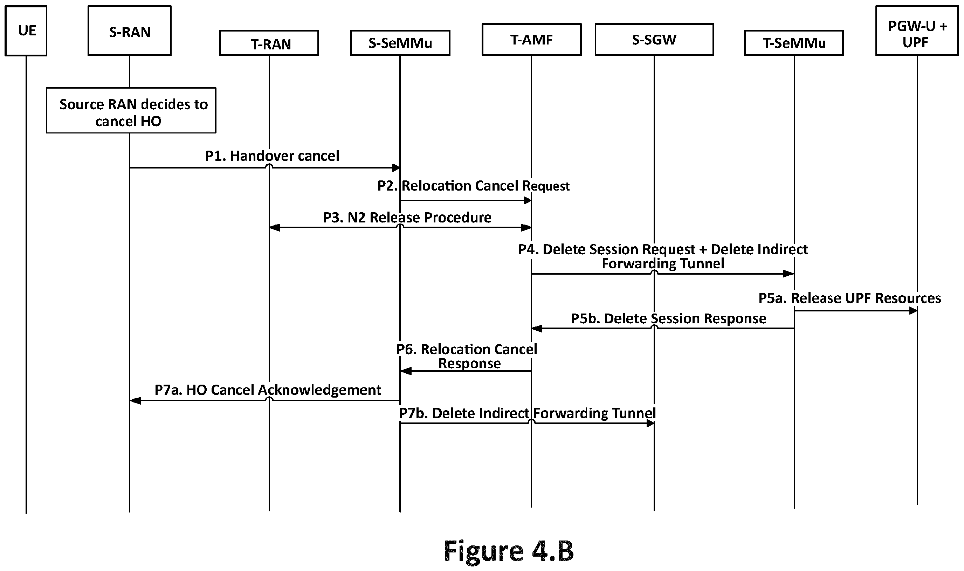

Figure 4.A is a schematic of the legacy method for HO Cancel (EPS to 5G NGC).
Figure 4. B is a schematic of the proposed method for HO Cancel (EPS to 5G NGC).

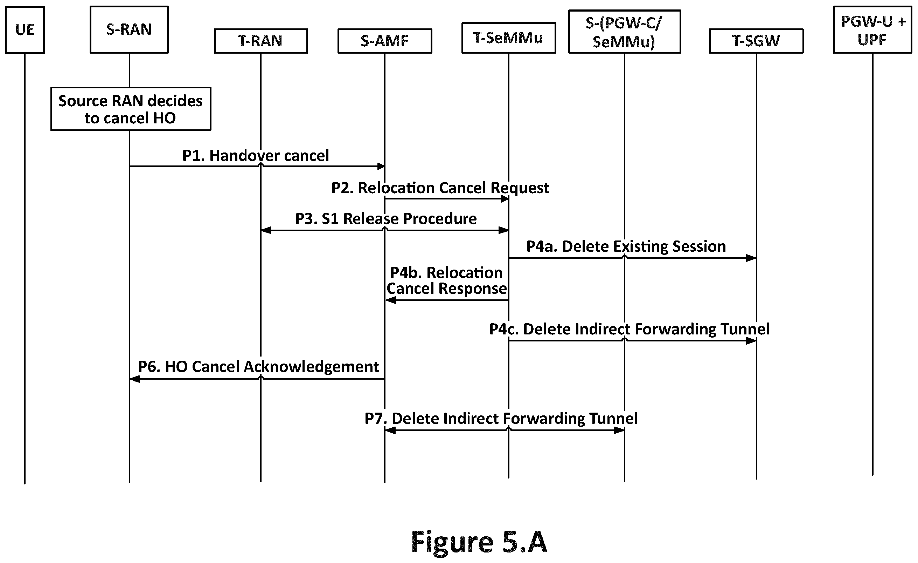

Figure 5.A is a schematic of the proposed method for HO Cancel (5G NGC to EPS).

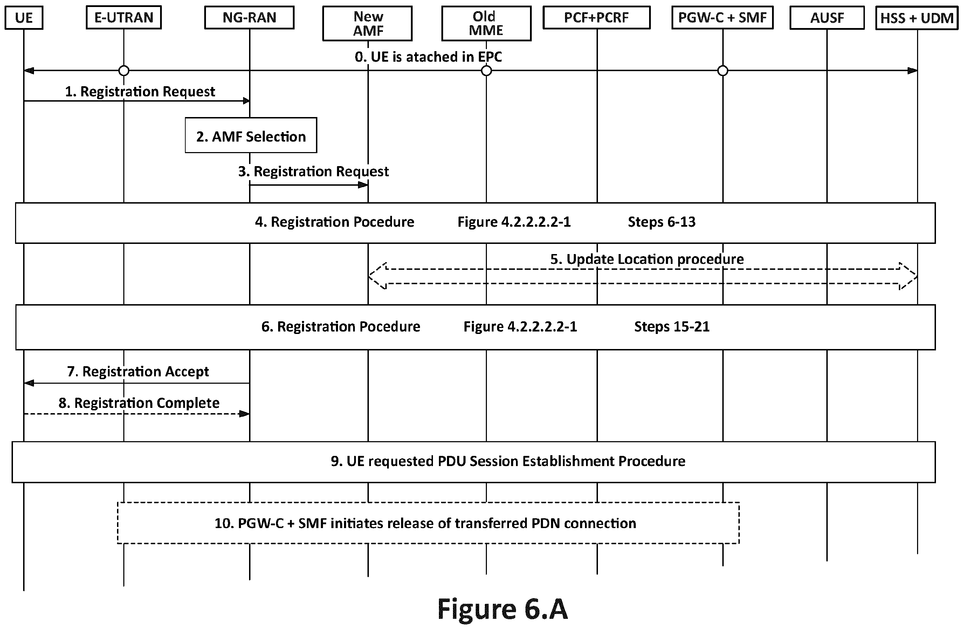

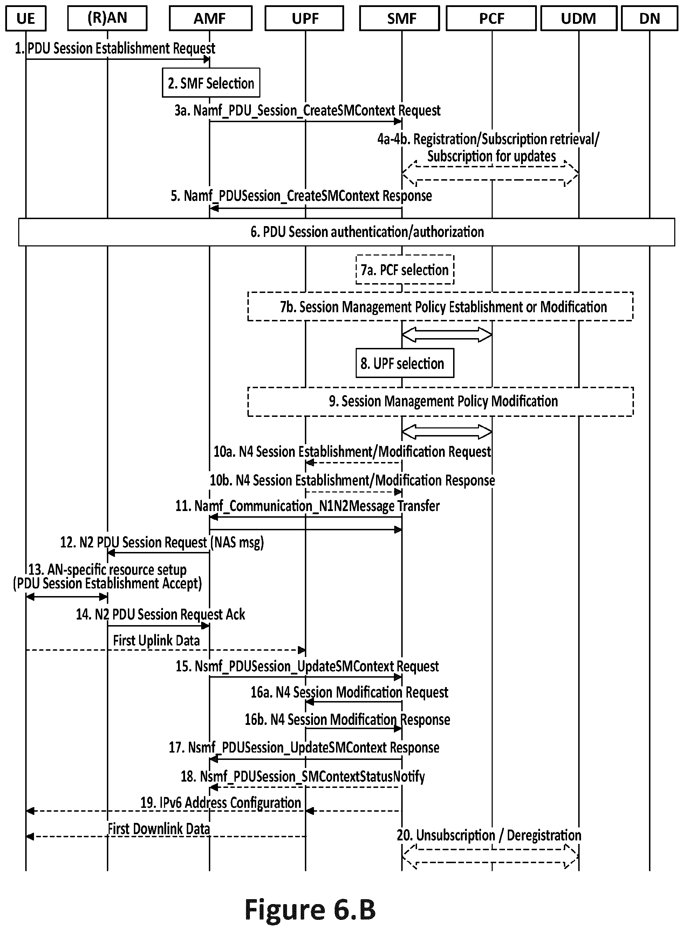

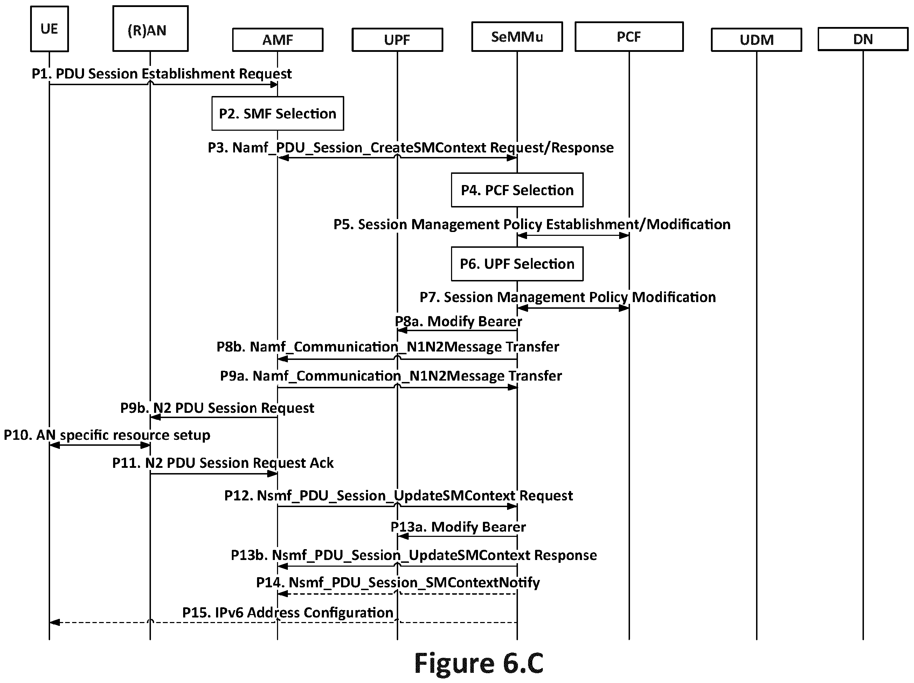

Figure 6. A is a schematic of the legacy method, including the registration phase for EPS to 5G core (without N26 interface).
Figure 6.B is a schematic of the legacy method of PDU establishment of procedure UE requested for EPS to 5G core (without N26 interface).
Figure 6. C is a schematic of the proposed method for including the registration phase for EPS to 5G core (without N26 interface).

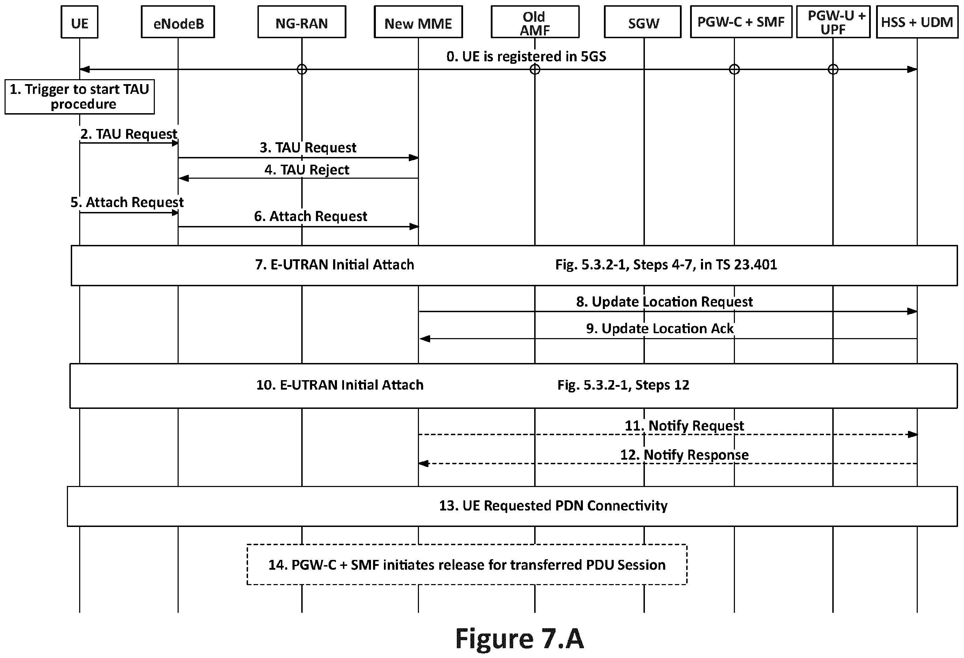

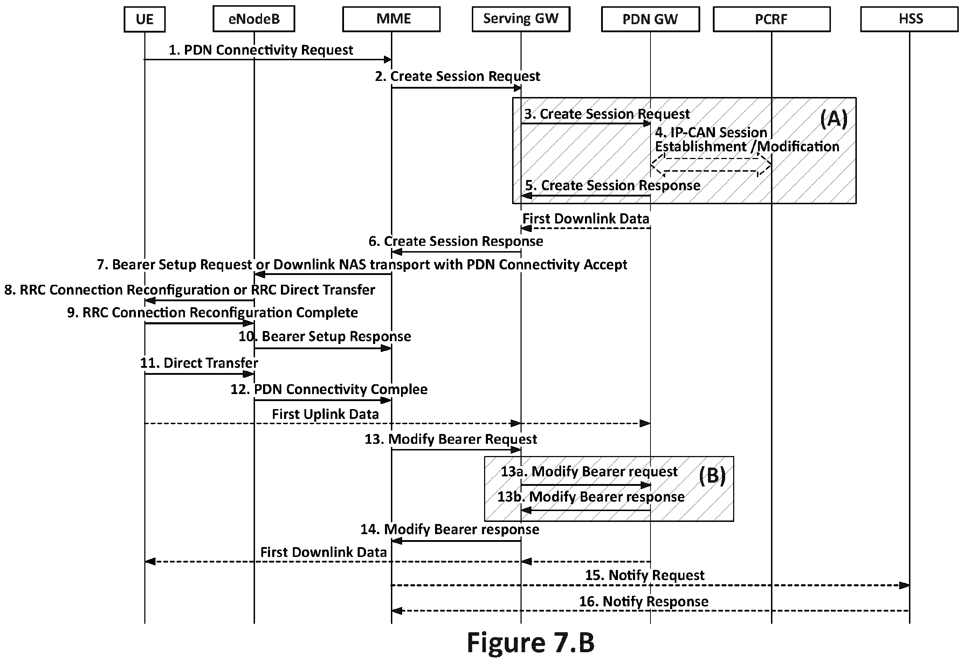

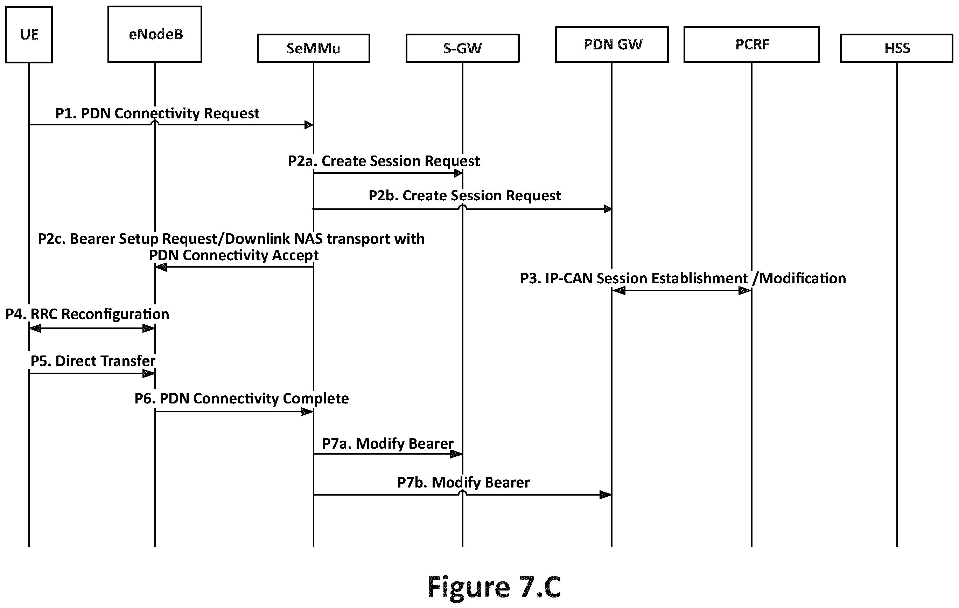

Figure 7.A is a schematic of the legacy method, including the attach phase for 5G Core to EPS (without N26 interface).
Figure 7.B is a schematic of a legacy method for 5G Core to EPS (without N26 interface), in this case with UE requested connectivity.
Figure 7.C is a schematic of the proposed method for 5G Core to EPS (without N26 interface).

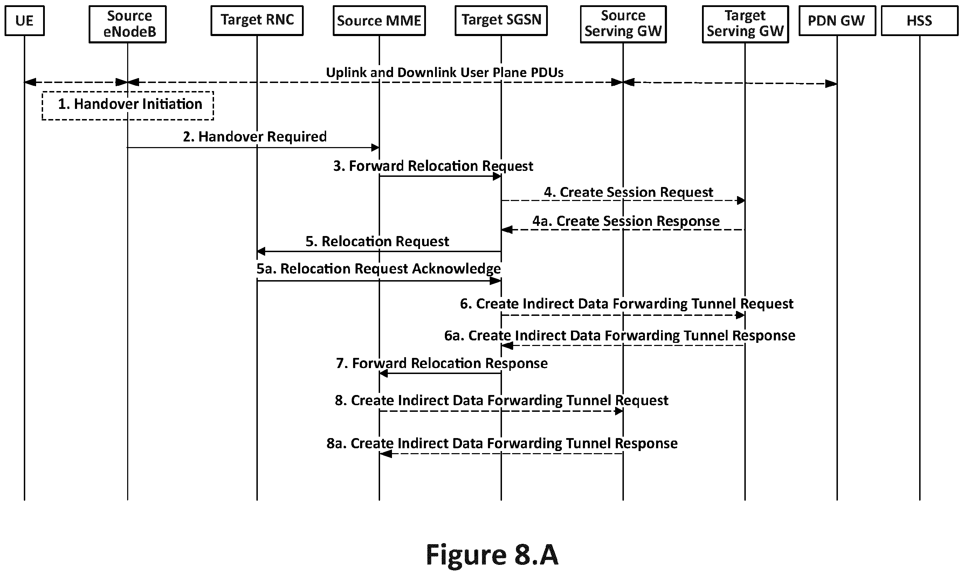

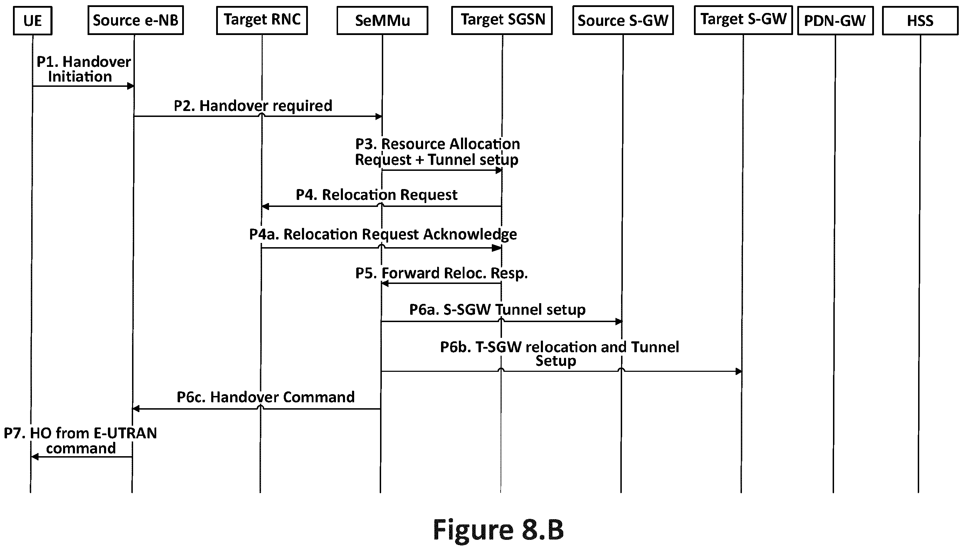

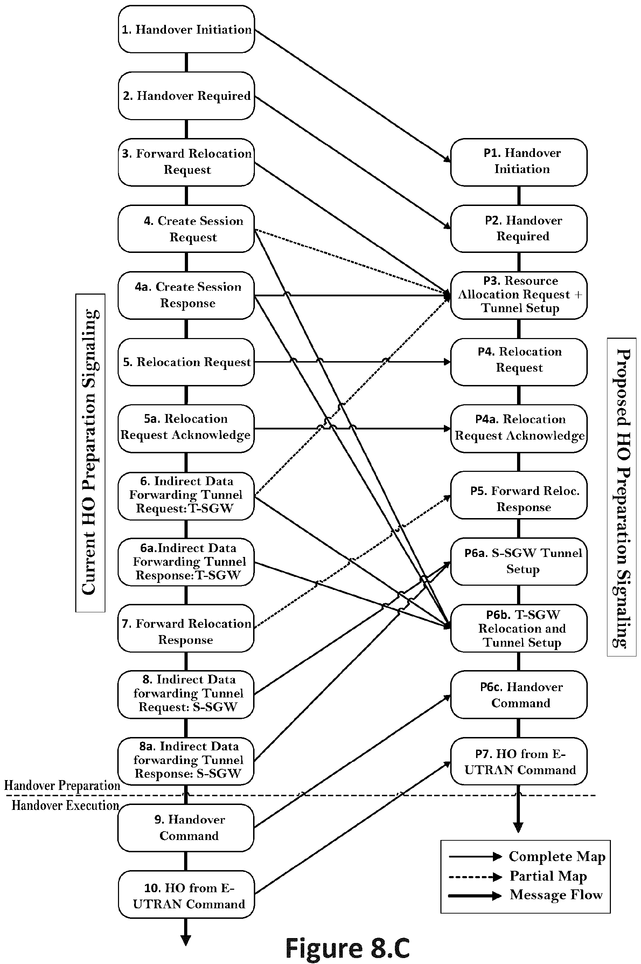

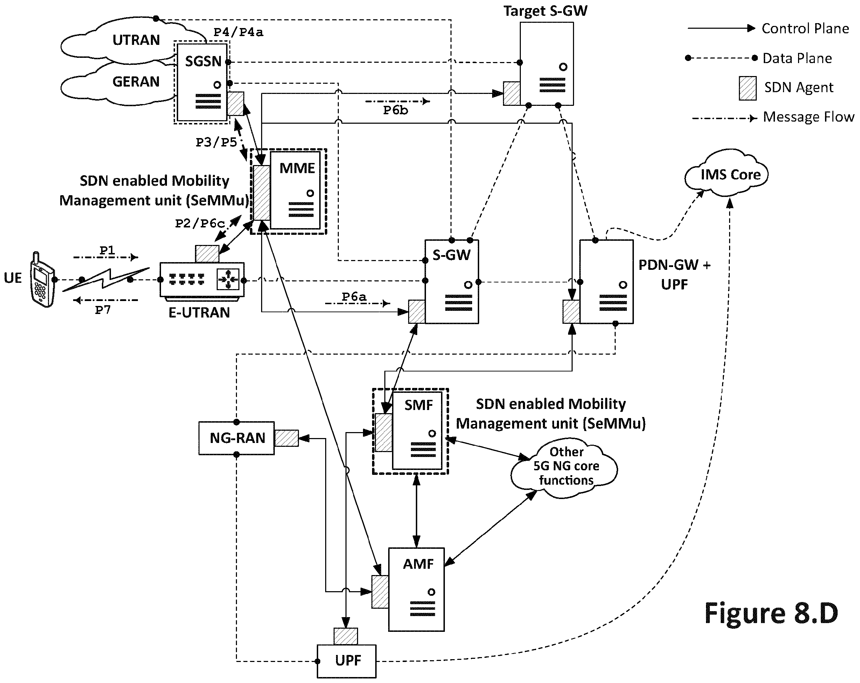

Figure 8.A is a schematic of the legacy method (for cases 8-11) for LTE to UMTS/2G HO with Target S-GW and Indirect Tunnel (Inter-RAT).
Figure 8.B is a schematic of the proposed signaling method for LTE to UMTS/2G HO with Target S-GW and Indirect Tunnel (Inter-RAT).
Figure 8.C is a schematic of the proposed message mapping method for LTE to UMTS/2G HO with Target S-GW and Indirect Tunnel (Inter-RAT).
Figure 8.D is a block/component diagram of the system for implementing the method shown in FIG. 8.B.

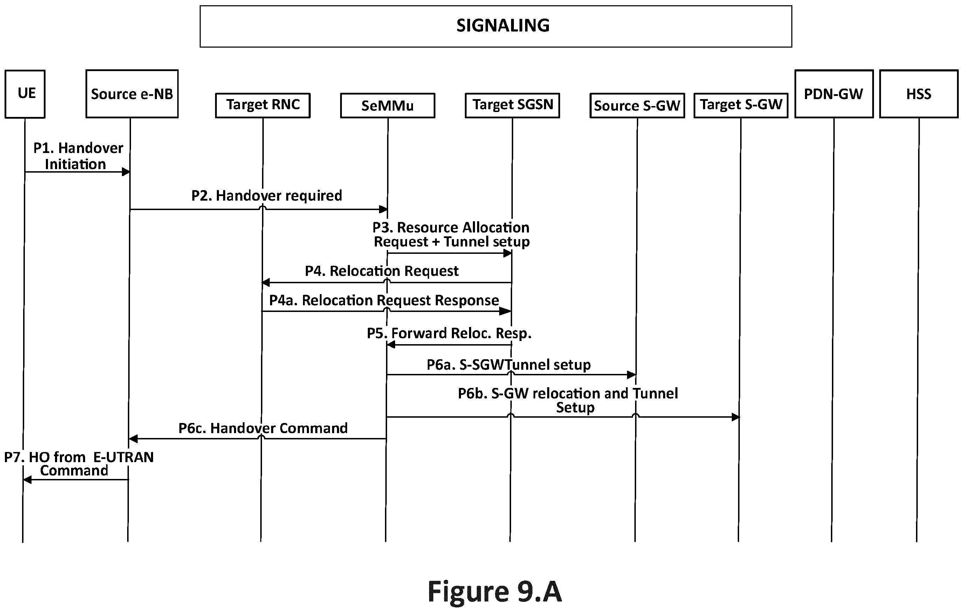

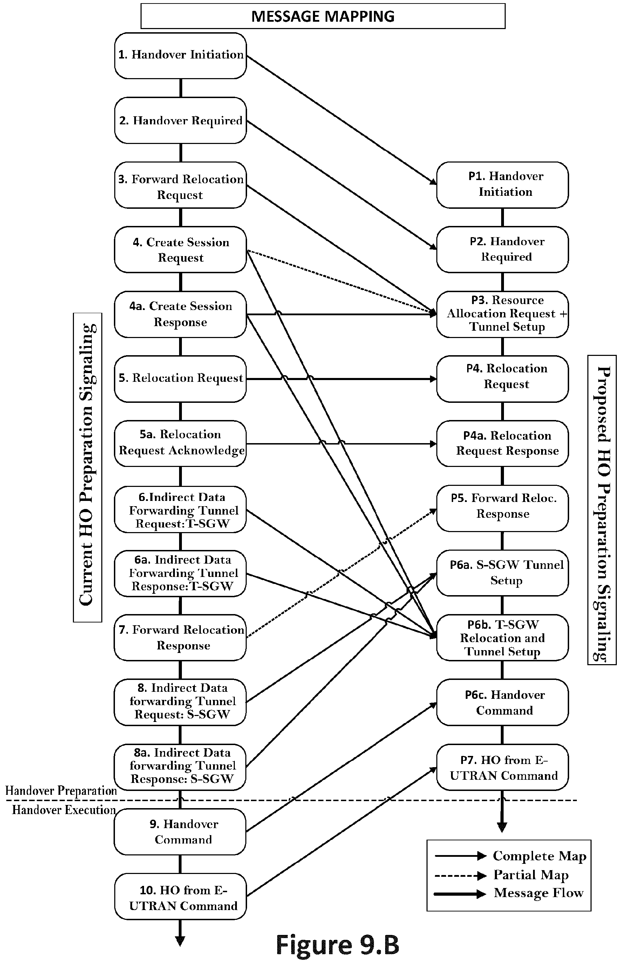

Figure 9.A is a schematic of the proposed signaling for LTE to UMTS/2G HO with Target S-GW and Direct Tunnel (Inter-RAT).
Figure 9.B is a schematic of the message mapping of the proposed method for LTE to UMTS/2G HO with Target S-GW and Direct Tunnel (Inter-RAT).

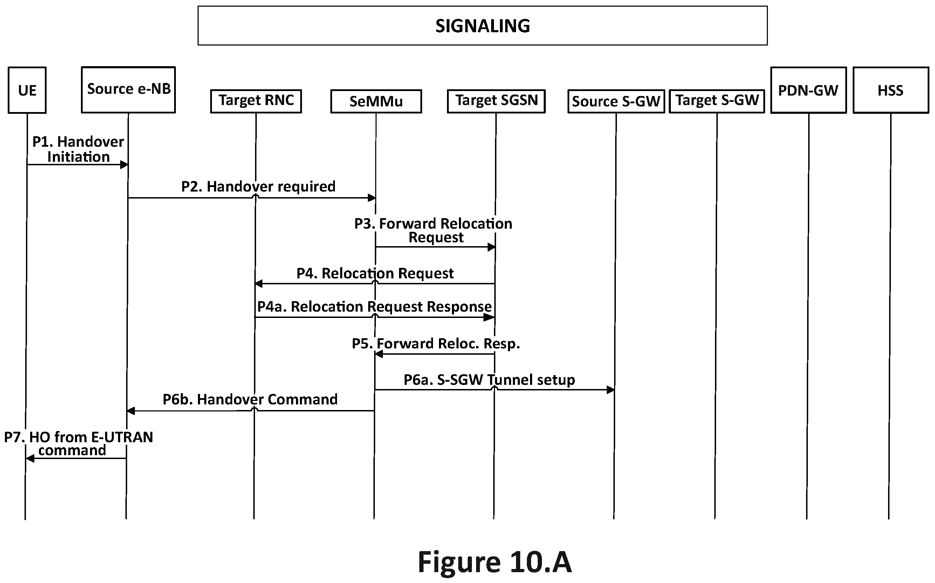

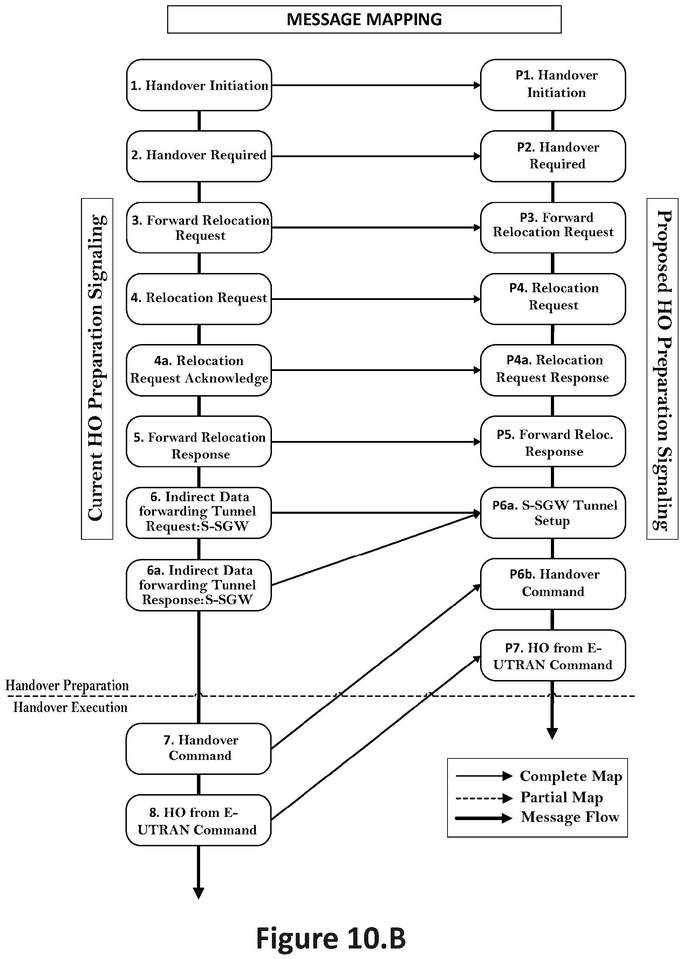

Figure 10.A is a schematic of the proposed signaling method for LTE to UMTS/2G HO without Target S-GW and Indirect Tunnel (Inter-RAT).
Figure 10.B is a schematic of the proposed signal mapping method for LTE to UMTS/2G HO without Target S-GW and Indirect Tunnel (Inter-RAT).

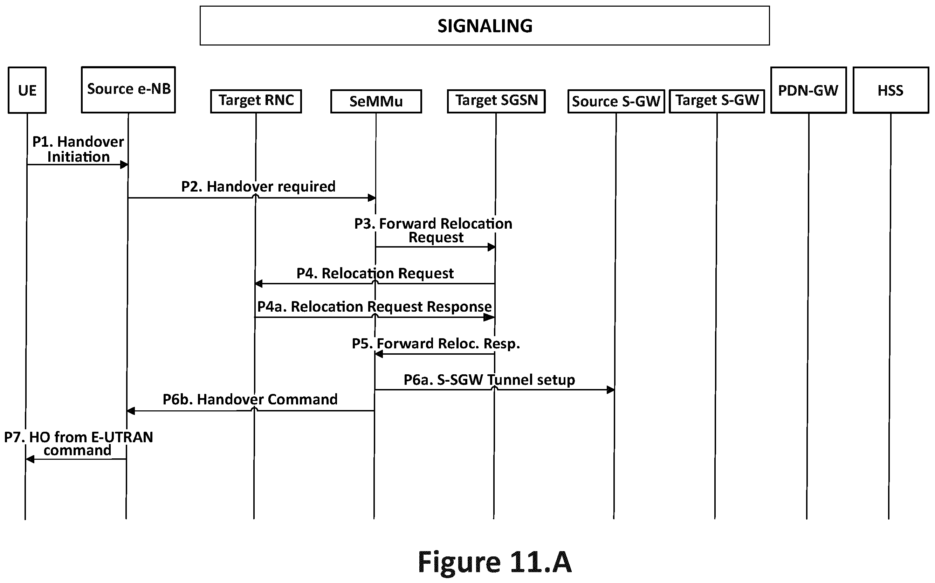

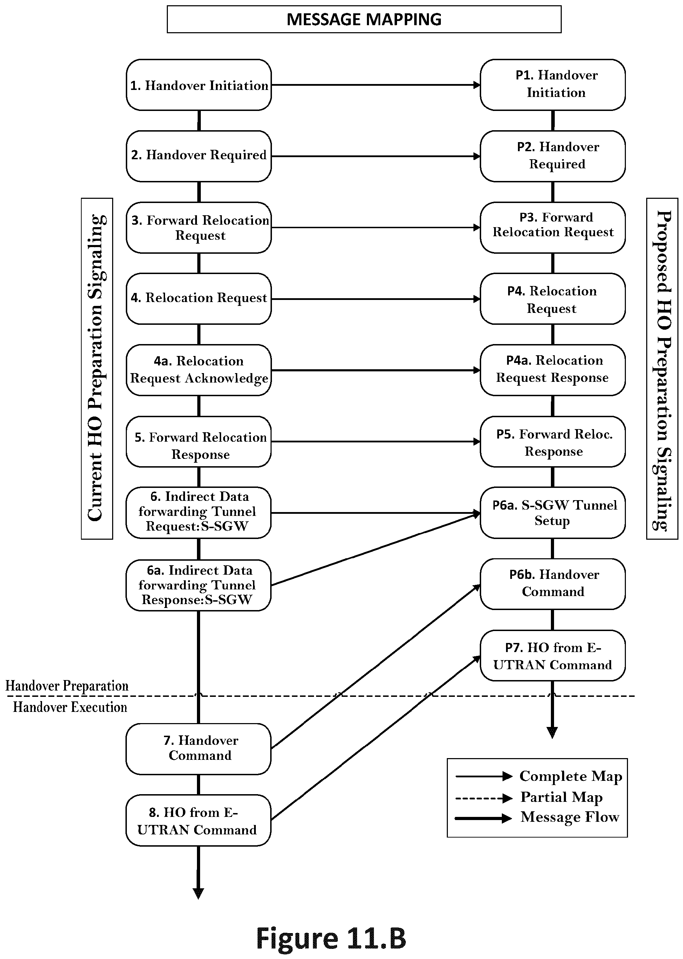

Figure 11.A is a schematic of the proposed signaling method for LTE to UMTS/2G without Target S-GW and Direct Tunnel (Inter-RAT HO).
Figure 11.B is a schematic of the proposed message mapping method for LTE to UMTS/2G without Target S-GW and Direct Tunnel (Inter-RAT HO).

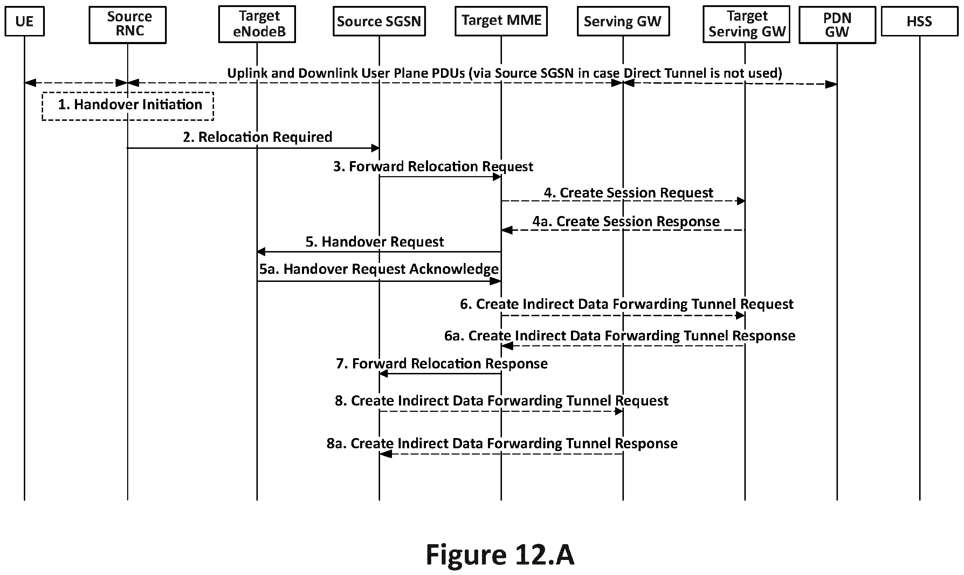

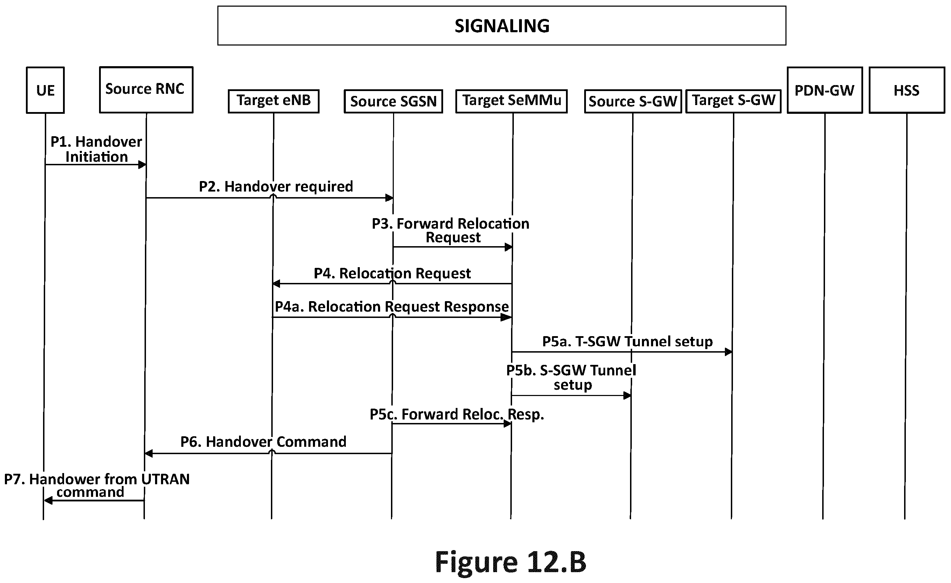

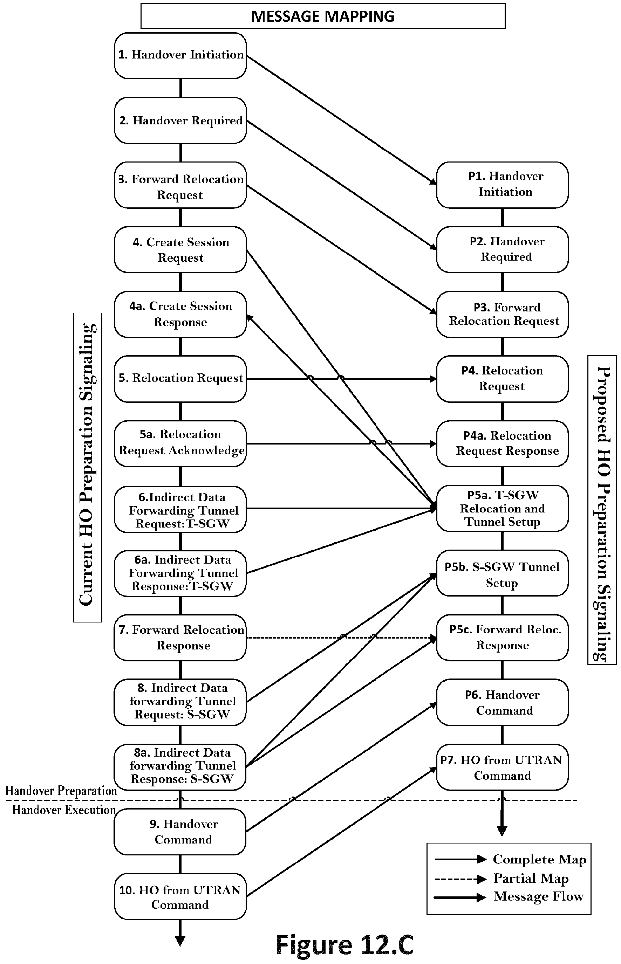

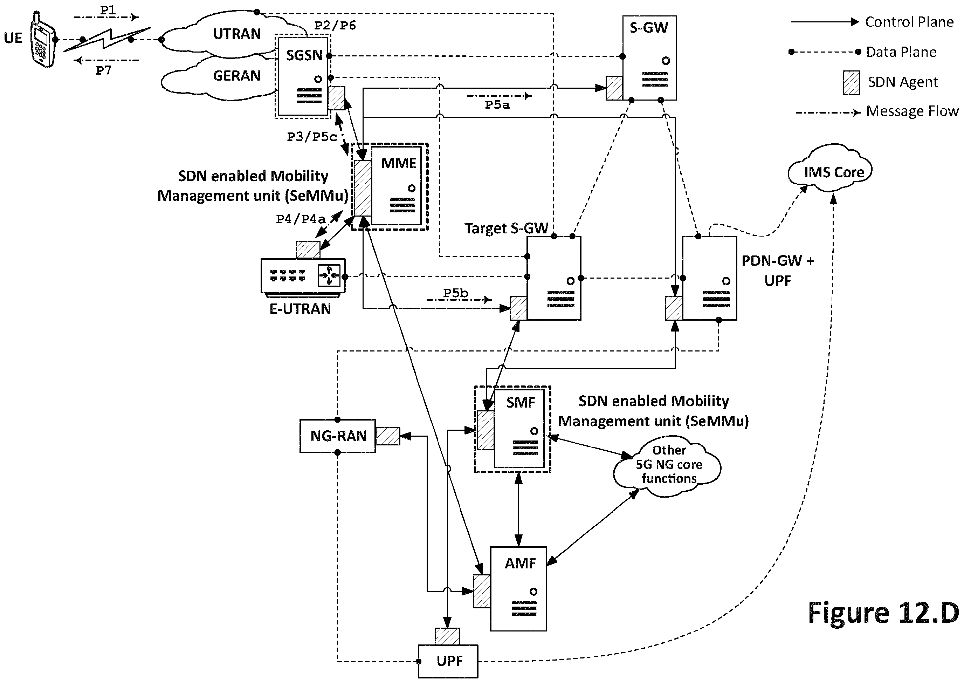

Figure 12.A is a schematic of the legacy method for cases 12-13 of UMTS/2G to LTE with Target S-GW and Indirect Tunnel (Inter-RAT HO).
Figure 12.B is a schematic of instead the proposed signaling method for UMTS/2G to LTE with Target S-GW and Indirect Tunnel (Inter-RAT HO).
Figure 12.C is a schematic of the proposed message mapping method for UMTS/2G to LTE with Target S-GW and Indirect Tunnel (Inter-RAT HO).
Figure 12.D is a block/component diagram of the system for implementing the method shown in FIG. 12.B.

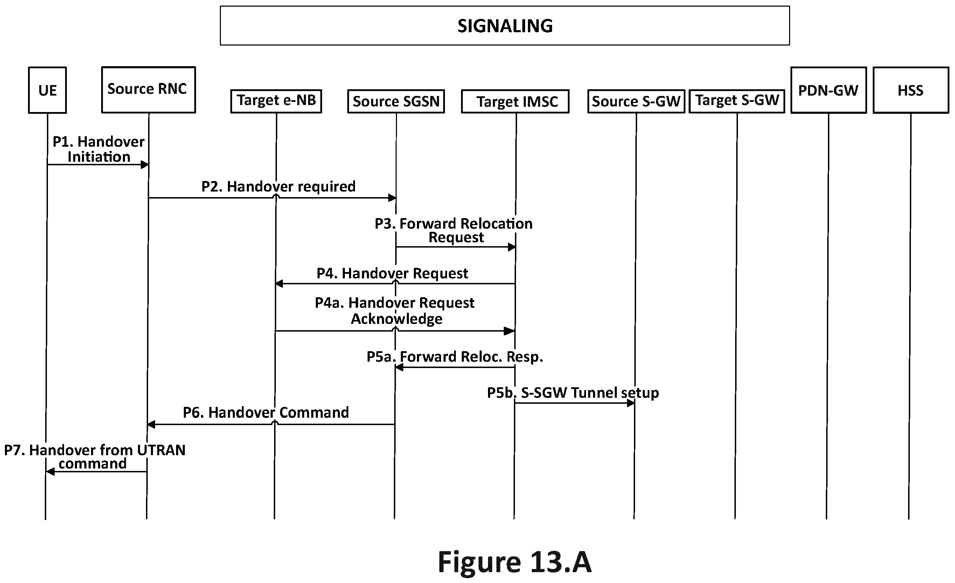

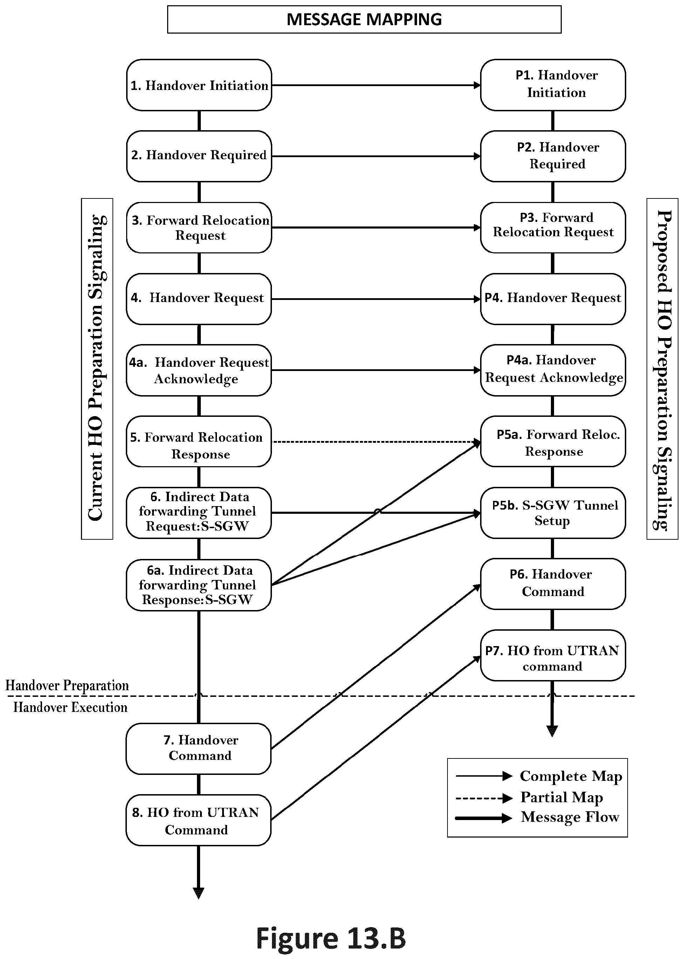

Figure 13.A is a schematic of the proposed signaling method for UMTS/2G to LTE without Target S-GW and Indirect Tunnel (Inter-RAT HO).
Figure 13.B is a schematic of the proposed message mapping method for UMTS/2G to LTE without Target S-GW and Indirect Tunnel (Inter-RAT HO).

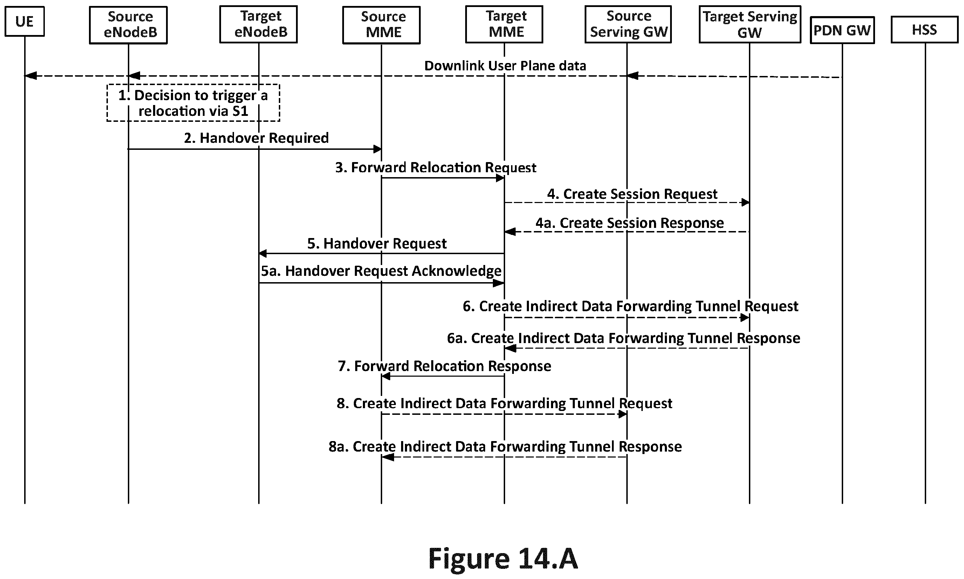

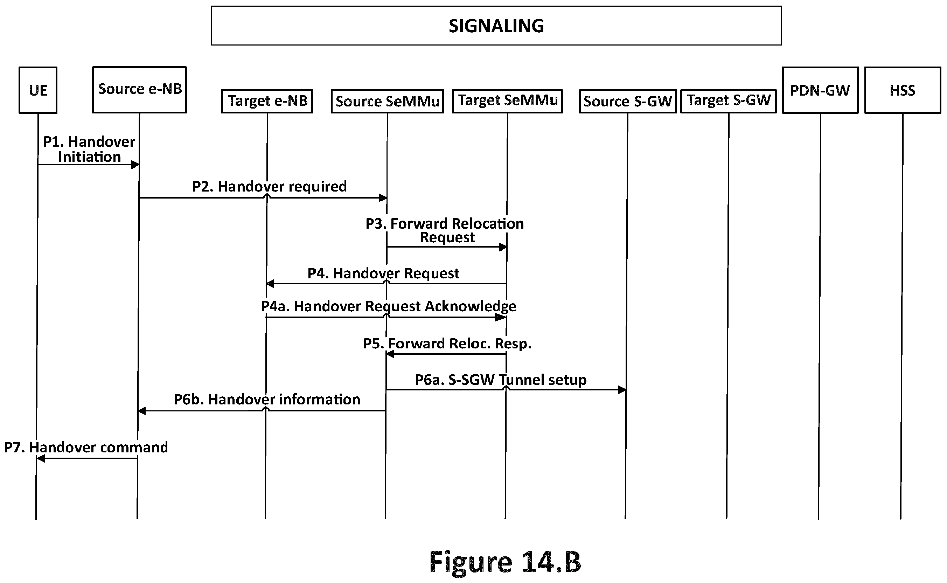

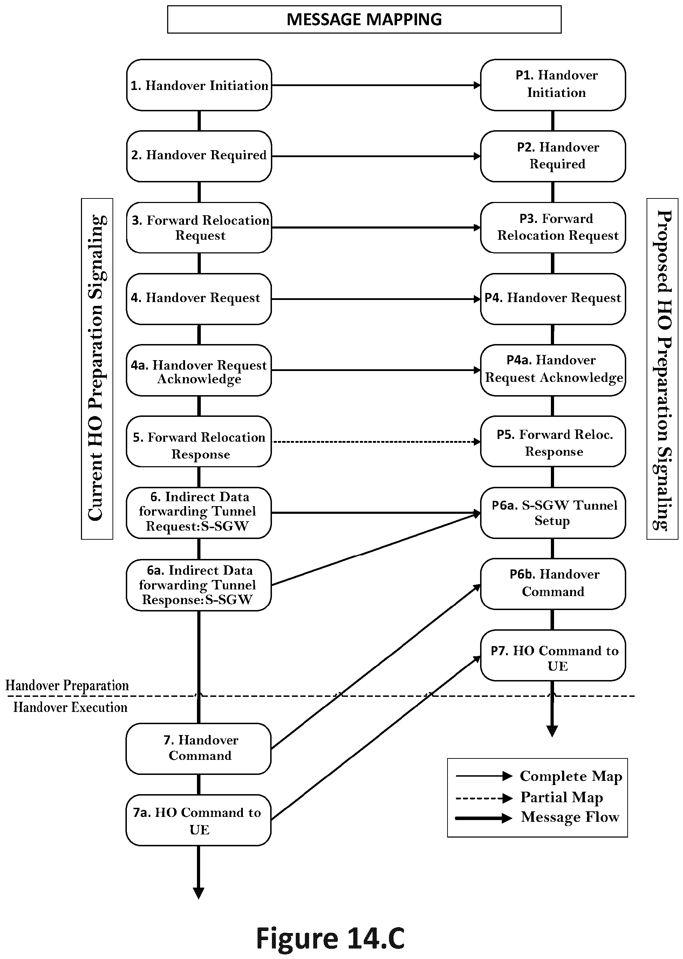

Figure 14.A is a schematic of the legacy method for cases 14 and 15 of LTE to LTE HO with Target SeMMu and without Target S-GW (Intra-RAT HO).
Figure 14.B is a schematic of the proposed signaling method for LTE to LTE HO with Target SeMMu and without Target S-GW (Intra-RAT HO).
Figure 14.C is a schematic of the proposed message mapping method for LTE to LTE HO with Target SeMMu and without Target S-GW (Intra-RAT HO).

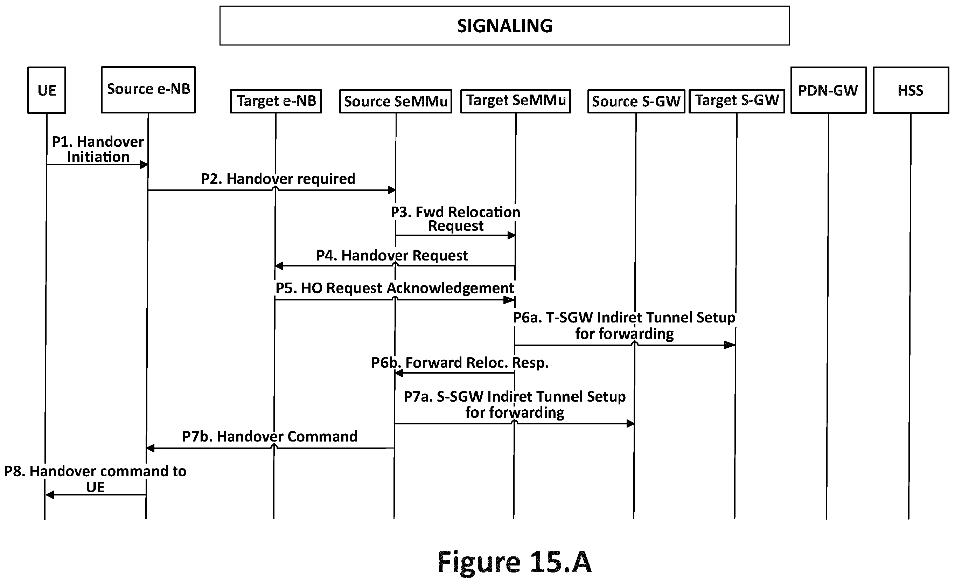

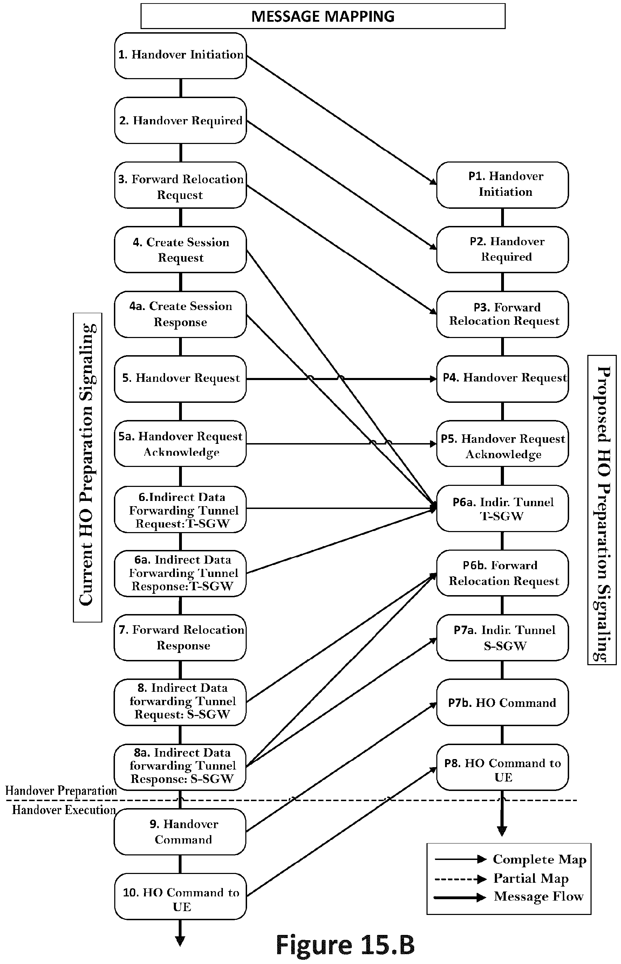

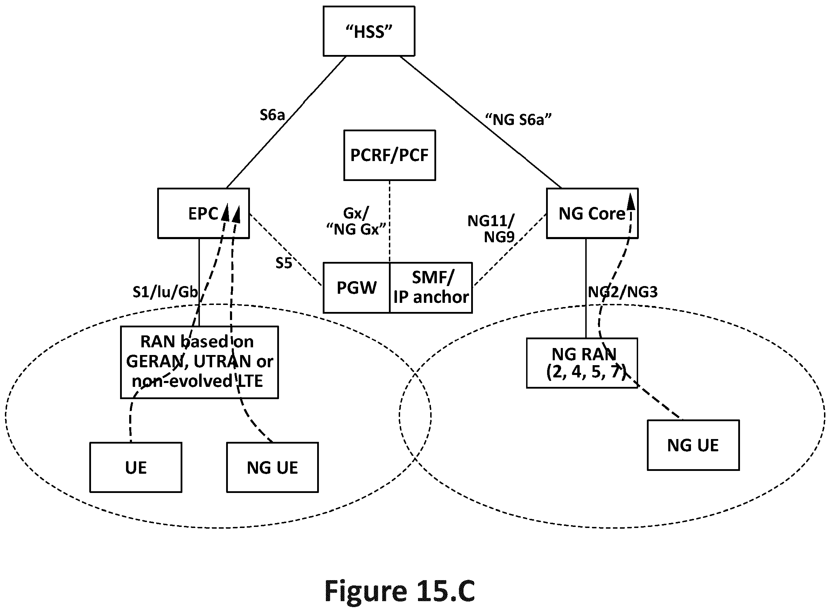

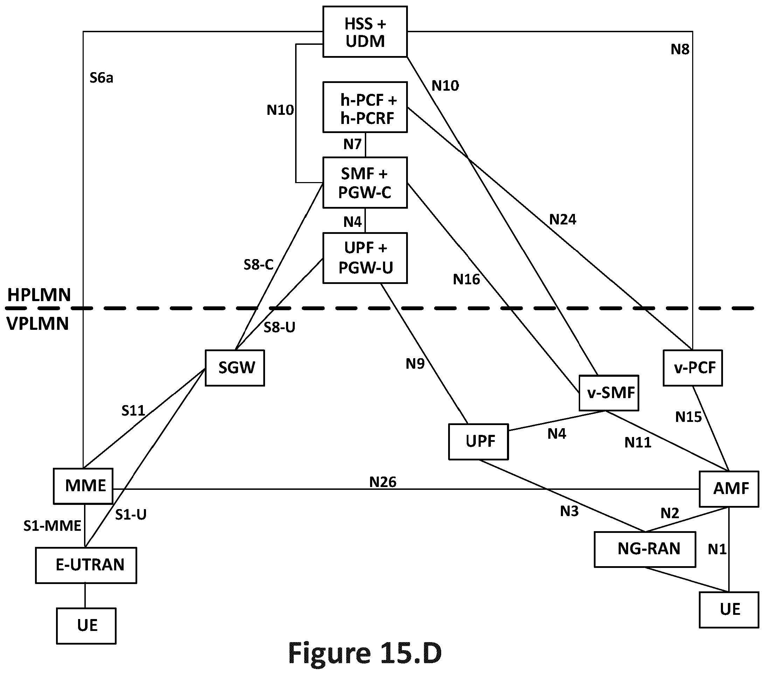

Figure 15.A is a schematic of the proposed signaling method for LTE to LTE HO with Target SeMMu and Target S-GW (Intra-RAT HO).
Figure 15.B is a schematic of the proposed message mapping method for LTE to LTE HO with Target SeMMu and Target S-GW (Intra-RAT HO).
Figure 15.C is a schematic of a Loose Interworking between GERAN/UTRAN via EPC to 5G NG core.
Figure 15.D is a schematic of an interworking between 5G NG core and EPC as proposed by 3GPP.

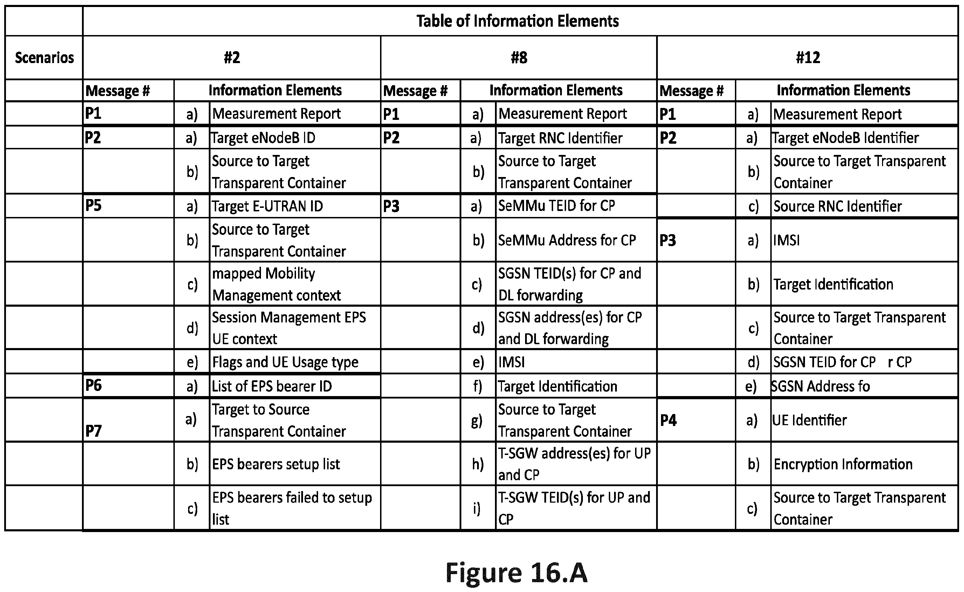

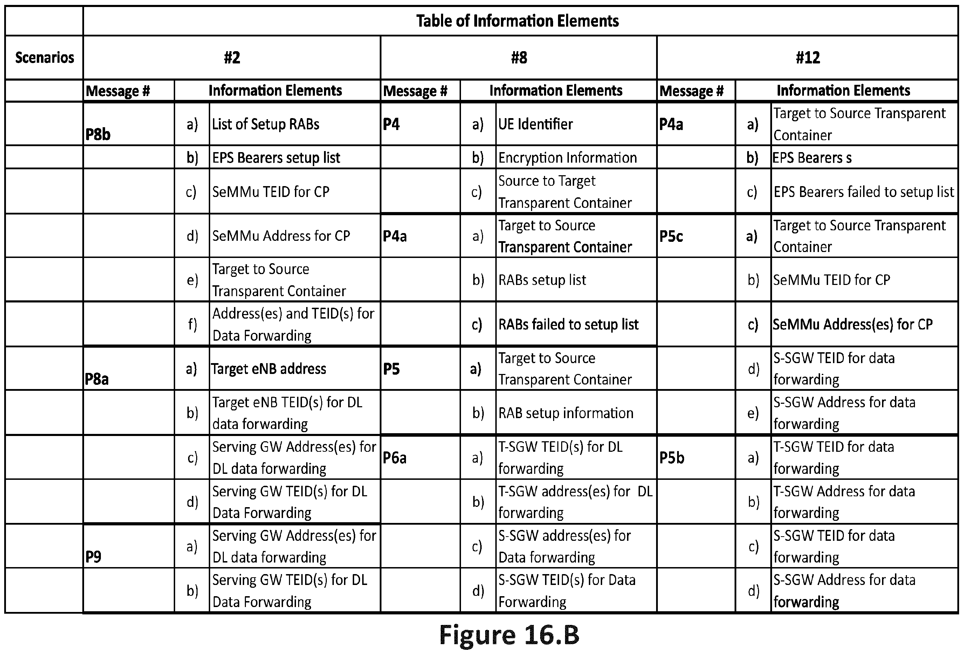

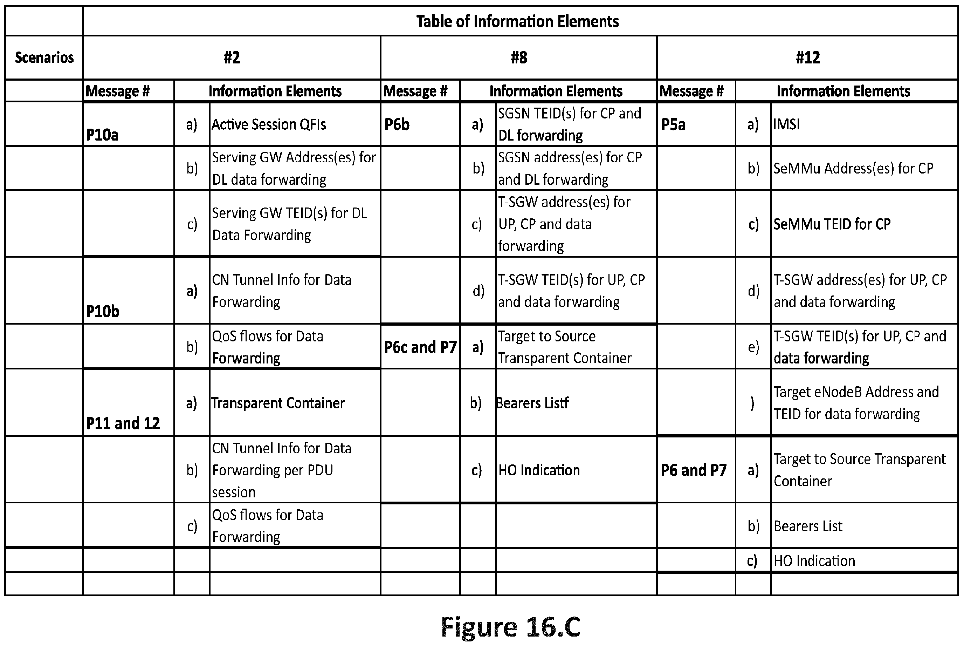

Figure 16.A is a table showing the equivalence of the signaling messages between the different scenarios throughout the message P1 to P7.
Figure 16.B is a table showing the equivalence of the signaling messages between the different scenarios throughout the message P8 and P9.
Figure 16.C is a table showing the equivalence of the signaling messages between the different scenarios throughout the message P10 to P12.

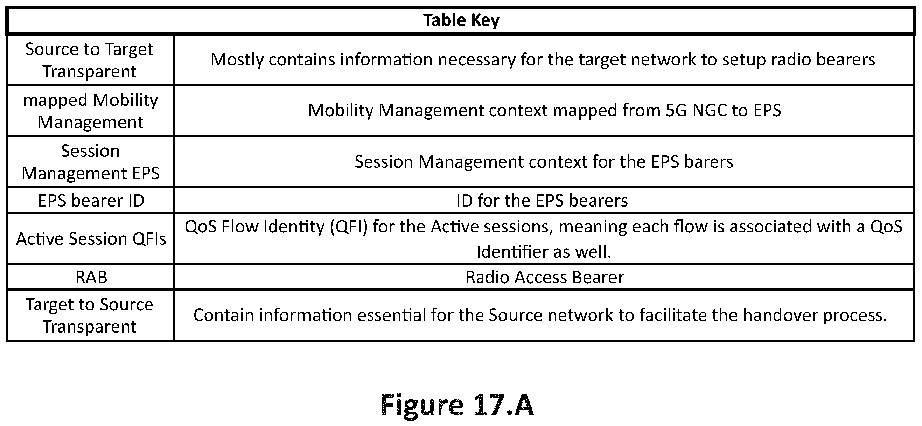

Figure 17.A explains the different concepts of Figures 16.A, 16.B and 16.C.

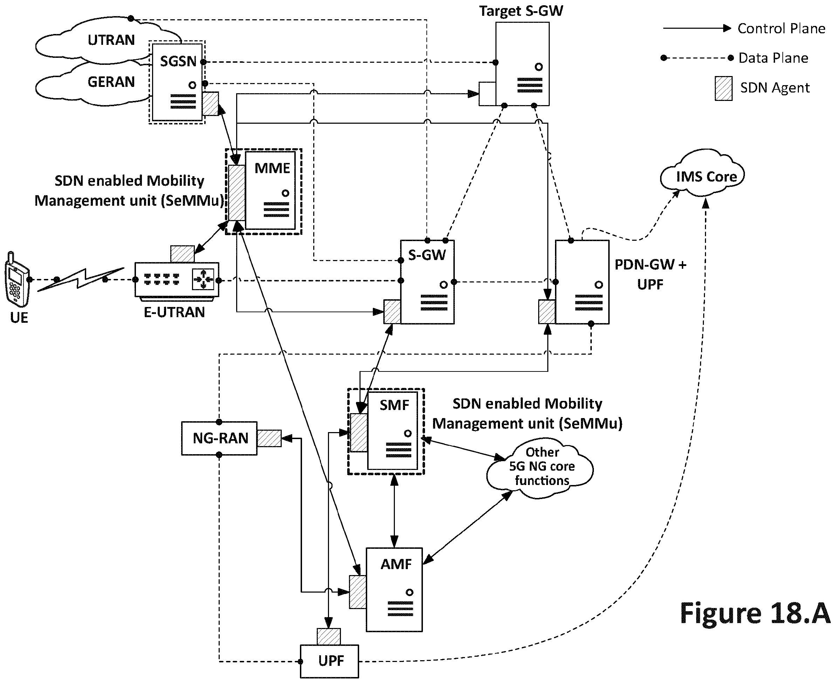

Figure 18. A shows a component diagram encompassing all the scenarios of previous figures 1 to 15.

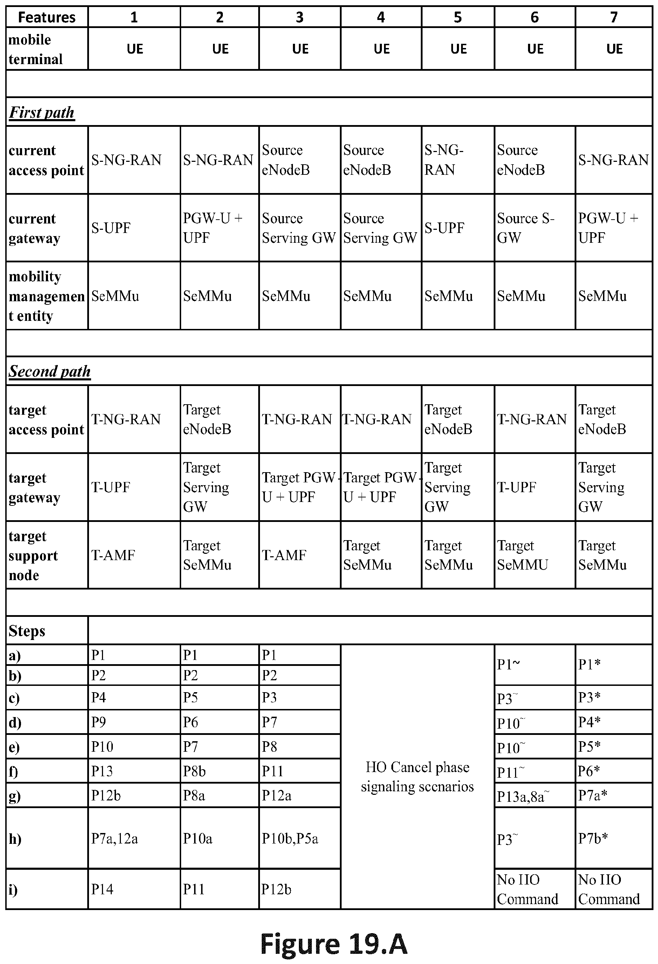

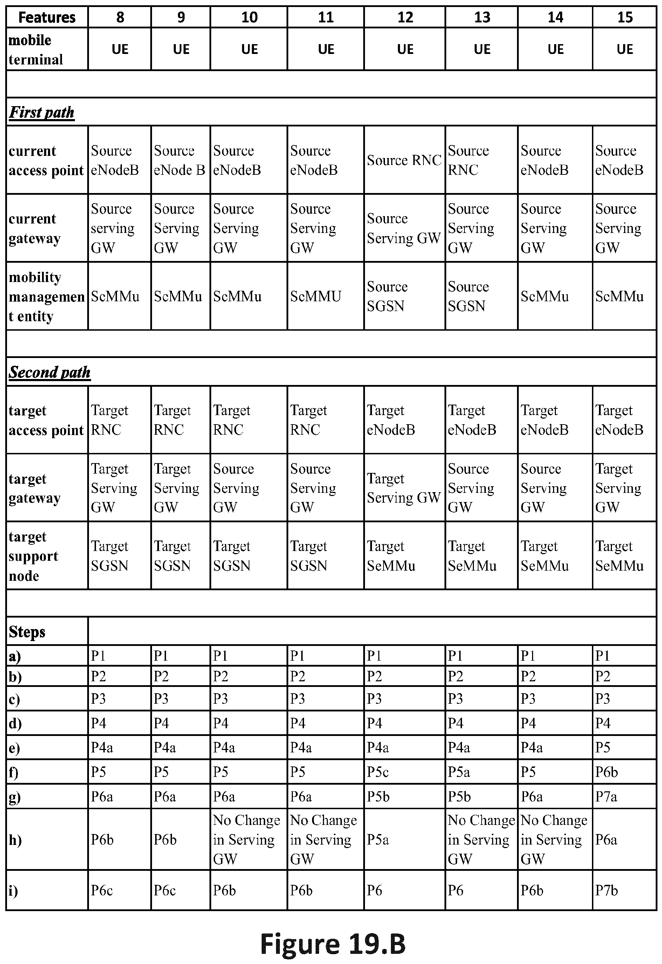

Figures 19.A and 19.B is a correspondence table between the steps claimed and the specific steps of each embodiment.

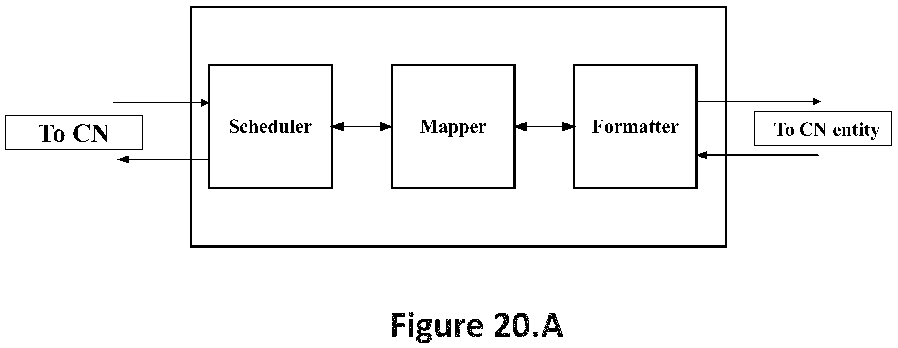

Figure 20.A shows a detailed diagram of the various functional blocks within the SDN agent of the SeMMu.

### DETAILED DESCRIPTION OF THE INVENTION

In cooperation with attached schematics, the technical contents and detailed description of the present invention are described thereinafter according to several preferable embodiments.

Firstly, we consider the general evolutionary architecture presented in figure 18.A. The invention here relates to a system that facilitates the execution of the method of this exemplary work, wherein we have a user with a mobile terminal UE. The UE is initially connected to a current access point, which may be the S-NG-RAN, E-UTRAN or RNC depending upon the wireless technology that it accesses. The presented system then consists of the current gateway to which the UE is current anchored at the core network, i.e., a PGW-U + UPF or a Source S-GW. Next, the architecture consists of a mobility management entity, namely the SeMMu, which in the EPS is the Mobility Management Entity (MME) combined with the Software Defined Networking (SDN) agent and in the 5G NGC it is the Session Management Function (SMF) coupled with the SDN agent. In the presented invention, there is a target support node that supports the source mobility management unit in coordinating the handover. The target support nodes are Target SeMMu, Target AMF, Target SGSN. The target support nodes are further connected to the target access points, i.e., Target eNodeB, Target RNC, Target NG-RAN. In addition, there are the target gateways to which the target access points and mobility management entity is connected. These target gateways are Target eNodeB, Target RNC and Target NG-RAN. Lastly, the UPF and PDN-GW + UPF are connected to the IMS core.

Given the above architecture, the SeMMu is configured to assign TEIDs and addresses to itself and and to the current access point S-NG-RAN, Source eNodeB, Source RNC , the target support node Target SeMMu, Target SGSN, T-AMF , the current gateway PGW-U + UPF, Source serving GW and the target gateway Target Serving GW, T-UPF, Target PGW-U + UPF. Additionally, the SeMMu is also configured to execute certain CP messages simultaneously to reduce the overall handover latency.

Therefore, the following general method, as shown in Figure 8A can be carried out. The corresponding steps involved are:
a) The UE sends a handover initiation, P1, message to the source access point;
b) Message P2, a handover requirement, is sent from the current access point S-NG-RAN, Source eNodeB, Source RNC to the mobility management entity SeMMu ;
c) Message P3, a resource allocation request and a tunnel setup message, is then sent from the mobility management entity SeMMu to a target support node Target SeMMu, Target SGSN, T-AMF of the target access point Target eNodeB, Target RNC, T-NG-RAN ;
d) Message P4, a relocation request, is sent from the target support node Target SeMMu, Target SGSN, T-AMF to the target access point Target eNodeB, Target RNC, T-NG-RAN ;
e) Message P4a, a relocation request acknowledge, is sent from the target access point Target eNodeB, Target RNC, T-NG-RAN to the target support node Target SeMMu, Target SGSN, T-AMF after the resources in the access network have been negotiated and agreed upon at the target network ;
f) Message P5, a relocation response from the target support node Target SeMMu, T-AMF, Target SGSN to the mobility management entity SeMMu ;
g) Message P6a, a tunnel setup message from the mobility management entity (SeMMu) to the current gateway (PGW-U + UPF, Source serving GW) is then sent;
h) Simultaneous to message P6a, message P6b, a relocation and tunnel setup message from mobility management entity (SeMMu) to the target gateway (Target Serving GW, T-UPF) is sent;
i) commanding handover from the mobility management entity (SeMMu) to the current access point (S-NG-RAN, Source eNodeB, Source RNC), message P6c is sent in parallel to message P6a and P6b.

Consequently, the present invention as defined in the independent claims, can be advantageously applied to many Handover scenarios, as will be evident with the following fifteen embodiments, each of them suitably illustrated.

It is pointed out that the description for the embodiment number eight is more detailed, such that it allows to fully understand the details of the invention.

Note that for each scenario the legacy method is illustrated as well, so that a straightforward comparison with the method herein proposed can be carried out.

After these descriptions of each of the scenarios, the comparative tables of figures 16.A, 16.B, 16.C, 17.A, 19.A and 19.B will be commented, which will allow to clearly appreciate the inventive concept common to all the embodiments.

### Embodiment 1. Inter NGRAN signaling (N2 based Handover)

In a first embodiment, related with Figure 1.B, a user switches a RAN attachment point within the 5G network. Such a handover is facilitated via the N2 interface, which may be termed as an equivalent to the S1 interface in the LTE-EPC. Thus, for the Inter NGRAN handover process via the N2 interface, the proposed signaling methodology, via the SeMMu, optimizes primarily the N4 session establishment process with the UPF. Note that, the UPF here is a data plane entity which is controlled via CP signaling through the SeMMu. And so, it is in this step that the TEIDs and addresses of the other CN entities involved during the handover process are assigned. Specifically, messages 6a and 6b are remapped to message P7a in the proposed signaling mechanism. Further, messages 11b and 11c are remapped to message P12a in the proposed strategy while, messages 11d and 11e are remapped to message P12b. The reason being, all of these messages involve a handshake wherein the TEIDs and addresses are being exchanged. However, SeMMu, as it has been defined, performs the tasks of allocating the TEIDs and addresses. And hence, these handshakes can be collapsed to just a single messages, as has been done above.

Next, owing to the SDN capabilities and centrally located nature, the SeMMu in the proposed signaling strategy, executes messages P7a and P7b simultaneously. Here by SDN capabilities and centrally located nature we refer to the fact that, the SeMMu has the ability to manage other CN entities and through its global view it can manage all the other CN entities that lie within its domain. And so, similarly, messages P12a, P12b and P12c are executed simultaneously by the SeMMu within the proposed signaling strategy.

### Embodiment 2. 5G core to EPS (with N26 interface)

In another embodiment, shown in Figure 2.B, a UE due to mobility switches from the 5G core to the EPS network. An important aspect of the 5G core to EPS (Evolved Packet System) handover is that, the proposed handover signaling executes the handover request and the handover request acknowledge (message# 6 and 7 in the legacy schematic, and message# P6 and P7 in the proposed signaling strategy diagram) before the session is established with the S-GW (create session request and create session response, i.e., message #4 and 5 in the legacy signaling diagram). This in essence accounts for the fact that if HO failure occurs, extra signaling messages to cancel the setup sessions are not required. It must be stated here that, such a process is adopted in all the discussed scenarios, thus helping in the optimization of the HO cancel/reject step and also enhancing the HO preparation phase signaling further in certain scenarios.

Next, messages that involve the exchange of TEID and addresses are remapped. Hence, messages 4 and 5 are remapped to message P8a. Further, message 10b in the legacy signaling is mapped to message P10a in the proposed signaling strategy.

Additionally, the SeMMu due to its SDN capabilities and central location, as discussed in Chapter 1, executes messages P8a and P8b simultaneously. Further, messages P10a and P10b are also executed simultaneously by the SeMMu.

### Embodiment 3. EPS to 5G core (with N26 interface)

In another embodiment, shown in Figure 3.B, user migrates from the EPS to the 5G core due to its mobility characteristics. In such a scenario, the handover signaling message handshakes 6 and 13 are compressed to just one-way messages P5a and P10b in the proposed signaling mechanism. These messages are the N4 session modification steps, wherein the TEID and address assignment in the proposed approach is done by the SeMMu. Additionally, the SeMMu, due to its SDN capabilities and centrally located nature, executes messages P5a and P5b simultaneously. The aforesaid capabilities have been elaborated in Embodiment 1. Next, messages P10a and P10b are executed simultaneously by the SeMMu at the target network side. At the source network side, messages P12a and P12b are executed simultaneously by the SeMMu.

### Embodiment 4. HO Cancel (EPS to 5G NGC)

In another embodiment, as can be seen in Figure 4.B, the invention focuses on the HO cancel procedure when a user is migrating from the EPS to the 5G core. Concretely, in this scenario even though the user is migrating from EPS to the 5G core, due to the lack of access network/core network resources or other factors, this migration might be rejected by the target network. Hence, for the handover cancel scenario, in the legacy signaling handover signaling there exist handshake procedures to undertake its execution. And so, through the SeMMu these handshake procedures are optimized wherein the handshake in message 4 is transformed such that the Delete Session Request and the Delete Indirect Forwarding Tunnel (message 8 in legacy signaling) are combined. Such a combination is possible since, both these messages aim at releasing any resources setup in the CN during the preparation phase. Further, the information required to execute legacy message 8 has no dependence on the information present in messages 4 and 5. In addition, the response message in the legacy message #4 is now executed as message #P5b in the proposed mechanism. Next, through the capabilities of the SeMMu, as discussed in Embodiment 1, message P5a and P5b are executed simultaneously. Similarly, the SeMMu also executes messages P7a and P7b simultaneously.

### Embodiment 5. HO Cancel (5G NGC to EPS)

In another embodiment, as shown in Figure 5.A, the scenario wherein the user attempts to migrate from 5G core network to the EPS is considered. However, due to certain factors, such as lack of network resources, this request might be rejected. Hence, for the handover cancel scenario, wherein the UE is moving from 5G NGC to EPS, the signaling strategy as proposed by 3GPP is similar to the one adopted for the scenario when the UE moves from EPS to 5G NGC. The message mapping is similar, with the exception that since the destination network is the EPS there are no UPFs involved. And so, message 4 is compressed to message P4a, while the indirect forwarding tunnel message for the EPS network (message #7) is remapped to messages P4c. Through the capabilities of SeMMu, as discussed in Embodiment 1, messages P4a, 4b and 4c are executed simultaneously in the target network. Since, within the source network the AMF handles the messaging, the HO cancel acknowledgement as well as the handshake for deleting the indirect forwarding tunnel are not optimized with the proposed mechanism. Hence, they are executed as messages P6 and P7 (it is a handshake).

### Embodiment 6. EPS to 5G core (without N26 interface)

In another embodiment, as shown in Figure 6.C, the user attaches to the 5G core from the EPS due to its mobility characteristic. In this given scenario, the UE has to perform a registration process with the target network without the N26 interface. Note that, the N26 interface, defined by 3GPP, between the AMF and the MME (SeMMu in the proposed approach) is absent. Thus, following the registration process, a UE requested PDU establishment procedure is performed. It is within this particular stage that we perform optimization via the SeMMu. The reason this step is focused upon is because, it is during this process the remaining PDU sessions in the EPS are handed over to the 5G core while preserving IP prefix/address. This is very critical for seamless mobility. Hence, the modify bearer request messages (10a-10b and 16a-16b) are remapped to messages P8a and P13a respectively. Further, via the SeMMu capabilities, discussed in Embodiment 1, messages P8a and P8b are executed simultaneously. Similarly, messages P13a and P13b are executed simultaneously. Note that P14 is only sent when the PDU session transfer fails, and P15 is used when session is IPv6 based and the configuration is specified to the UE via the SMF.

While not discussed here, the approach followed above can also be applied to other steps in the legacy process in the event inefficiency in the form of unnecessary handshakes or redundant transmission of IEs exists.

### Embodiment 7. 5G Core to EPS (without N26 interface)

In another embodiment, a scenario wherein a user handover's from 5G core to the EPS is considered. During this process the UE performs a UE requested PDN connectivity signaling. The SeMMu, through its capability SDN capability and central location as discussed in Embodiment 1, firstly parallelizes the execution of the create session request message to the SGW and PDN GW, i.e., messages 2a and 2b. Additionally, as can be seen in Figure 7.C, the response messages have been eliminated from the legacy signaling mechanism. Concretely, messages 2, 3, 5 and 6 are compressed to just messages P2a and P2b. This is so because, the unnecessary handshakes that involve the exchange of TEID(s) and address(es) are compressed as the SeMMu now allocates them. Next, the modify bearer messages are transformed such that instead of a handshake with four messages (13,13a,13b and 14), they are compressed to messages P7a and P7b. These messages with the assistance of the SeMMu capabilities are executed simultaneously.

### Embodiment 8. LTE to UMTS/2G HO with Target S-GW and Indirect Tunnel (Inter-RAT)

The number of messages required to perform handover (HO) preparation is reduced to 10 from the 14 involved in the legacy mechanism. Note that the two messages from the handover (HO) execution phase in the legacy signaling mechanism, i.e., Handover command and handover (HO) from E- UTRAN Command, have also been considered as part of the handover (HO) preparation phase. The reason being, until the handover (HO) parameters are acquired by a User Equipment (UE), which is sent specifically in the aforesaid commands from the Core Network (CN), the handover (HO), from the user point of view, is still in preparatory phase.

In this embodiment, it is noted that Handover Initiation, Handover Required, Handover Command and HO from E-UTRAN Command are mapped as is from the legacy messages; in other words, the Information Elements (lEs) for the aforesaid messages are exactly as they are in the legacy procedure. Additionally, the Relocation Request and Relocation Request Acknowledge messages, i.e., legacy messages 5 and 5a in Figure 8.A, remain unaltered as they were already prepared for the SeMMu; but Resource Allocation Request + Tunnel Setup (P3a), Source S-GW Tunnel Setup (P3b), Target S-GW Relocation and Tunnel Setup (P3c) and Forward Relocation Response (P5) messages are altered as shown in the signalling mechanism depicted in figure 4:
- Resource Allocation Request + Tunnel Setup (P3): This message is a direct descendent of the Forward Relocation Requests (legacy message 3, figure 3) from the legacy signaling mechanism. Hence, all the lEs from the legacy mechanism are mapped to message P3a of the proposed mechanism. Since the SeMMu is connected to all the other CN entities, through message P3 it can thus allocate the SGSN its TEID and address for the CP (legacy message 4), the T-SGW addresses and TEIDs (legacy message 4a), and the SGSN TEID and address for downlink (DL) data forwarding (legacy message 6).
- Source S-GW Tunnel Setup (P6a): The Source S-GW, in the event of an S-GW relocation, will need to tunnel the DL packets to the T-SGW. This will require the S- SGW to know the TEID and address of the T-SGW as well as it will have to allocate TEIDs and addresses for receiving DL packets from the eNB. This information is obtained through the handshake involving legacy messages 8 and 8a. Given the SeMMu's global knowledge and capabilities in allocating and informing CN entities of their TEIDs and transport layer addresses, the lEs of these two messages are henceforth mapped to message P6a of the proposed signalling mechanism.
- Target S-GW Relocation and Tunnel Setup (P6b): Message P6b is composed of the lEs from legacy messages 4, 4a, 6 and 6a of the legacy signalling mechanism. Since the SeMMu has the global knowledge of the allocated addresses and TEIDs for each of the CN entities, it is possible for it to inform the T-SGW about the TEIDs and addresses of the SGSN without the entities having to perform a handshake.
- Forward Relocation Response (P5): This message is a direct descendent of the Forward Relocation Response (legacy message 7) from the legacy signalling mechanism. The CN entities involved in this message are the Target SGSN and the SeMMu. Whilst, most of the lEs are carried over to message P5 in the proposed signalling mechanism, IEs such as the SGSN TEID and addresses need not be transferred to the SeMMu. This is so because the SeMMu itself is responsible for the allocation of the TEIDs and addresses, and hence, it has the corresponding knowledge.

From figure 5, it can be observed that the Handover Initiation, Handover Required, Handover Command and HO from E-UTRAN command sequence and operation remain unaltered, as mentioned earlier. However, messages P6a, P6b and P6c, since they are executed by the SeMMu, can be implemented in parallel. This results in an increased latency reduction. Further, the Relocation Request and Relocation Request Acknowledge remain unaltered in their operation. However, in the proposed mechanism they are numbers P4 and P4a (figure 4) respectively, whilst in the legacy scheme they are numbers 5 and 5a (figure 3). Next, the modified Forward Relocation Response message is sent to the SeMMu, which combines this with the TEID and addresses of the S-SGW and SGSN that it has already, and forwards it to the eNB as the Handover Command. Lastly, the eNB sends the HO from E-UTRAN command to the UE to end the HO preparation phase. Note that the presented handover preparation phase is designed with an awareness of the possibility of a handover failure (given certain conditions are satisfied for the same). Hence, the specified preparation phase signalling also helps minimize the signalling in the event of a handover failure.

### Embodiment 9. LTE to UMTS/2G HO with Target S-GW and Direct Tunnel (Inter-RAT)

In another embodiment, it is considered that the UE is transitioning from LTE to UMTS/2G network. Here, during the handover the S-GW to which the UE is attached to is changed, and direct tunneling (meaning data is forwarded directly from Target SGW to the RNC-nodeB) exists. From the diagram of Figure 9.A, it can be observed that messages 3, 4, 4a are mapped to message P6a. Further, messages 8 and 8a are mapped to message P3b. Such a mapping is provisioned as it helps to eliminate the handshakes. Further, since the SeMMu is capable to allocate address(es) and TEID(s), the aforesaid mapping can be executed. Additionally, messages P8 and P8a are mapped to message P6b. Next, utilizing the SDN capabilities of SeMMu, messages P6a, P6b and P6c are executed simultaneously.

### Embodiment 10. LTE to UMTS/2G HO without Target S-GW and Indirect Tunnel (Inter-RAT)

Here, the UE is transitioning from LTE to UMTS/2G network is considered. Here, during the handover the S-GW to which the UE is attached to is not changed, and indirect tunneling (meaning data is first forwarded to the SGSN and then to the RNC-nodeB instead of having a direct path from SGW to the RNC-nodeB) exists. From the schematic of Figure 10.A, message P6a is developed by mapping messages 6 and 6a from the legacy signaling mechanism. Again, such a mapping is feasible since, the TEID(s) and addresses(s) of the S-GW and the Target SGSN that are exchanged within these messages can be streamlined into a single message with the help of the SeMMu. Lastly, utilizing the SDN capabilities of SeMMu, discussed in Embodiment 1, messages P6a and P6b are executed simultaneously.

### Embodiment 11. LTE to UMTS/2G without Target S-GW and Direct Tunnel (Inter-RAT HO)

In a different embodiment, it is considered that the UE is transitioning from LTE to UMTS/2G network. Here, during the handover the S-GW to which the UE is attached to is not changed, and direct tunneling (meaning data is forwarded directly from SGW to the RNC-nodeB) exists. From the schematic of Figure 11.A, and in a process similar to Embodiment 10, it can be observed that messages 6 and 6a are remapped to message P6a. Further, via the SeMMu capabilities messages P6a and P6b are executed simultaneously.

### Embodiment 12. UMTS/2G to LTE with Target S-GW and Indirect Tunnel (Inter-RAT HO)

In another embodiment, it is considered that the UE is transitioning from UMTS/2G to LTE network. Here, during the handover the S-GW to which the UE is attached to is changed, and indirect tunneling exists. From the Figure 12.B, and in a process similar to Embodiment 8, messages 4, 4a, 6 and 6a are mapped to message 5a. Next, message 8 and 8a are mapped to message P5b in the proposed mechanism. Additionally, the messages 7 and 8a are mapped to message P5c. Next, utilizing the SeMMu capabilities, messages P5a, P5b and P5c are executed simultaneously.

### Embodiment 13. UMTS/2G to LTE without Target S-GW and Indirect Tunnel (Inter-RAT HO)

In another embodiment, it is considered that the UE is transitioning from UMTS/2G to LTE network. Here, during the handover the S-GW to which the UE is attached to is not changed, and indirect tunneling exists. From Figure 13.A, messages 5 and 6a are mapped to message 5a. Next, message 6 and 6a are mapped to message P5b in the proposed mechanism. Additionally, the messages 7 and 8a are mapped to message P5c. The message mapping process follows the same principle as in previous chapters, i.e., the message mapping is done so as to relieve the network of the unnecessary handshakes and redundant transfer of IEs. Further, through the ability of SeMMu to allocate TEID(s) and address(es) such a process can be realized feasibly. Next, utilizing the SeMMu capabilities, i.e., its SDN capabilities and central location as discussed in Embodiment 1, messages P5a and 5b are executed simultaneously.

### Embodiment 14. LTE to LTE HO with Target SeMMu and without Target S-GW (Intra-RAT HO)

In another embodiment, it is considered that the UE is handing over within the LTE network, however during the handover the SeMMu is changed whilst the S-GW is not. Here, messages 6 and 6a are mapped to the message P6a. Since, this message involves the exchange of TEIDs and addresses, it has been optimized by the SeMMu. Further, utilizing the SeMMu capabilities, messages P6a and P6b are executed simultaneously.

### Embodiment 15. LTE to LTE HO with Target SeMMu and Target S-GW (Intra-RAT HO)

In this embodiment, the UE is handing over within the LTE network, however during the handover both the SeMMu and the S-GW are changed. Referring to Figure 15.A, it can be observed that message P6a is formulated by mapping the Information Elements (IEs) from messages 4, 4a,6 and 6a of the legacy message ensemble. Further message P7a is formulated by mapping to it messages 8 and 8a from the legacy mechanism. Lastly, utilizing the SeMMu properties in both the target as well as the source network, messages P6a-6b and P7a-7b are executed simultaneously.

Next through tables 16A to 16C the various Information Elements that the messages of the three representative handover scenarios are composed off are summarized. As can be seen from tables 16A to 16C the TEID(s) and Address(es) of the CP entities such as SGSN, T-SGW, S-GW, SeMMu, eNodeB are assigned in an optimal procedure without the requirement of the handshake. The SeMMu packs the address(es) and TEID(s) in the handshake messages into a single message, such as that seen in message P3 of scenario #8, where the SeMMu TEID and address are combined with the SGSN and T-SGW address(es) and TEID(s). The detailed list of the information elements provides an insight into the composition and structure of each message of the methods defined in this exemplary work. It also establishes the applicability of the inventive framework presented in this exemplary work towards diverse handover scenarios, as the representative scenarios detailed in tables 16A, 16B and 16C are 5G NGC to EPS handover, LTE-EPC to UMTS/2G handover and UMTS/2G to LTE-EPC handover. Further, we establish from tables 19A and 19B, the equivalence of the various handover scenarios that have been explored based on the proposed messaging mechanism. The exploration into these scenarios is not limiting to our work and hence, the methodology can be implemented to other scenarios as well. The equivalence established here helps to establish the fact that the inventive concept of this work can be applied uniformly across the various diverse handover scenarios across different network domains and achieve benefits for the handover management process. The equivalence table of 19A and 19B thus enables utilizing scenario #8 as a reference scenario and extend the same concept across the various scenarios with the SeMMu facilitating in the execution of the inventive message mapping and parallel execution of CP handover messages.

### Formatter block

AS shown in Figure 20.A, the Software Defined Networking (SDN) agent connecting the core network (CN) to elements of the communications network, comprises a bidirectionally connected scheduler block connected to the Core Network (CN) of the communications network through a communication interface through which the Software Defined Networking (SDN) agent transmits/receives data. The SDN formatter block is connected to a Core Network Entity of the communications network through a bidirectional communication interface for exchanging the Control Plane (CP) information packets, adapted to transform the format of the incoming and outgoing messages such that they are understood at the Software Defined Networking (SDN) agent and the Core Network Entity, respectively. And lastly, a mapper block, connected to both the formatter block and the scheduler block, is configured to map addresses of messages coming from the scheduler block.

The Software Defined Networking (SDN) agent is connected to the Mobility Management Entity (MME) through a MME formatter block of the Mobility Management Entity (MME). The MME formatter block of the Mobility Management Entity (MME) is configured to extract message payloads from the incoming messages, as well as to pack the outgoing messages into a specific format when sending to the Software Defined Networking (SDN) agent.

The MME formatter block of the Mobility Management Entity (MME) is also connected to the message analyzer-generator block which is configured to extract Information Elements (lEs) from the payload, and is also configured to inspect the Information Elements (lEs) and determine if a handover is possible or not. Further, based on the received Information Elements (lEs) the message analyzer-generator decideswhich message needs to be transmitted next. The message analyzer-generator block thus generates Tunnel Endpoint Identifiers (TEIDs) and the transport layer addresses of the CN entities as well as the other Information elements and packs them into the required message. This message is then passed to the formatter block, which then packs it into the right format discernible by the SDN agent.

### Performance of the methods and associated systems according to the present invention

The methods and system presented in this work have been evaluated over multiple 3GPP scenarios encompassing the latest 5G network scenarios as well. The evaluation considered network operator data from operators in Japan and Europe. Further, these network operator data were utilized to compute the latency, transmission cost and processing cost. The analysis involved comparison with the legacy method. The comparative analysis shows that the proposed mechanisms presents upto 48.83% and atleast 20% improvement for latency when the handover is between LTE-EPC and UMTS/2G for the Japanese operator, while for the European operator it varies from 8.33% to 28.64%. This also highlights the dependence on the network operator deployment as it governs the individual link delays, which then governs the delay for a message to go from one CN entity to other. Further, for the 5G network the reduction in latency varies from 24.42% to 58.82% for all the considered 3GPP HO scenarios. Note that the HO scenarios which involve a selection of the target gateway have the highest improvement as the number of handshakes required when changing a gateway is more, and hence, those scenarios present more avenues for improvement.

Next, for the transmission cost analysis, the pattern for benefits obtained is the same. For the transmission cost, the improvement during the HOs between LTE-EPC and UMTS/2G as well as for the Intra-RAT LTE HO scenarios ranges from 9.74% to up to 40%. Additionally for the 5G network, the improvements obtained can be quantified as being between 16.39% and 34.40%. Additionally, for the processing cost analysis, the benefits for the handover scenarios between LTE and UMTS/2G networks is between 10% and 28.57%, while that for the handover scenarios involving the 5G networks is between 10% and 27.78%.

Further, the performance of the HO rejection phase signalling as well as the rejection phase signalling resulting from the HO failure aware HO preparation signalling has been analysed too. The further enhancement to the signalling results in the fact that while the original strategy would lead to a degraded performance for scenario #10, the added enhancement alleviates this issue. Consequently, with the additional enhancement, the HO rejection phase signalling is further improved by 10.07%, while the improvements within the HO preparation phase due to the handover failure aware operations ranges upto 9.92%.

### REFERENCES

[1] I. F. Akyildiz, S. Nie, S.-C. Lin, and M. Chandrasekaran, "5G roadmap: 10 key enabling technologies," Comput. Networks, vol. 106, pp. 17-48, Sep. 2016.
[2] N. Bhushan et al., "Network densification: The dominant theme for wireless evolution into 5G," IEEE Commun. Mag., vol. 52, no. 2, pp. 82-89, Feb. 2014.
[3] J. Kim, D. Kim, and S. Choi, "3GPP SA2 architecture and functions for 5G mobile communication system," ICT Express, vol. 3, no. 1, pp. 1-8, 2017.
[4] A. Jain, E. Lopez-Aguilera, and I. Demirkol, "Mobility Management as a Service for 5G Networks," IEEE ISWCS 2017 Work., pp. 1-6, Aug. 2017. [Online]. Available: http://arxiv.org/abs/1705.09101
[5] D. A. Classen and L. Wang, "Seamless Relocation of a Mobile Terminal in a Wireless Network," US 2017/0230877 A1, 2016.
[6] M. Lu, L. Zhaoming, W. Xiangming, W. Luhan, Z. Wei, L. Weiyu, G. Wanqing, "SDN-based mobility management method", 2017.
[7] J. Costa-Requena, J. Llorente Santos, J. Manner, and R. Kantola, Enhanced Mobility Management," US 2017/0041824 A1, 2015.
[8] J. S. Thainesh, N. Wang, and R. Tafazolli, "Reduction of core network signalling overhead in cluster based LTE small cell networks," 2015 IEEE 20th Int. Work. Comput. Aided Model. Des. Commun. Links Networks, CAMAD 2015, pp. 226-230, 2016.
[9] J. Prados-Garzon, O. Adamuz-Hinojosa, P. Ameigeiras, J. J. Ramos-Munoz, P. Andres-Maldonado, and J. M. Lopez-Soler, "Handover implementation in a 5G SDN-based mobile network architecture," IEEE Int. Symp. Pers. Indoor Mob. Radio Commun. PIMRC, 2016.
[10] V. Sharma, F. Song, I. You, H.C. Chao, Efficient Management and Fast Handovers in Software Defined Wireless Networks Using UAVs, IEEE Netw. 31 (2017) 78-85. doi:10.1109/MNET.2017.1700003.
[11] D. Battulga, J. Ankhzaya, B. Ankhbayar, U. Ganbayar, S. Sh, Handover Management for Distributed Mobility Management in SDN-based Mobile Networks, ITNAC 2017. (2017).
[12] F. Meneses, C. Guimares, D. Corujo, R.L. Aguiar, SDN-based Mobility Management: Handover Performance Impact in Constrained Devices, in: 2018 9th IFIP Int. Conf. New Technol. Mobil. Secur., IEEE, 2018: pp. 1-5. doi:1 0.11 09/NTMS.2018.8328716.
[13] F. Eichhorn, M. Corici, T. Magedanz, P. Du, Y. Kiriha, A. Nakao, SDN enhancements for the sliced, deep programmable 5G core, in: 2017 13th Int. Conf. Netw. Serv. Manag., IEEE, 2017: pp. 1-4. doi:10.23919/CNSM.2017.8256006.
[14] A.M. Nayak, P. Jha, A. Karandikar, A Centralized SDN Architecture for the 5G Cellular Network, (2018). http://arxiv.org/abs/1801.03824.

## Claims

1. - A handover method where the data path between a mobile terminal, UE, and the source network is changed from a first path comprising:
a downlink/ uplink connection between the UE and a current access point being a S-NG- RAN or a Source eNodeB or a Source RNC;
a connection between the current access point being a S-NG-RAN or a Source eNodeB or a Source RNC, and a current gateway being a PGW-U + UPF or a Source serving GW; and
the current access point being a S-NG-RAN or a Source eNodeB or a Source RNC and the current gateway being a PGW-U + UPF or a Source serving GW being connected to a mobility management entity, SeMMu;
to a target network with a second path comprising:
a downlink/ uplink connection between the UE and a target access point being a Target eNodeB or a Target RNC or a T-NG-RAN; and
a connection between the target access point being a Target eNodeB or a Target RNC or a T-NG- RAN, and a target gateway being a Target Serving GW or a T-UPF or a Target PGW-U + UPF; and
where the SeMMu is connected to the current access point being a S-NG-RAN or a Source eNodeB or a Source RNC, a target support node being a Target SeMMu or a Target SGSN or a T-AMF, the current gateway being a PGW-U + UPF or a Source serving GW and the target gateway being a Target Serving GW or a T-UPF or a Target PGW-U + UPF;
wherein the method comprises the following steps:
a) handover initiation (P1 );
b) sending (P2) of a handover requirement from the current access point being a S-NG-RAN or a Source eNodeB or a Source RNC to the SeMMu;
c) sending (P3) a resource allocation request and a tunnel setup message from the SeMMu to the target support node being a Target SeMMu or a Target SGSN or a T-AMF of the target access point being a Target eNodeB or a Target RNC or a T-NG-RAN;
d) sending (P4) a relocation request from the target support node being a Target SeMMu or a Target SGSN or a T-AMF, to the target access point being a Target eNodeB or a Target RNC or a T- NG-RAN;
e) sending (P4a) a relocation request acknowledge from the target access point being a Target eNodeB or a Target RNC or a T-NG-RAN, to the target support node being a Target SeMMu or a Target SGSN or a T-AMF;
f) forwarding (P5) a relocation response from the target support node being a Target SeMMu or a Target SGSN or a T-AMF to the SeMMu;
g) sending (P6a) a tunnel setup message from the SeMMu to the current gateway being a PGW-U + UPF or a Source serving GW);
h) sending (P6b) a relocation and tunnel setup message from the SeMMu to the target gateway being a Target Serving GW or a T-UPF);
i) commanding (P6c) handover from the SeMMu to the current access point being a S-NG- RAN or a Source eNodeB or a Source RNC;
wherein step h) takes place after step f).

2. - The handover method according to claim 1 , wherein the SeMMu sends (P6a, P6b) the tunnel setup message and the relocation and tunnel setup message in parallel.

3. - The handover method according to claim 2, wherein the SeMMu sends the handover command (P6c) in parallel to the sending (P6a, P6b) of the tunnel setup message and the relocation and tunnel setup message.

4. - The handover method according to any of claims 1 -3, wherein:
step d) takes place after step c), and the target support node being a Target SeMMu or a Target SGSN or a T-AMF does not receive a message relating to the handover from the target gateway being a Target Serving GW or a T-UPF between steps c) and d); and
step f) takes place after step e), and the target support node being a Target SeMMu or a Target SGSN or a T-AMF does not receive a message relating to the handover from the target gateway being a Target Serving GW or a T-UPF between steps e) and f).

5. - The handover method according to any of claims 1 -4, wherein:
handover signalling messages of steps b) and f) are received by a Software Defined Networking, SDN, agent of the SeMMu, wherein a core network, CN, entity of the SeMMu is a Mobility Management Entity, MME, in a 4G/3G core network, and wherein the SeMMu includes a Session Management Function, SMF, in a 5G core;
handover signalling messages of steps c) and e) are received by a Software Defined Networking, SDN, agent of the target support node being a Target SeMMu or a Target SGSN or a T-AMF;
the handover signalling messages are updated by mapping, by respective mappers of the SeMMu and the target support node being a Target SeMMu or a Target SGSN or a T-AMF, SDN addresses of source and destination CN entities included in the messages to the physical network source and destination addresses of the CN entities;
the handover signalling message is updated by transforming, by respective formatters of the SeMMu and the target support node being a Target SeMMu or a Target SGSN or a T-AMF, an SDN message format thereof to a message format of a CN entity to receive the message;
the CN entity of the SeMMu and a CN entity of the target support node being a Target SeMMu or a Target SGSN or a T-AMF processes each transformed handover signalling message to generate one or more messages for other CN entities;
the processing of the handover signalling messages involving: processing of Information Elements, IEs, included in the messages, determination of parallel information transfer, parallel information transfer being a process for transferring multiple handover signalling messages to other CN entities by sending messages without waiting for a response to a sent message before sending a further message, and mapping IEs to message ensembles;
the SeMMu and the target support node being a Target SeMMu or a Target SGSN or a T-AMF generate requests for parallel transmission of handover signalling messages;
handover signalling messages of steps d), f), g), h) and i) and the requests for parallel transmission of handover signalling messages being transferred to the SDN agent via a bidirectional link between the CN entity and the SDN agent; and
handover signalling messages of steps d), f), g), h) and i) being updated with the SDN addresses of the destination and source CN entities from the physical network destination and source CN entity addresses, and said messages being transferred by a scheduler block of the SDN agent to scheduler blocks of the SDN agents of other CN entities utilizing, for the message transfer, the parallel transmission request from the CN entity.

6. - The handover method according to any of claims 1 -5, wherein the source network is a 5G core, and the target network is an Evolved Packet System, EPS, the source network consisting of a Next Generation Radio Access Network, NG-RAN, an Access and Mobility Function, AMF, a User Plane Function, UPF, and other core network, CN, entities implemented as Virtual Functions on a cloud, this cloud being connected to the AMF and the SeMMu, the SeMMu in the source network composed of a Software Defined Networking, SDN, agent connected with a Session Management Function, SMF, the SDN agent of a network entity including three components: formatter, mapper and scheduler, the formatter being configured to pack and unpack incoming and outgoing messages into the correct message format, the mapper block being configured to map CN messages to messages recognizable by the network entity, and vice versa, the scheduler block configured to schedule the incoming and outgoing messages towards the network entity and CN respectively based on the message characteristics, the AMF consisting of an SDN agent and an interface to communicate with the SeMMu, the UPF having a data plane connection with the NG-RAN and an IP Multimedia Subsystem, IMS, core, the SeMMu in the source network being connected to an inter-working entity Packet Data Network Gateway-User, PGW-U, along with an UPF, the PGW-U+UPF being further connected to the NG-RAN via a Data Plane, DP, connection, the DP being the part of the network wherein only data packets traverse and are processed, the control plane communication with the NG-RAN being handled by the AMF via the SDN agent, the AMF through the SDN agent being connected to the SeMMu in the EPS via an N26 interface, the SeMMu in the target network composed of a Mobility Management Entity, MME, connected with the SDN agent, the SeMMu connecting with a Target Serving Gateway, T-SGW, and the Serving GW, S-GW, the SeMMu being further connected to a Serving General Packet Radio Service Support Node, SGSN, managing communications with both a GSM EDGE Radio Access Network, GERAN, and a UMTS Terrestrial Radio Access Network, UTRAN, via a Radio Network Controller, RNC, the SeMMu managing an Evolved UMTS Terrestrial Radio Access Network, E-UTRAN, falling under its domain, and DP connections existing between: the E-UTRAN and the S- GW, the S-GW and the T-SGW, the T-SGW and the PGW-U + UPF, the S-GW and the PGW-U + UPF, the T-SGW and the SGSN, and the S-GW and the RNC.

7. - The handover method according to any of claims 1 -5, wherein the source network is a Long Term Evolution-Evolved Packet Core, LTE-EPC, and the target network is a Universal Mobile Telecommunications System 2G, UMTS/2G, network, the SeMMu composed of a Mobility Management Entity, MME, coupled with a Software Defined Networking, SDN, agent, the SeMMu being connected to each of an Evolved UMTS Terrestrial Radio Access Network, E-UTRAN, a Serving Gateway, S-GW, a Target Serving Gateway, T-SGW, a Packet Data Network Gateway-User, PGW-U, along with a User Plane Function, UPF , a Serving General Packet Radio Service Support Node, SGSN, and an Access and Mobility Function, AMF, in a 5G Next Generation Core, NGC, via an SDN agent over an N26 interface, the SeMMu within the 5G NGC being connected to each of a Next Generation Radio Access Network, NG-RAN, the AMF, the UPF and the other CN entities, the UPF being a Data Plane, DP, entity for routing of data packets through a core network, CN, based on forwarding rules imparted on it via the SeMMu, and DP connections existing between: the E-UTRAN and the S-GW, the S-GW and the PGW-U + UPF, the S-GW and the T-SGW, the T-SGW and the SGSN, the S-GW and a Radio Network Controller, RNC, the NG-RAN and the PGW-U + UPF, the NG-RAN and the UPF, the UPF and an IP Multimedia Subsystem, IMS, core, and the PGW-U + UPF and the IMS core, the SGSN in the target network connecting to a Radio Network Controller, RNC, and managing the signalling with the RNC enabling Radio Resource Management, RRM, operations to be executed according to standards and optimize CN signalling.

8. - The handover method according to any of claims 1 -5, wherein the source network is a Universal Mobile Telecommunications System 2G, UMTS/2G, and the target network is a Long Term Evolution-Evolved Packet Core, LTE-EPC, a Serving General Packet Radio Service Support Node, SGSN, in the source network being connected to a Radio Network Controller, RNC, and managing the communication with the RNC thereby not transforming Radio Resource Management, RRM, operations, the SGSN being further connected to the SeMMu within the LTE-EPC, the SeMMu composed of a Mobility Management Entity, MME, a Software Defined Networking, SDN, agent, and the SeMMu being connected to each of a Serving Gateway, S-GW, a Target Serving Gateway, T- SGW, a Packet Data Network Gateway-User, PGW-U, along with a User Plane Function, UPF, and an Access and Mobility Function, AMF, in a 5G Next Generation Core, NGC, the connection of the SeMMu to the AMF being via an N26 interface and through the SDN agent attached to the AMF, the SeMMu being further connected to other core network, CN, entities located on a cloud infrastructure and connected to the AMF, the SeMMu being further connected to the UPF and the PGW-U + UPF entities for determination of the route for the packets within the core network, the AMF being connected to a Next Generation Radio Access Network, NG-RAN, and Data Plane, DP, connections existing between: the UPF and an IP Multimedia Subsystem, IMS, core, the PGW-U + UPF and the IMS core, the UPF and the NG-RAN, the PGW-U + UPF and the NG-RAN, the E-UTRAN and the T-SGW, the T-SGW and the S-GW, the T-SGW and the PGW-U + UPF, the S-GW and the PGW-U + UPF, the S-GW and the SGSN, the T-SGW and the RNC.

9. - The handover method according to any of claims 1 -5 and 7, wherein the following information elements are being sent:
in step a): a) Measurement Report;
in step b): b) Target RNC Identifier and Source to Target Transparent Container;
in step c): c) SeMMu tunnel endpoint identifier, TEID, and address for a Control Plane, CP, d) SGSN TEID(s) and address(es) for the CP and downlink, DL, forwarding, e) International Mobile Subscriber Identity, IMSI, f) Target Identification and Source to Target Transparent Container, and g) T-SGW address(es) and TEID(s) for DP, CP and DL forwarding;
in step d): h) UE Identifier and Encryption information, and Source to Target Transparent Container;
in step e): i) Target to Source Transparent Container, and Radio Access Bearers setup and failed to setup list;
in step f): j) Target to Source Transparent Container, and RAB setup information; in step g): k) T-SGW address(es) and TEID(s) for DL forwarding, and Source S- GW address(es) and TEID(s) for data forwarding;
in step h): l) SGSN TEID(s) and address(es) for the CP and DL forwarding, and T-SGW address(es) and TEID(s) for DP, CP and uplink, UP, forwarding; and
in step j): m) Handover Indication, Target to Source Transparent Container and RABs list.

10. - The handover method according to claim 6, wherein the formatter is further configured to transform the format of the incoming and outgoing messages such that they are understood at the SDN agent and the CN entity, respectively, the formatter being further configured to, for any message coming from a CN entity, remove the formatting applied by the CN entity and extract the payload and destination address, the formatter being further configured to pass the payload and destination address to the mapper, the formatter being further configured to, for a message arriving at the formatter from the mapper, configure the payload along with the source address into a format decipherable by the CN entity, the Mapper being connected to both the formatter and the scheduler, the mapper being further configured to, for message frames received from the scheduler, remove the frame header, identify the message source, and map the address of the SDN agent of the source CN entity to the address of the source CN entity, the mapper being further configured to transfer the message payload along with the source address to the formatter, the mapper being further configured to, for messages received from the formatter, identify the type of message and its destination, map the destination address to the address in the external CN and pass said address to the scheduler with metadata indicative of parallel execution of messages and messages scheduled for parallel execution, the scheduler being configured to, upon the arrival of messages from CN to the SDN agent, schedule the messages to be forwarded to the mapper, the mapper being the entity between the scheduler and the formatter, the scheduler being further configured to, upon receiving messages from the mapper that are to be transmitted out to the CN, schedule the sending of messages through the communications interface.

11. - The handover method according to any of claims 1 -5, further comprising: handover rejection phase signalling and transmission of a handover rejection message; and releasing resources reserved in both the source network and target network upon transmission of a message indicating the necessity to delete an established session/tunnel; wherein the method does not comprise transmission of a handover request acknowledge; and the method being executed during a Long Term Evolution- Evolved Packet Core, LTE-EPC, to Universal Mobile Telecommunications System 2G, UMTS/2G, handover process or during a UMTS/2G to LTE-UPC handover process.

12. - The handover method according to any of claims 1 -5, further comprising handover signalling aware of the possibility of a handover rejection, the method executing handover request and handover request acknowledge signalling before reserving resources in both the target network and the source network, thereby avoiding sending messages to relinquish resources from both the source network and the target network due to handover rejection.

13. - The handover method according to claim 12, wherein the SeMMu sends Control Plane handover signalling messages in parallel to other core network entities.

14. - A system, comprising:
- a mobile terminal, UE;
- a current access point being a S-NG-RAN or a Source eNodeB or a Source RNC;
- a current gateway being a PGW-U + UPF or a Source serving GW;
- a mobility management entity, SeMMu;
- a target access point being a Target eNodeB or a Target RNC or a T-NG-RAN;
- a target gateway being a Target Serving GW or a T-UPF or a Target PGW-U + UPF;
- a target support node being a Target SeMMu or a Target SGSN or a T-AMF;
wherein;
the SeMMu is connected to the current access point being a S-NG-RAN or a Source eNodeB or a Source RNC, the target support node being a Target SeMMu or a Target SGSN or a T-AMF, the current gateway being a PGW-U + UPF or a Source serving GW, and the target gateway being a Target Serving GW or a T-UPF or a Target PGW-U + UPF;
the SeMMu is configured to allocate tunnel endpoint identifiers, TEID, and addresses to itself and to each of: the current access point being a S-NG-RAN or a Source eNodeB or a Source RNC, the target support node being a Target SeMMu or a Target SGSN or a T-AMF, the current gateway being a PGW-U + UPF or a Source serving GW, and the target gateway being a Target Serving GW or a T-UPF or a Target PGW-U + UPF; and wherein the system is configured to carry out a handover method comprising the following steps:
a) handover initiation (P1 );
b) sending (P2) of a handover requirement from the current access point being a S-NG-RAN or a Source eNodeB or a Source RNC to the SeMMu;
c) sending (P3) a resource allocation request and a tunnel setup message from the SeMMu to the target support node being a Target SeMMu or a Target SGSN or a T-AMF, of the target access point being a Target eNodeB or a Target RNC or a T-NG-RAN;
d) sending (P4) a relocation request from the target support node being a Target SeMMu or a Target SGSN or a T-AMF, to the target access point being a Target eNodeB or a Target RNC or a T- NG-RAN;
e) sending (P4a) a relocation request acknowledge from the target access point being a Target eNodeB or a Target RNC or a T-NG-RAN, to the target support node being a Target SeMMu or a Target SGSN or a T-AMF;
f) forwarding (P5) a relocation response from the target support node being a Target SeMMu or a Target SGSN or a T-AMF, to the SeMMu;
g) sending (P6a) a tunnel setup message from the SeMMu to the current gateway being a PGW-U + UPF or a Source serving GW;
h) sending (P6b) a relocation and tunnel setup message from the SeMMu to the target gateway being a Target Serving GW or a T-UPF;
i) commanding (P6c) handover from the SeMMu to the current access point being a S-NG- RAN or a Source eNodeB or a Source RNC;
wherein step h) takes place after step f).

15. - The system according to claim 14, further comprising a Software Defined Networking, SDN, agent, wherein;
- the SDN agent is implemented either by means of a software running in an installed mobility management entity, MME, the current access point being a S-NG-RAN or a Source eNodeB or a Source RNC, the target support node being a Target SeMMu, the current gateway being a PGW-U + UPF or a Source serving GW, the target gateway being a Target Serving GW, or on a separate hardware system; or
- the SDN agent is implemented in the SeMMu, the SDN agent being configured to connect the SeMMu to each of: the current access point being a S-NG-RAN or a Source eNodeB or a Source RNC, the target support node being a Target SeMMu, the current gateway being a PGW-U + UPF or a Source serving GW, and the target gateway being a Target Serving GW, and the SDN agent being formed by:
- a scheduler block connected to a bi-directional communication interface that connects to the core network and to a mapper, configured to schedule the transfer of incoming and outgoing messages based on the message characteristic;
- a formatter block connected to a bi-directional communication interface that connects to the core network entity and to the mapper block, configured to transform the format of the incoming and outgoing messages such that they are understood by both the SDN agent and the entity respectively; and
- the mapper block, being connected to the scheduler block and to the formatter block and configured to map addresses of messages from source and destination SDN agent addresses to source and destination CN entity addresses, the SDN agent being configured to be associated with a CN entity.

## Patentansprüche

1. Handover-Verfahren, in welchem der Datenweg zwischen einem mobilen Endgerät, UE, und dem Quellnetzwerk von einem ersten Weg zu einem Zielnetzwerk mit einem zweiten Weg geändert wird, wobei der erste Weg umfassend:
eine Abwärts-/Aufwärtsverbindung zwischen dem UE und einem aktuellen Zugangspunkt, welcher ein S-NG-RAN oder ein Quell-eNodeB oder ein Quell-RNC ist;
eine Verbindung zwischen dem aktuellen Zugangspunkt, welcher ein S-NG-RAN oder ein Quell-eNodeB oder ein Quell-RNC ist, und einem aktuellen Gateway, welches ein PGW-U + UPF oder ein als Quelle dienendes GW ist; und
wobei der aktuelle Zugangspunkt, welcher ein S-NG-RAN oder ein Quell-eNodeB oder ein Quell-RNC ist, und das aktuelle Gateway, welches ein PGW-U + UPF oder ein als Quelle dienendes GW ist, mit einer Mobilitätsverwaltungseinheit, SeMMu, verbunden sind;
wobei der zweite Weg umfassend:
eine Abwärts-/Aufwärtsverbindung zwischen dem UE und einem Zielzugangspunkt, welcher ein Ziel-eNodeB oder ein Ziel-RNC oder ein T-NG-RAN ist; und
eine Verbindung zwischen dem Zielzugangspunkt, welcher ein Ziel-eNodeB oder ein Ziel-RNC oder ein T-NG-RAN ist, und ein Zielgateway, welches ein als Ziel dienendes GW oder eine T-UPF oder ein Ziel-PGW-U + UPF ist; und
in welchem die SeMMu mit dem aktuellen Zugangspunkt, welcher ein S-NG-RAN oder ein Quell-eNodeB oder ein Quell-RNC ist, einem Ziel-Unterstützungsknoten, welcher eine Ziel-SeMMu oder ein Ziel-SGSN oder eine T-AMF ist, dem aktuellen Gateway, welches ein PGW-U + UPF oder ein als Quelle dienendes GW ist, und dem Zielgateway, welches ein als Ziel dienendes GW oder eine T-UPF oder ein Ziel-PGW-U + UPF ist, verbunden ist;
wobei das Verfahren die folgenden Schritte umfasst:
a) das Einleiten des Handovers (P1);
b) das Senden (P2) einer Handover-Anforderung vom aktuellen Zugangspunkt, welcher ein S-NG-RAN oder ein Quell-eNodeB oder ein Quell-RNC ist, zur SeMMu;
c) das Senden (P3) einer Anfrage zur Ressourcenzuordnung und einer Tunnelaufbaunachricht von der SeMMu zum Ziel-Unterstützungsknoten, welcher eine Ziel-SeMMu oder ein Ziel-SGSN oder eine T-AMF ist, des Zielzugangspunkts, welcher ein Ziel-eNodeB oder ein Ziel-RNC oder ein T-NG-RAN ist;
d) das Senden (P4) einer Anfrage zur Umspeicherung vom Ziel-Unterstützungsknoten, welcher eine Ziel-SeMMu oder ein Ziel-SGSN oder eine T-AMF ist, zum Zielzugangspunkt, welcher ein Ziel-eNodeB oder ein Ziel-RNC oder ein T-NG-RAN ist;
e) das Senden (P4a) einer Bestätigung der Anfrage zur Umspeicherung vom Zielzugangspunkt, welcher ein Ziel-eNodeB oder ein Ziel-RNC oder ein T-NG-RAN ist, zum Ziel-Unterstützungsknoten, welcher eine Ziel-SeMMu oder ein Ziel-SGSN oder eine T-AMF ist;
f) das Weiterleiten (P5) einer Umspeicherungsantwort vom Ziel-Unterstützungsknoten, welcher eine Ziel-SeMMu oder ein Ziel-SGSN oder eine T-AMF ist, zur SeMMu;
g) das Senden (P6a) einer Tunnelaufbaunachricht von der SeMMu zum aktuellen Gateway, welches ein PGW-U + UPF oder ein als Quelle dienendes GW) ist;
h) das Senden (P6b) einer Umspeicherungs- und Tunnelaufbaunachricht von der SeMMu zum Zielgateway, welches ein als Ziel dienendes GW oder eine T-UPF) ist;
i) das Anweisen (P6c) eines Handovers von der SeMMu zum aktuellen Zugangspunkt, welcher ein S-NG-RAN oder ein Quell-eNodeB oder ein Quell-RNC ist;
wobei Schritt h) nach Schritt f) stattfindet.

2. Handover-Verfahren nach Anspruch 1, wobei die SeMMu die Tunnelaufbaunachricht und die Umspeicherungs- und Tunnelaufbaunachricht parallel sendet (P6a, P6b).

3. Handover-Verfahren nach Anspruch 2, wobei die SeMMu die Handover-Anweisung (P6c) parallel zum Senden (P6a, P6b) der Tunnelaufbaunachricht und der Umspeicherungs- und Tunnelaufbaunachricht sendet.

4. Handover-Verfahren nach einem der Ansprüche 1-3, wobei:
Schritt d) nach Schritt c) stattfindet, und der Ziel-Unterstützungsknoten, welcher eine Ziel-SeMMu oder ein Ziel-SGSN oder eine T-AMF ist, keine Nachricht bezüglich des Handovers vom Zielgateway, welches ein als Ziel dienendes GW oder eine T-UPF zwischen den Schritten c) und d) ist, empfängt; und
Schritt f) nach Schritt e) stattfindet, und der Ziel-Unterstützungsknoten, welcher eine Ziel-SeMMu oder ein Ziel-SGSN oder eine T-AMF ist, keine Nachricht bezüglich des Handovers vom Zielgateway, welches ein als Ziel dienendes GW oder eine T-UPF zwischen den Schritten e) und f) ist, empfängt.

5. Handover-Verfahren nach einem der Ansprüche 1-4, wobei:
Handover-Signalisierungsnachrichten von den Schritten b) und f) von einem *Software Defined Networking-*(SDN)-Agent der SeMMu empfangen werden, wobei eine Kernnetz-(CN)-Einheit der SeMMu eine Mobilitätsverwaltungseinheit, MME, in einem 4G/3G-Kernnetz ist, und wobei die SeMMu eine Sitzungsverwaltungsfunktion, SMF, in einem 5G-Kern beinhaltet;
Handover-Signalisierungsnachrichten von den Schritten c) und e) von einem *Software Defined* Networking-(SDN)-Agent des Ziel-Unterstützungsknotens, welcher eine Ziel-SeMMu oder ein Ziel-SGSN oder eine T-AMF ist, empfangen werden;
die Handover-Signalisierungsnachrichten von jeweiligen Mappern der SeMMu und des Ziel-Unterstützungsknotens, welche eine Ziel-SeMMu oder ein Ziel-SGSN oder eine T-AMF sind, mittels Abbildung von SDN-Adressen der Quell- und Bestimmungs-CN-Einheiten aktualisiert werden, welche in den Nachrichten zu den physikalischen Netzwerkquell- und - bestimmungsadressen der CN-Einheiten beinhaltet sind;
die Handover-Signaliserungsnachricht von jeweiligen Formatierern der SeMMu und des Ziel-Unterstützungsknotens, welche eine Ziel-SeMMu oder ein Ziel-SGSN oder eine T-AMF sind, mittels Umwandlung eines SDN-Nachrichtenformat derselben in ein Nachrichtenformat einer CN-Einheit aktualisiert wird, um die Nachricht zu empfangen;
die CN-Einheit der SeMMu und eine CN-Einheit des Ziel-Unterstützungsknotens, welche eine Ziel-SeMMu oder ein Ziel-SGSN oder eine T-AMF sind, jede umgewandelte Handover-Signalisierungsnachricht verarbeitet, um eine oder mehrere Nachrichten für andere CN-Einheiten zu erzeugen;
die Verarbeitung der Handover-Signalisierungsnachrichten Folgendes einbezieht: das Verarbeiten von Informationselementen, IE, welche in den Nachrichten beinhaltet sind, das Bestimmen einer parallelen Informationsübertragung, wobei die parallele Informationsübertragung ein Prozess zum Übertragen von mehrfachen Handover-Signalisierungsnachrichten auf andere CN-Einheiten ist, indem Nachrichten ohne auf eine Antwort auf eine gesendete Nachricht zu warten, bevor eine zusätzliche Nachricht gesendet wird, gesendet werden, und das Mapping von IE zu Nachrichtensätzen;
die SeMMu und der Ziel-Unterstützungsknoten, welche eine Ziel-SeMMu oder ein Ziel-SGSN oder eine T-AMF sind, Anfragen zur parallelen Übermittlung von Handover-Signalisierungsnachrichten erzeugen;
Handover-Signalisierungsnachrichten von den Schritten d), f), g), h) und i) und die Anfragen zur parallelen Übermittlung von Handover-Signalisierungsnachrichten auf den SDN-Agent mittels eines bidirektionalen Link zwischen der CN-Einheit und dem SDN-Agent übertragen werden; und
Handover-Signalisierungsnachrichten von den Schritten d), f), g), h) und i) mit den SDN-Adressen der Bestimmungs- und Quell-CN-Einheiten aus den physikalischen Netzwerkbestimmungs- und -quell-CN-Einheit-Adressen aktualisiert werden, und wobei die genannten Nachrichten von einem Schedulerblock des SDN-Agenten auf Schedulerblöcke der SDN-Agenten anderer CN-Einheiten übertragen werden, unter Verwendung, zur Nachrichtenübertragung, der parallelen Übermittlungsanfrage aus der CN-Einheit.

6. Handover-Verfahren nach einem der Ansprüche 1-5, wobei das Quellnetzwerk ein 5G-Kern ist und das Zielnetzwerk ein entwickeltes Paketensystem, EPS, ist, wobei das Quellnetzwerk aus einem Funkzugangsnetzwerk der nächsten Generation, NG-RAN, einer Zugangs- und Mobilitätsfunktion, AMF, einer Benutzerebenenfunktion, UPF, und anderen Kernnetz-(CN)-Einheiten, welche als virtuelle Funktionen in einer Cloud implementiert sind, besteht, wobei diese Cloud mit der AMF und der SeMMu verbunden ist, wobei die SeMMu im Quellnetzwerk bestehend aus einem *Software Defined Networking-(SDN)-Agent* verbunden mit einer Sitzungsverwaltungsfunktion, SMF, wobei der SDN-Agent einer Netzwerkeinheit beinhaltend drei Komponenten: Formatierer, Mapper und Scheduler, wobei der Formatierer dazu ausgebildet ist, eingehende und ausgehende Nachrichten in das richtige Nachrichtenformat zu komprimieren und zu dekomprimieren, wobei der Mapperblock dazu ausgebildet ist, CN-Nachrichten zu Nachrichten abzubilden, welche von der Netzwerkeinheit erkennbar sind, und umgekehrt, wobei der Schedulerblock dazu ausgebildet ist, jeweils die eingehenden und ausgehenden Nachrichten zur Netzwerkeinheit und CN hin basierend auf den Nachrichtenmerkmalen einzuplanen, wobei die AMF aus einem SDN-Agent und einer Schnittstelle besteht, um mit der SeMMu zu kommunizieren, wobei die UPF eine Datenebenenverbindung mit dem NG-RAN und ein IP Multimedia Subsystem-(IMS)-Kern aufweist, wobei die SeMMu im Quellnetzwerk mit einer zusammenarbeitenden Einheit aus Paketendatennetzwerk-Gateway-Benutzer, PGW-U, zusammen mit einer UPF verbunden ist, wobei das PGW-U+UPF zusätzlich mit dem NG-RAN mittels einer Datenebenen-(DP)-Verbindung verbunden ist, wobei die DP der Teil des Netzwerks ist, in dem nur Datapakete durchgehen und verarbeitet werden, wobei die Kommunikation in der Steuerebene mit dem NG-RAN durch die AMF mittels des SDN-Agenten bewältigt wird, wobei die AMF über den SDN-Agent mit der SeMMu im EPS mittels einer N26-Schnittstelle verbunden ist, wobei die SeMMu im Zielnetzwerk aus einer Mobilitätsverwaltungseinheit, MME, welche mit dem SDN-Agent verbunden ist, besteht, wobei die SeMMu mit einem als Ziel dienenden Gateway, T-SGW, und dem bedienenden GW, S-GW, verbunden ist, wobei die SeMMu zusätzlich mit einem bedienenden allgemeinen Paketenfunkservice-Stützknoten, SGSN, verbunden ist, welcher Kommunikationen sowohl mit einem GSM-EDGE-Funkzugangsnetzwerk, GERAN, als auch einem irdischen UMTS-Funkzugangsnetzwerk, UTRAN, mittels einer Funknetzwerksteuerung, RNC, verwaltet, wobei die SeMMu ein entwickeltes irdisches UMTS-Funkzugangsnetzwerk, E-UTRAN, welches unter seiner Domäne fällt, verwaltet, und wobei es DP-Verbindungen zwischen den Folgenden existieren: dem E-UTRAN und dem S-GW, dem S-GW und dem T-SGW, dem T-SGW und dem PGW-U + UPF, dem S-GW und dem PGW-U + UPF, dem T-SGW und dem SGSN, und dem S-GW und dem RNC.

7. Handover-Verfahren nach einem der Ansprüche 1-5, wobei das Quellnetzwerk ein *Long Term Evolution-Evolved Packet Core,* LTE-EPC, ist und das Zielnetzwerk ein *Universal Mobile Telecommunications System* 2G-(UMTS/2G)-Netzwerk, ist, wobei die SeMMu aus einer Mobilitätsverwaltungseinheit, MME, gekoppelt mit einem *Software Defined Networking-*(SDN)-Agent, besteht, wobei die SeMMu mit jedem aus einem entwickelten irdischen UMTS-Funkzugangsnetzwerk, E-UTRAN, einem bedienenden Gateway, S-GW, einem als Ziel dienenden Gateway, T-SGW, einem Paketendatennetzwerk-Gateway-Benutzer, PGW-U, zusammen mit einer Benutzerebenenfunktion, UPF, einem bedienenden allgemeinen Paketenfunkservice-Stützknoten, SGSN, und einer Zugangs- und Mobilitätsfunktion, AMF, in einem 5G-Kern der nächsten Generation, NGC, mittels eines SDN-Agenten über eine N26-Schnittstelle verbunden ist, wobei die SeMMu innerhalb des 5G-NGCs mit jedem aus einem Funkzugangsnetzwerk der nächsten Generation, NG-RAN, der AMF, der UPF und den anderen CN-Einheiten verbunden ist, wobei die UPF eine Datenebenen-(DP)-Einheit zum Routing von Datenpaketen über ein Kernnetz, CN, basierend auf das Weiterleiten von darin vermittelten Regeln mittels der SeMMu ist, und wobei es DP-Verbindungen zwischen den Folgenden gibt: dem E-UTRAN und dem S-GW, dem S-GW und dem PGW-U + UPF, dem S-GW und dem T-SGW, dem T-SGW und dem SGSN, dem S-GW und einer Funknetzwerksteuerung, RNC, dem NG-RAN und dem PGW-U + UPF, dem NG-RAN und der UPF, der UPF und einem IP Multimedia Subsystem-(IMS)-Kern, und dem PGW-U + UPF und dem IMS-Kern, wobei das SGSN im Zielnetzwerk mit einer Funknetzwerksteuerung, RNC, verbunden ist, und wobei das Verwalten der Signalisierung mit der RNC Funkressourcenverwaltungs-(RRM)-vorgänge gemäß Standards ermöglicht und die CN-Signalisierung optimiert.

8. Handover-Verfahren nach einem der Ansprüche 1-5, wobei das Quellnetzwerk ein *Universal Mobile Telecommunications System 2G,* UMTS/2G, ist und das Zielnetzwerk ein *Long Term Evolution-Evolved Packet Core,* LTE-EPC, ist, wobei ein bedienenden allgemeinen Paketenfunkservice-Stützknoten, SGSN, im Quellnetzwerk mit einer Funknetzwerksteuerung, RNC, verbunden ist und das Verwalten der Kommunikation mit der RNC dadurch Funkressourcenverwaltungs-(RRM)-vorgänge nicht umwandelt, wobei der SGSN zusätzlich mit der SeMMu innerhalb des LTE-EPCs verbunden ist, wobei die SeMMu aus einer Mobilitätsverwaltungseinheit, MME, einem *Software Defined Networking-(SDN)-*Agent besteht, und wobei die SeMMu mit jedem eines bedienenden Gateways, S-GW, eines als Ziel dienenden Gateways, T-SGW, eines Paketendatennetzwerk-Gateway-Benutzers, PGW-U, zusammen mit einer Benutzerebenenfunktion, UPF, und einer Zugangs- und Mobilitätsfunktion, AMF, in einem 5G-Kern der nächsten Generation, NGC, verbunden ist, wobei die Verbindung der SeMMu mit der AMF mittels einer N26-Schnittstelle und über den SDN-Agent, welcher mit der AMF gekoppelt ist, ist, wobei die SeMMu zusätzlich mit anderen Kernnetz-(CN)-einheiten verbunden ist, welche sich auf einer Cloud-Infrastruktur befinden und mit der AMF verbunden sind, wobei die SeMMu zusätzlich mit der UPF und den PGW-U + UPF-Einheiten zur Bestimmung der Route für die Pakete innerhalb des Kernnetzes verbunden ist, wobei die AMF mit einem Funkzugangsnetzwerk der nächsten Generation, NG-RAN, verbunden ist und Datenebenen-(DP)-Verbindungen zwischen den Folgenden existieren: der UPF und einem IP Multimedia Subsystem-(IMS)-Kern, dem PGW-U + UPF und dem IMS-Kern, der UPF und dem NG-RAN, dem PGW-U + UPF und dem NG-RAN, dem E-UTRAN und dem T-SGW, dem T-SGW und dem S-GW, dem T-SGW und dem PGW-U + UPF, dem S-GW und dem PGW-U + UPF, dem S-GW und dem SGSN, dem T-SGW und dem RNC.

9. Handover-Verfahren nach einem der Ansprüche 1-5 und 7, wobei die folgenden Informationselemente gesendet werden:
in Schritt a): a) Messbericht;
in Schritt b): b) Ziel-RNC-Identifikator und *Source to Target Transparent Container*;
in Schritt c): c) SeMMu-Tunnelendpunktidentifikator, TEID, und Adresse für eine Steuerebene, CP, d) SGSN-TEID(s) und Adresse(n) für das CP und Abwärts-(DL)-weiterleiten, e) internationale Mobilfunk-Teilnehmerkennung, IMSI, f) Zielidentifizierung und *Source to Target Transparent Container,* und g) T-SGW-Adresse(n) und TEID(s) für DP, CP und DL-Weiterleiten;
in Schritt d): h) UE-Identifikator und Verschlüsselungsinformation, und *Source to Target Transparent Container;*
in Schritt e): i) *Target to Source Transparent Container*, und Liste von aufgebauten und nicht aufgebauten Funkzugangsträgern;
in Schritt f): j) *Target to Source Transparent Container,* und RAB-Aufbauinformation; in Schritt g): k) T-SGW-Adresse(n) und TEID(s) für die DL-Weiterleitung, und Quell-S-GW-Adresse(n) und TEID(s) für die Datenweiterleitung;
in Schritt h): I) SGSN-TEID(s) und Adresse(n) für das CP und DL-Weiterleiten, und T-SGW-Adresse(n) und TEID(s) für DP, CP und Aufwärts-(UP)-weiterleiten; und
in Schritt j): m) Handover-Andeutung, *Target to Source Transparent Container* und Liste von RAB.

10. Handover-Verfahren nach Anspruch 6, wobei der Formatierer zusätzlich dazu ausgebildet ist, das Format der eingehenden und ausgehenden Nachrichten umzuwandeln, sodass sie jeweils beim SDN-Agent und bei der CN-Einheit verstanden werden, wobei der Formatierer zusätzlich dazu ausgebildet ist, für jede Nachricht stammend von einer CN-Einheit, die von der CN-Einheit angewendeten Formatierung zu beseitigen und die Nutzinformation und die Bestimmungsadresse zu entnehmen, wobei der Formatierer zusätzlich dazu ausgebildet ist, die Nutzinformation und die Bestimmungsadresse dem Mapper weiterzugeben, wobei der Formatierer zusätzlich dazu ausgebildet ist, für eine am Formatierer vom Mapper ankommende Nachricht, die Nutzinformation zusammen mit der Quelladresse in ein Format auszubilden, welches durch die CN-Einheit entschlüsselbar ist, wobei der Mapper sowohl mit dem Formatierer als auch mit dem Scheduler verbunden ist, wobei der Mapper zusätzlich dazu ausgebildet ist, für vom Scheduler empfangene Nachrichtenrahmen, die Rahmenkopfzeile zu beseitigen, die Nachrichtenquelle zu identifizieren und die Adresse des SDN-Agenten der Quell-CN-Einheit zur Adresse der Quell-CN-Einheit abzubilden, wobei der Mapper zusätzlich dazu ausgebildet ist, die Nachrichten-Nutzinformation zusammen mit der Quelladresse auf den Formatierer zu übertragen, wobei der Mapper zusätzlich dazu ausgebildet ist, für vom Formatierer empfangene Nachrichten, die Art der Nachricht und dessen Bestimmung zu identifizieren, die Bestimmungsadresse zur Adresse im äußeren CN abzubilden und die genannte Adresse dem Scheduler mit Metadaten weiterzugeben, welche auf eine parallele Ausführung von Nachrichten und Nachrichten, welche zur parallelen Ausführung eingeplant sind, schließen lässt, wobei der Scheduler dazu ausgebildet ist, nach der Ankunft von Nachrichten aus dem CN zum SDN-Agent, die Nachrichten, welche zum Mapper weitergeleitet werden sollen, einzuplanen, wobei der Mapper die Einheit zwischen dem Scheduler und dem Formatierer ist, wobei der Scheduler zusätzlich dazu ausgebildet ist, nach dem Empfang von Nachrichten vom Mapper, welche dem CN übermittelt werden sollen, das Senden von Nachrichten über die Kommunikationsschnittstelle einzuplanen.

11. Handover-Verfahren nach einem der Ansprüche 1-5, zusätzlich umfassend: das Handover-Ablehnungsphasensignalisieren und Übermitteln einer Handover-Ablehnungsnachricht; und das Freigeben von Ressourcen, welche sowohl im Quellnetzwerk als auch im Zielnetzwerk vorbehalten werden, nach der Übermittlung einer Nachricht, welche das Bedürfnis eine festgelegte Sitzung/einen festgelegten Tunnel zu löschen andeutet; wobei das Verfahren das Übermitteln einer Handover-Anfragenbestätigung nicht umfasst; und wobei das Verfahren während eines Handover-Prozesses von *Long Term Evolution-Evolved Packet Core,* LTE-EPC, zu *Universal Mobile Telecommunications System 2G,* UMTS/2G, oder während eines Handover-Prozesses von UMTS/2G zu LTE-UPC ausgeführt wird.

12. Handover-Verfahren nach einem der Ansprüche 1-5, zusätzlich umfassend das bewusste Handover-Signalisieren der Möglichkeit einer Handover-Ablehnung, wobei das Verfahren eine Handover-Anfrage und eine Handover-Anfragenbestätigungssignalisierung ausführt, bevor sowohl im Zielnetzwerk als auch im Quellnetzwerk Ressourcen vorbehalten werden, wobei das Senden von Nachrichten, um auf Ressourcen sowohl vom Quellnetzwerk als auch vom Zielnetzwerk aufgrund von der Handover-Ablehnung zu verzichten, verhindert wird.

13. Handover-Verfahren nach Anspruch 12, wobei die SeMMu Steuerebene-Handover-Signalisierungsnachrichten parallel zu anderen Kernnetzeinheiten sendet.

14. System, umfassend:
- ein mobiles Endgerät, UE;
- einen aktuellen Zugangspunkt, welcher ein S-NG-RAN oder ein Quell-eNodeB oder ein Quell-RNC ist;
- ein aktuelles Gateway, welches ein PGW-U + UPF oder ein als Quelle dienendes GW ist;
- eine Mobilitätsverwaltungseinheit, SeMMu;
- einen Zielzugangspunkt, welcher ein Ziel-eNodeB oder ein Ziel-RNC oder ein T-NG-RAN ist;
- ein Zielgateway, welches ein als Ziel dienendes GW oder eine T-UPF oder ein Ziel-PGW-U + UPF ist;
- einen Ziel-Unterstützungsknoten, welcher eine Ziel-SeMMu oder ein Ziel-SGSN oder eine T-AMF ist;
wobei;
die SeMMu mit dem aktuellen Zugangspunkt, welcher ein S-NG-RAN oder ein Quell-eNodeB oder ein Quell-RNC ist, verbunden ist, wobei der Ziel-Unterstützungsknoten eine Ziel-SeMMu oder ein Ziel-SGSN oder eine T-AMF ist, wobei das aktuelle Gateway ein PGW-U + UPF oder ein als Quelle dienendes GW ist, und das Zielgateway ein als Ziel dienendes GW oder eine T-UPF oder ein Ziel-PGW-U + UPF ist;
die SeMMu dazu ausgebildet ist, Tunnelendpunktidentifikatoren, TEID, und Adressen zu sich selbst und zu jedem der Folgenden zuzuordnen: dem aktuellen Zugangspunkt, welcher ein S-NG-RAN oder ein Quell-eNodeB oder ein Quell-RNC ist, dem Ziel-Unterstützungsknoten, welcher eine Ziel-SeMMu oder ein Ziel-SGSN oder eine T-AMF ist, dem aktuellen Gateway, welches ein PGW-U + UPF oder ein als Quelle dienendes GW ist, und den Zielgateway, welches ein als Ziel dienendes GW oder eine T-UPF oder ein Ziel-PGW-U + UPF ist; und wobei das System dazu ausgebildet ist, ein Handover-Verfahren umfassend die folgenden Schritte durchzuführen:
a) das Einleiten des Handovers (P1);
b) das Senden (P2) einer Handover-Anforderung vom aktuellen Zugangspunkt, welcher ein S-NG-RAN oder ein Quell-eNodeB oder ein Quell-RNC ist, zur SeMMu;
c) das Senden (P3) einer Anfrage zur Ressourcenzuordnung und einer Tunnelaufbaunachricht von der SeMMu zum Ziel-Unterstützungsknoten, welcher eine Ziel-SeMMu oder ein Ziel-SGSN oder eine T-AMF ist, des Zielzugangspunkts, welcher ein Ziel-eNodeB oder ein Ziel-RNC oder ein T-NG-RAN ist;
d) das Senden (P4) einer Anfrage zur Umspeicherung vom Ziel-Unterstützungsknoten, welcher eine Ziel-SeMMu oder ein Ziel-SGSN oder eine T-AMF ist, zum Zielzugangspunkt, welcher ein Ziel-eNodeB oder ein Ziel-RNC oder ein T-NG-RAN ist;
e) das Senden (P4a) einer Bestätigung der Anfrage zur Umspeicherung vom Zielzugangspunkt, welcher ein Ziel-eNodeB oder ein Ziel-RNC oder ein T-NG-RAN ist, zum Ziel-Unterstützungsknoten, welcher eine Ziel-SeMMu oder ein Ziel-SGSN oder eine T-AMF ist;
f) das Weiterleiten (P5) einer Umspeicherungsantwort vom Ziel-Unterstützungsknoten, welcher eine Ziel-SeMMu oder ein Ziel-SGSN oder eine T-AMF ist, zur SeMMu;
g) das Senden (P6a) einer Tunnelaufbaunachricht von der SeMMu zum aktuellen Gateway, welches ein PGW-U + UPF oder ein als Quelle dienendes GW) ist;
h) das Senden (P6b) einer Umspeicherungs- und Tunnelaufbaunachricht von der SeMMu zum Zielgateway, welches ein als Ziel dienendes GW oder eine T-UPF) ist;
i) das Anweisen (P6c) eines Handovers von der SeMMu zum aktuellen Zugangspunkt, welcher ein S-NG-RAN oder ein Quell-eNodeB oder ein Quell-RNC ist;
wobei Schritt h) nach Schritt f) stattfindet.

15. System nach Anspruch 14, zusätzlich umfassend einen *Software Defined Networking-*(*SDN*)-Agent, wobei;
- der SDN-Agent entweder mittels einer Software, welche in einer installierten Mobilitätsverwaltungseinheit, MME, läuft, wobei der aktuelle Zugangspunkt ein S-NG-RAN oder ein Quell-eNodeB oder ein Quell-RNC ist, wobei der Ziel-Unterstützungsknoten eine Ziel-SeMMu ist, wobei das aktuelle Gateway ein PGW-U + UPF oder ein als Quelle dienendes GW ist, wobei das Zielgateway ein als Ziel dienendes GW ist, oder auf einem unabhängigen Hardwaresystem implementiert wird; oder
- der SDN-Agent in der SeMMu implementiert wird, wobei der SDN-Agent dazu ausgebildet ist, die SeMMu mit jedem der Folgenden zu verbinden: dem aktuellen Zugangspunkt, welcher ein S-NG-RAN oder ein Quell-eNodeB oder ein Quell-RNC ist, dem Ziel-Unterstützungsknoten, welcher eine Ziel-SeMMu ist, dem aktuellen Gateway, welches ein PGW-U + UPF oder ein als Quelle dienendes GW ist, und dem Zielgateway, welches ein als Ziel dienendes GW ist, und wobei der SDN-Agent durch Folgende gebildet ist:
- einen Schedulerblock, welcher mit einer bidirektionalen Kommunikationsschnittstelle verbunden ist, welcher mit dem Kernnetz und mit einem Mapper verbindet, welcher dazu ausgebildet ist, die Übertragung von eingehenden und ausgehenden Nachrichten basierend auf das Nachrichtenmerkmal einzuplanen;
- einen Formatiererblock, welcher mit einer bidirektionalen Kommunikationsschnittstelle verbunden ist, welche mit der Kernnetzeinheit und mit dem Mapperblock verbindet, welcher dazu ausgebildet ist, das Format der eingehenden und ausgehenden Nachrichten umzuwandeln, sodass sie jeweils sowohl vom SDN-Agent und von der Einheit verstanden werden; und
- der Mapperblock, welcher mit dem Schedulerblock und mit dem Formatiererblock verbunden und dazu ausgebildet ist, Adressen von Nachrichten aus Quell- und Bestimmungs-SDN-Agent-Adressen zu Quell- und Bestimmungs-CN-Einheit-Adressen abzubilden, wobei der SDN-Agent dazu ausgebildet ist, mit einer CN-Einheit assoziiert zu werden.

## Revendications

1. Procédé de transfert où le chemin de données entre un terminal mobile, UE, et le réseau source est modifié à partir d'un premier chemin comprenant :
une connexion de liaison descendante/liaison montante entre l'UE et un point d'accès actuel, qui est un S-NG-RAN ou un eNodeB source ou un RNC source ;
une connexion entre le point d'accès actuel, qui est un S-NG-RAN, un eNodeB source ou un RNC source, et une passerelle actuelle, qui est un PGW-U + UPF ou une GW de service source ; et
le point d'accès actuel, qui est un S-NG-RAN ou un eNodeB source ou un RNC source, et la passerelle actuelle, qui est un PGW-U + UPF ou une passerelle de service source, étant connectés à une entité de gestion de la mobilité, SeMMu ;
vers un réseau cible avec un second chemin comprenant :
une connexion de liaison descendante/liaison montante entre l'UE et un point d'accès cible, qui est un eNodeB cible, un RNC cible ou un T-NG-RAN ; et
une connexion entre le point d'accès cible, qui est un eNodeB cible ou un RNC cible ou un T-NG-RAN, et une passerelle cible, qui est une GW de service cible ou une T-UPF ou un PGW-U + UPF cible ; et
où la SeMMu est connectée au point d'accès actuel, qui est un S-NG-RAN ou un eNodeB source ou un RNC source, à un noeud de support cible, qui est une SeMMu cible ou un SGSN cible ou une T-AMF, à la passerelle actuelle, qui est un PGW-U + UPF ou une GW de service source, et à la passerelle cible, qui est une GW de service cible ou une T-UPF ou un PGW-U + UPF cible ;
dans lequel le procédé comprend les étapes suivantes :
a) initiation du transfert (P1) ;
b) envoi (P2) d'une exigence de transfert du point d'accès actuel, qui est un S-NG-RAN ou un eNodeB source ou un RNC source, à la SeMMu ;
c) envoi (P3) d'une demande d'attribution de ressources et d'un message de configuration de tunnel de la SeMMu au noeud de support cible, qui est une SeMMu cible ou un SGSN cible ou une T-AMF, du point d'accès cible, qui est un eNodeB cible ou un RNC cible ou un T-NG-RAN ;
d) envoi (P4) d'une demande de relocalisation du noeud de support cible, qui est une SeMMu cible ou un SGSN cible ou une T-AMF, au point d'accès cible, qui est un eNodeB cible ou un RNC cible ou un T-NG-RAN ;
e) envoi (P4a) d'un accusé de réception de demande de relocalisation du point d'accès cible, qui est un eNodeB cible ou un RNC cible ou un T-NG-RAN, au noeud de support cible, qui est une SeMMu cible ou un SGSN cible ou une T-AMF ;
f) renvoi (P5) d'une réponse de relocalisation du noeud de support cible, qui est une SeMMu cible ou un SGSN cible ou une T-AMF, à la SeMMu ;
g) envoi (P6a) d'un message de configuration de tunnel de la SeMMu à la passerelle actuelle, qui est un PGW-U + UPF ou une GW de service source ;
h) envoi (P6b) d'un message de relocalisation et de configuration de tunnel de la SeMMu à la passerelle cible, qui est une GW de service cible ou une T-UPF ;
i) commande (P6c) du transfert de la SeMMu au point d'accès actuel, qui est un S-NG-RAN ou un eNodeB source ou un RNC source ;
dans lequel l'étape h) a lieu après l'étape f).

2. Procédé de transfert selon la revendication 1, dans lequel la SeMMu envoie (P6a, P6b) le message de configuration de tunnel et le message de relocalisation et de configuration de tunnel en parallèle.

3. Procédé de transfert selon la revendication 2, dans lequel la SeMMu envoie la commande de transfert (P6c) parallèlement à l'envoi (P6a, P6b) du message de configuration de tunnel et du message de relocalisation et de configuration de tunnel.

4. Procédé de transfert selon l'une quelconque des revendications 1-3, dans lequel :
l'étape d) a lieu après l'étape c), et le noeud de support cible, qui est une SeMMu cible ou un SGSN cible ou une T-AMF, ne reçoit pas de message relatif au transfert à partir de la passerelle cible, qui est une GW de service cible ou une T-UPF, entre les étapes c) et d) ; et
l'étape f) a lieu après l'étape e), et le noeud de support cible, qui est une SeMMu cible ou un SGSN cible ou une T-AMF, ne reçoit pas de message relatif au transfert à partir de la passerelle cible, qui est une GW de service cible ou une T-UPF, entre les étapes e) et f).

5. Procédé de transfert selon l'une quelconque des revendications 1-4, dans lequel :
les messages de signalisation de transfert des étapes b) et f) sont reçus par un agent de mise en réseau définie par logiciel, SDN, de la SeMMu, dans lequel une entité de réseau central, CN, de la SeMMu est une entité de gestion de la mobilité, MME, dans un réseau central 4G/3G, et dans lequel la SeMMu comprend une fonction de gestion de session, SMF, dans un noyau 5G ;
les messages de signalisation de transfert des étapes c) et e) sont reçus par un agent de mise en réseau définie par logiciel, SDN, du noeud de support cible, qui est une SeMMu cible ou un SGSN cible ou une T-AMF ;
les messages de signalisation de transfert sont mis à jour par le mappage, par des mappeurs respectifs de la SeMMu et du noeud de support cible, qui est une SeMMu cible ou un SGSN cible ou une T-AMF, des adresses de SDN des entités de CN source et de destination incluses dans les messages aux adresses source et de destination du réseau physique des entités de CN ;
le message de signalisation de transfert est mis à jour en transformant, par des formateurs respectifs de la SeMMu et du noeud de support cible, qui est une SeMMu cible ou un SGSN cible ou une T-AMF, un format de message de SDN de celui-ci en un format de message d'une entité de CN pour recevoir le message ;
l'entité de CN de la SeMMu et une entité de CN du noeud de support cible, qui est une SeMMu cible ou un SGSN cible ou une T-AMF, traitent chaque message de signalisation de transfert transformé pour générer un ou plusieurs messages destinés à d'autres entités de CN ;
le traitement des messages de signalisation de transfert implique : le traitement d'éléments d'information, lE, inclus dans les messages, la détermination du transfert d'informations en parallèle, le transfert d'informations en parallèle étant un processus de transfert de plusieurs messages de signalisation de transfert à d'autres entités de CN par l'envoi de messages sans attendre une réponse à un message envoyé avant d'envoyer un autre message, et le mappage des IE aux ensembles de messages ;
la SeMMu et le noeud de support cible, qui est une SeMMu cible ou un SGSN cible ou une T-AMF, génèrent des demandes de transmission parallèle de messages de signalisation de transfert ;
les messages de signalisation de transfert des étapes d), f), g), h) et i) et les demandes de transmission parallèle de messages de signalisation de transfert étant transférés à l'agent de SDN à travers une liaison bidirectionnelle entre l'entité de CN et l'agent de SDN ; et
les messages de signalisation de transfert des étapes d), f), g), h) et i) sont mis à jour avec les adresses de SDN des entités de CN de destination et de source à partir des adresses des entités de CN de destination et de source du réseau physique, et lesdits messages étant transférés par un bloc d'ordonnanceur de l'agent de SDN aux blocs d'ordonnanceur des agents de SDN d'autres entités de CN en utilisant, pour le transfert de messages, la demande de transmission parallèle de l'entité de CN.

6. Procédé de transfert selon l'une quelconque des revendications 1-5, dans lequel le réseau source est un noyau 5G et le réseau cible est un système de paquets évolué, EPS, le réseau source étant constitué d'un réseau d'accès radio de prochaine génération, NG-RAN, d'une fonction d'accès et de mobilité, AMF, d'une fonction de plan d'utilisateur, UPF, et d'autres entités de réseau central, CN, implémentées en tant que fonctions virtuelles sur un nuage, ce nuage étant connecté à l'AMF et à la SeMMu, la SeMMu dans le réseau source étant composée d'un agent de mise en réseau définie par logiciel, SDN, connecté à une fonction de gestion de session, SMF, l'agent de SDN d'une entité de réseau comprenant trois composants : un formateur, un mappeur et un ordonnanceur, le formateur étant configuré pour emballer et désemballer des messages entrants et sortants dans le format de message correct, le bloc de mappeur étant configuré pour mapper des messages de CN aux messages reconnaissables par l'entité de réseau, et vice versa, le bloc d'ordonnanceur étant configuré pour ordonnancer les messages entrants et sortants vers l'entité de réseau et le CN respectivement sur la base des caractéristiques de message, l'AMF étant composée d'un agent de SDN et d'une interface pour se communiquer avec la SeMMu, l'UPF ayant une connexion de plan de données avec le NG-RAN et un noyau de sous-système multimédia IP, IMS, la SeMMu dans le réseau source étant connectée à une entité interfonctionnelle de passerelle de réseau de données par paquets-utilisateur, PGW-U, avec une UPF, le PGW-U+UPF étant en outre connecté au NG-RAN à travers une connexion de plan de données, DP, le DP étant la partie du réseau dans laquelle seuls les paquets de données transitent et sont traités, la communication de plan de contrôle avec le NG-RAN étant gérée par l'AMF à travers l'agent de SDN, l'AMF à travers l'agent de SDN étant connectée à la SeMMu dans l'EPS sur une interface N26, la SeMMu dans le réseau cible étant composée d'une entité de gestion de la mobilité, MME, connectée à l'agent de SDN, la SeMMu étant connectée à une passerelle de service cible, T-SGW et à la passerelle de service, S-GW, la SeMMu étant en outre connectée à un noeud de support de service de radio par paquets général de service, SGSN, gérant les communications avec un réseau d'accès radio GSM EDGE, GERAN, et un réseau d'accès radio terrestre UMTS, UTRAN, à travers un contrôleur de réseau radio, RNC, la SeMMu gérant un réseau d'accès radio terrestre UMTS évolué, E-UTRAN, se trouvant dans son domaine, et des connexions DP existant entre : l'E-UTRAN et la S-GW, la S-GW et la T-SGW, la T-SGW et le PGW-U + UPF, la S-GW et le PGW-U + UPF, la T-SGW et le SGSN, et la S-GW et le RNC.

7. Procédé de transfert selon l'une quelconque des revendications 1-5, dans lequel le réseau source est un noyau de paquets évolué d'évolution à long terme, LTE-EPC, et le réseau cible est un réseau de système de télécommunications mobiles universelle 2G, UMTS/2G, la SeMMu étant composée d'une entité de gestion de la mobilité, MME, couplée à un agent de mise en réseau définie par logiciel, SDN, la SeMMu étant connectée à chacun d'un réseau d'accès radio terrestre UMTS évolué, E-UTRAN, d'une passerelle de service, S-GW, d'une passerelle de service cible, T-SGW, d'une passerelle de réseau de données par paquets-utilisateur, PGW-U, ainsi qu'à une fonction du plan d'utilisateur, UPF, un noeud de support de service de radio par paquets général de service, SGSN, et une fonction d'accès et de mobilité, AMF, dans un noyau de prochaine génération 5G, NGC, à travers un agent de SDN sur une interface N26, la SeMMu dans le NGC 5G étant connectée à chacun d'un réseau d'accès radio de prochaine génération, NG-RAN, de l'AMF, de l'UPF et des autres entités de CN, l'UPF étant une entité du plan de données, DP, pour l'acheminement de paquets de données à travers un réseau central, CN, sur la base de règles de renvoi qui lui sont communiquées par la SeMMu, et de connexions de DP existant entre : l'E-UTRAN et la S-GW, la S-GW et le PGW-U + UPF, la S-GW et la T-SGW, la T-SGW et le SGSN, la S-GW et un contrôleur de réseau radio, RNC, le NG-RAN et le PGW-U + UPF, le NG-RAN et l'UPF, l'UPF et un noyau de sous-système multimédia IP, IMS, et le PGW-U + UPF et le noyau d'IMS, le SGSN dans le réseau cible se connectant à un contrôleur de réseau radio, RNC, et gérant la signalisation avec le RNC permettant aux opérations de gestion des ressources radio, RRM, d'être exécutées conformément aux normes et d'optimiser la signalisation du CN.

8. Procédé de transfert selon l'une quelconque des revendications 1-5, dans lequel le réseau source est un système de télécommunications mobiles universelle 2G, UMTS/2G, et le réseau cible est un noyau de paquets évolué d'évolution à long terme, LTE-EPC, un noeud de support de service de radio par paquets général de service, SGSN, dans le réseau source étant connecté à un contrôleur de réseau radio, RNC, et gérant la communication avec le RNC en ne transformant pas les opérations de gestion des ressources radio, RRM, le SGSN étant en outre connecté à la SeMMu dans le LTE-EPC, la SeMMu étant composée d'une entité de gestion de la mobilité, MME, un agent de mise en réseau définie par logiciel, SDN, et la SeMMu étant connectée à chacun d'une passerelle de service, S-GW, d'une passerelle de service cible T-SGW, d'une passerelle de réseau de données par paquets-utilisateur, PGW-U, ainsi qu'à une fonction de plan d'utilisateur, UPF, et à une fonction d'accès et de mobilité, AMF, dans un noyau de prochaine génération 5G, NGC, la connexion de la SeMMu à l'AMF étant faite sur une interface N26 et par l'intermédiaire de l'agent de SDN attaché à l'AMF, la SeMMu étant en outre connectée à d'autres entités du réseau central, CN, situées sur une infrastructure en nuage et connectées à l'AMF, la SeMMu étant en outre connectée à l'UPF et aux entités de PGW-U + UPF pour la détermination de l'itinéraire des paquets dans le réseau central, l'AMF étant connectée à un réseau d'accès radio de prochaine génération, NG-RAN, et des connexions du plan de données, DP, existant entre : l'UPF et un noyau de sous-système multimédia IP, IMS, le PGW-U + UPF et le noyau d'IMS, l'UPF et le NG-RAN, le PGW-U + UPF et le NG-RAN, l'E-UTRAN et la T-SGW, la T-SGW et la S-GW, la T-SGW et le PGW-U + UPF, la S-GW et le PGW-U + UPF, la S-GW et le SGSN, la T-SGW et le RNC.

9. Procédé de transfert selon l'une quelconque des revendications 1-5 et 7, dans lequel les éléments d'information suivants sont envoyés :
à l'étape a) : a) rapport de mesure ;
à l'étape b) : b) identificateur de RNC cible et conteneur transparent source-cible ;
à l'étape c) : c) identificateur de point d'extrémité de tunnel de SeMMu, TEID, et adresse pour un plan de contrôle, CP, d) TEID(s) et adresse(s) de SGSN pour le CP et le renvoi de liaison descendante, DL, e) identité internationale d'abonné mobile, IMSI, f) identification de cible et conteneur transparent source-cible, et g) adresse(s) et TEID(s) de T-SGW pour le DP, le CP et le renvoi de liaison descendante ;
à l'étape d) : h) identificateur d'UE et des informations de cryptage, et conteneur transparent source-cible ;
à l'étape e) : i) conteneur transparent cible-source, et configuration des porteuses d'accès radio et liste d'échec de configuration ;
à l'étape f) : j) conteneur transparent cible-source et des informations de configuration de RAB ;
à l'étape g) : k) adresse(s) et TEID(s) de T-SGW pour le renvoi de DL, et adresse(s) et TEID(s) de S-GW source pour le renvoi de données ;
à l'étape h) : l) TEID(s) et adresse(s) de SGSN pour le renvoi de CP et DL, et adresse(s) et TEID(s) de T-SGW pour le renvoi de DP, CP et liaison montante, UP ; et
à l'étape j) : m) indication de transfert, conteneur transparent cible-source et liste des RAB.

10. Procédé de transfert selon la revendication 6, dans lequel le formateur est en outre configuré pour transformer le format des messages entrants et sortants de manière à ce qu'ils soient compris par l'agent de SDN et l'entité de CN, respectivement, le formateur étant en outre configuré pour, pour tout message provenant d'une entité de CN, supprimer le formatage appliqué par l'entité de CN et extraire la charge utile et l'adresse de destination, le formateur étant en outre configuré pour transmettre la charge utile et l'adresse de destination au mappeur, le formateur étant en outre configuré pour, pour un message arrivant au formateur en provenance du mappeur, configurer la charge utile ainsi que l'adresse source dans un format déchiffrable par l'entité de CN, le mappeur étant connecté à la fois au formateur et à l'ordonnanceur, le mappeur étant en outre configuré pour, pour des trames de message reçues de l'ordonnanceur, supprimer l'en-tête de la trame, identifier la source du message et mapper l'adresse de l'agent de SDN de l'entité de CN source à l'adresse de l'entité de CN source, le mappeur étant en outre configuré pour transférer la charge utile du message ainsi que l'adresse source au formateur, le mappeur étant en outre configuré pour, pour des messages reçus du formateur, identifier le type de message et sa destination, mapper l'adresse de destination à l'adresse dans le CN externe et transmettre ladite adresse à l'ordonnanceur avec des métadonnées indiquant l'exécution parallèle de messages et de messages ordonnancés pour une exécution parallèle, l'ordonnanceur étant configuré pour, à l'arrivée de messages du CN à l'agent de SDN, ordonnancer les messages à renvoyer au mappeur, le mappeur étant l'entité entre l'ordonnanceur et le formateur, l'ordonnanceur étant en outre configuré pour, à la réception de messages du mappeur qui doivent être transmis au CN, ordonnancer l'envoi de messages à travers l'interface de communication

11. Procédé de transfert selon l'une quelconque des revendications 1-5, comprenant en outre : la signalisation de la phase de rejet du transfert et la transmission d'un message de rejet du transfert ; et la libération des ressources réservées à la fois dans le réseau source et dans le réseau cible lors de la transmission d'un message indiquant la nécessité de supprimer une session/un tunnel établi ; dans lequel le procédé ne comprend pas la transmission d'un accusé de réception de demande de transfert ; et le procédé étant exécuté pendant un processus de transfert de noyau de paquets évolué d'évolution à long terme, LTE-EPC, vers un système de télécommunications mobiles universelle 2G, UMTS/2G, ou pendant un processus de transfert d'UMTS/2G vers LTE-UPC.

12. Procédé de transfert selon l'une quelconque des revendications 1-5, comprenant en outre une signalisation de transfert consciente de la possibilité d'un rejet de transfert, le procédé exécutant une demande de transfert et une signalisation d'accusé de réception de demande de transfert avant de réserver des ressources à la fois dans le réseau cible et dans le réseau source, évitant ainsi d'envoyer des messages pour renoncer à des ressources à la fois du réseau source et du réseau cible en raison d'un rejet de transfert.

13. Procédé de transfert selon la revendication 12, dans lequel la SeMMu envoie des messages de signalisation de transfert du plan de contrôle parallèlement à d'autres entités du réseau central.

14. Système, comprenant :
- un terminal mobile, UE ;
- un point d'accès actuel, qui est un S-NG-RAN ou un eNodeB source ou un RNC source ;
- une passerelle actuelle, qui est un PGW-U + UPF ou une GW de service source ;
- une entité de gestion de la mobilité, SeMMu ;
- un point d'accès cible, qui est un eNodeB cible ou un RNC cible ou un T-NG-RAN ;
- une passerelle cible, qui est une GW de service cible ou une T-UPF ou un PGW-U + UPF cible ;
- un noeud de support cible, qui est une SeMMu cible ou un SGSN cible ou une T-AMF ;
dans lequel ;
la SeMMu est connectée au point d'accès actuel, qui est un S-NG-RAN ou un eNodeB source ou un RNC source, au noeud de support cible, qui est une SeMMu cible ou un SGSN cible ou une T-AMF, à la passerelle actuelle, qui est un PGW-U + UPF ou une GW de service source, et à la passerelle cible, qui est une GW de service cible ou une T-UPF ou un PGW-U + UPF cible ;
la SeMMu est configurée pour s'attribuer des identificateurs de point d'extrémité de tunnel, des TEID et des adresses, ainsi qu'à chacun d'entre : le point d'accès actuel, qui est un S-NG-RAN ou un eNodeB source ou un RNC source, le noeud de support cible, qui est une SeMMu cible ou un SGSN cible ou une T-AMF, la passerelle actuelle, qui est un PGW-U + UPF ou une GW de service source, et la passerelle cible, qui est une GW de service cible ou une T-UPF ou un PGW-U + UPF cible ; et dans lequel le système est configuré pour exécuter un procédé de transfert comprenant les étapes suivantes :
a) initiation du transfert (P1) ;
b) envoi (P2) d'une exigence de transfert du point d'accès actuel, qui est un S-NG-RAN ou un eNodeB source ou un RNC source, à la SeMMu ;
c) envoi (P3) d'une demande d'attribution de ressources et d'un message de configuration de tunnel de la SeMMu au noeud de support cible, qui est une SeMMu cible ou un SGSN cible ou une T-AMF, du point d'accès cible, qui est un eNodeB cible ou un RNC cible ou un T-NG-RAN ;
d) envoi (P4) d'une demande de relocalisation du noeud de support cible, qui est une SeMMu cible ou un SGSN cible ou une T-AMF, au point d'accès cible, qui est un eNodeB cible ou un RNC cible ou un T-NG-RAN ;
e) envoi (P4a) d'un accusé de réception de demande de relocalisation du point d'accès cible, qui est un eNodeB cible ou un RNC cible ou un T-NG-RAN, au noeud de support cible, qui est une SeMMu cible ou un SGSN cible ou une T-AMF ;
f) renvoi (P5) d'une réponse de relocalisation du noeud de support cible, qui est une SeMMu cible ou un SGSN cible ou une T-AMF, à la SeMMu ;
g) envoi (P6a) d'un message de configuration de tunnel de la SeMMu à la passerelle actuelle, qui est un PGW-U + UPF ou une GW de service source ;
h) envoi (P6b) d'un message de relocalisation et de configuration de tunnel de la SeMMu à la passerelle cible, qui est une GW de service cible ou une T-UPF ;
i) commande (P6c) du transfert de la SeMMu au point d'accès actuel, qui est un S-NG-RAN ou un eNodeB source ou un RNC source ;
dans lequel l'étape h) a lieu après l'étape f).

15. Système selon la revendication 14, comprenant en outre un agent de mise en réseau définie par logiciel, SDN, dans lequel ;
- l'agent de SDN est implémenté au moyen d'un logiciel fonctionnant dans une entité de gestion de la mobilité, MME, installée, du point d'accès actuel, qui est un S-NG-RAN ou un eNodeB source ou un RNC source, du noeud de support cible, qui est une SeMMu cible, de la passerelle actuelle, qui est un PGW-U + UPF ou une GW de service source, de la passerelle cible, qui est une GW de service cible, ou d'un système matériel distinct ; ou
- l'agent de SDN est implémenté dans la SeMMu, l'agent de SDN étant configuré pour connecter la SeMMu à chacun des éléments suivants : le point d'accès actuel, qui est un S-NG-RAN ou un eNodeB source ou un RNC source, le noeud de support cible, qui est une SeMMu cible, la passerelle actuelle, qui est un PGW-U + UPF ou une GW de service source, et la passerelle cible, qui est une GW de service cible, et l'agent de SDN étant formé par :
- un bloc d'ordonnanceur connecté à une interface de communication bidirectionnelle qui se connecte au réseau central et à un mappeur, configuré pour ordonnancer le transfert des messages entrants et sortants sur la base de la caractéristique du message ;
- un bloc de formateur connecté à une interface de communication bidirectionnelle qui se connecte à l'entité de réseau central et au bloc de mappeur, configuré pour transformer le format des messages entrants et sortants de manière à ce qu'ils soient compris à la fois par l'agent de SDN et l'entité, respectivement ; et
- le bloc de mappeur, qui est connecté au bloc d'ordonnanceur et au bloc de formateur, et configuré pour mapper les adresses des messages des adresses source et de destination de l'agents de SDN aux adresses source et de destination de l'entité de CN, l'agent de SDN étant configuré pour être associé à une entité de CN.
